# EUROPEAN PATENT APPLICATION

(11) **EP 3 340 636 A1**
(43) Date of publication of application: **27.06.2018**
(21) Application number: 16837367.8
(22) Date of filing: 22.08.2016
(51) Int. Cl.: H04N 21/2362, H04N 21/2343, H04N 21/81

(54) **BROADCAST SIGNAL TRANSMISSION APPARATUS, BROADCAST SIGNAL RECEPTION APPARATUS, BROADCAST SIGNAL TRANSMISSION METHOD AND BROADCAST SIGNAL RECEPTION METHOD**

(30) Priority: 20.08.2015 US 201562207896 P; 26.08.2015 US 201562210438 P
(71) Applicant: LG Electronics Inc., Yeongdeungpo-gu Seoul 07336 (KR)
(72) Inventor: OH, Hyunmook, Seoul 06772 (KR); SUH, Jongyeul, Seoul 06772 (KR)
(74) Representative: Cabinet Plasseraud
(86) International application number: PCT/KR2016/009230
(87) International publication number: WO 2017/030425

(57) **Abstract**

The present invention provides a method for transmitting a broadcast signal. The method for transmitting a broadcast signal according to the present invention provides a system that can support a next-generation broadcasting service in an environment supporting next-generation hybrid broadcasting using a terrestrial broadcasting network and an Internet network. In addition, the present invention provides an efficient signalling method that can accommodate both a terrestrial broadcasting network and an Internet network in an environment supporting next-generation hybrid broadcasting.

## Description

### [Technical Field]

The present invention relates to an apparatus for transmitting a broadcast signal, an apparatus for receiving a broadcast signal and methods for transmitting and receiving a broadcast signal.

### [Background Art]

As analog broadcast signal transmission comes to an end, various technologies for transmitting/receiving digital broadcast signals are being developed. A digital broadcast signal may include a larger amount of video/audio data than an analog broadcast signal and further include various types of additional data in addition to the video/audio data.

### [Disclosure]

### [Technical Problem]

A digital broadcast system can provide HD (high definition) images, multichannel audio and various additional services. However, data transmission efficiency for transmission of large amounts of data, robustness of transmission/reception networks and network flexibility in consideration of mobile reception equipment need to be improved for digital broadcast.

### [Technical Solution]

The object of the present invention can be achieved by providing a system for effectively supporting a next-generation broadcast signal in an environment for supporting next-generation hybrid broadcast using a terrestrial broadcast network and the Internet and a related signaling method.

### [Advantageous Effects]

The present invention may effectively support a next-generation broadcast server in an environment for supporting next-generation hybrid broadcast using a terrestrial broadcast network and the Internet.

The present invention may support a method of providing detailed signaling to service components included in a broadcast service.

The present invention may support a method of effectively providing various pieces of information such as 3D, caption, WCG, and HDR in a method of transmitting a broadcast service.

### [Description of Drawings]

The accompanying drawings, which are included to provide a further understanding of the invention, illustrate embodiments of the invention and together with the description serve to explain the principle of the invention.

In the drawings:
FIG. 1 is a diagram showing a protocol stack according to an embodiment of the present invention;
FIG. 2 is a diagram showing a service discovery procedure according to one embodiment of the present invention;
FIG. 3 is a diagram showing a low level signaling (LLS) table and a service list table (SLT) according to one embodiment of the present invention;
FIG. 4 is a diagram showing a USBD and an S-TSID delivered through ROUTE according to one embodiment of the present invention;
FIG. 5 is a diagram showing a USBD delivered through MMT according to one embodiment of the present invention;
FIG. 6 is a diagram showing link layer operation according to one embodiment of the present invention;
FIG. 7 is a diagram showing a link mapping table (LMT) according to one embodiment of the present invention;
FIG. 8 is a diagram showing a structure of a broadcast signal transmission device of a next-generation broadcast service according to an embodiment of the present invention;
FIG. 9 is a diagram showing a writing operation of a time interleaver according to an embodiment of the present invention;
FIG. 10 is a block diagram of an interleaving address generator including a main-PRBS generator and a sub-PRBS generator according to each FFT mode, included in the frequency interleaver, according to an embodiment of the present invention;
FIG. 11 is a block diagram illustrating a hybrid broadcast reception apparatus according to an embodiment of the present invention;
FIG. 12 is a diagram showing an overall operation of a DASH-based adaptive streaming model according to an embodiment of the present invention;
FIG. 13 is a block diagram of a receiver according to an embodiment of the present invention;
FIG. 14 illustrates a device that produces and reproduces a metadata based HDR broadcast service according to an embodiment of the present invention;
FIG. 15 illustrates an operation method of a receiver for HDR video according to an embodiment of the present invention;
FIG. 16 illustrates a post processor according to an embodiment of the present invention;
FIGS. 17 to 20 illustrate syntaxes of an SEI message and an HDR information descriptor according to an embodiment of the present invention;
FIGS. 21 and 22 illustrate an embodiment of signaling metadata information according to RAP;
FIG. 23 illustrates dynamic_range_mapping_info according to an embodiment of the present invention;
FIG. 24 illustrates a case in which an SEI message defined in HEVC is referred to according to an embodiment of the present invention;
FIGS. 25 and 26 illustrate an embodiment of signaling an HDR_info descriptor according to an embodiment of the present invention through a PMT;
FIGS. 27 and 28 illustrate an embodiment of signaling the HDR_info descriptor according to the embodiment of the present invention through an EIT;
FIG. 29 illustrates HDR_info_descriptor() according to another embodiment of the present invention;
FIG. 30 is a block diagram of a receiver and illustrates operation of the receiver according to an embodiment of the present invention;
FIG. 31 illustrates an HDR information descriptor according to an embodiment of the present invention;
FIG. 32 illustrates an HDR information descriptor according to an embodiment of the present invention;
FIG. 33 illustrates a case in which a region in a frame is divided according to a feature set according to an embodiment of the present invention;
FIG. 34 is a diagram showing information for signaling HDR information and a feature set according to an embodiment of the present invention;
FIG. 35 is a diagram showing a spatial boundary field for determining a spatial area according to an embodiment of the present invention;
FIG. 36 is a diagram showing a colorimetry boundary field for determining a spatial area according to an embodiment of the present invention;
FIG. 37 is a diagram showing a luminance boundary field and a luminance distribution boundary field for determining a spatial area according to an embodiment of the present invention;
FIG. 38 is a diagram showing a color volume boundary field for determining a spatial area according to an embodiment of the present invention;
FIG. 39 is a block diagram showing a broadcast transmission device according to an embodiment of the present invention;
FIG. 40 is a block diagram showing a broadcast reception device according to an embodiment of the present invention;
FIG. 41 is a diagram showing a method of transmitting a broadcast signal including image quality enhancement metadata according to an embodiment of the present invention; and
FIG. 42 is a diagram showing a method of receiving a broadcast signal including image quality enhancement metadata according to an embodiment of the present invention.

### [Best Mode]

Reference will now be made in detail to the preferred embodiments of the present invention, examples of which are illustrated in the accompanying drawings. The detailed description, which will be given below with reference to the accompanying drawings, is intended to explain exemplary embodiments of the present invention, rather than to show the only embodiments that can be implemented according to the present invention. The following detailed description includes specific details in order to provide a thorough understanding of the present invention. However, it will be apparent to those skilled in the art that the present invention may be practiced without such specific details.

Although the terms used in the present invention are selected from generally known and used terms, some of the terms mentioned in the description of the present invention have been selected by the applicant at his or her discretion, the detailed meanings of which are described in relevant parts of the description herein. Furthermore, it is required that the present invention is understood, not simply by the actual terms used but by the meanings of each term lying within.

The present invention provides apparatuses and methods for transmitting and receiving broadcast signals for future broadcast services. Future broadcast services according to an embodiment of the present invention include a terrestrial broadcast service, a mobile broadcast service, an ultra high definition television (UHDTV) service, etc. The present invention may process broadcast signals for the future broadcast services through non-MIMO (Multiple Input Multiple Output) or MIMO according to one embodiment. A non-MIMO scheme according to an embodiment of the present invention may include a MISO (Multiple Input Single Output) scheme, a SISO (Single Input Single Output) scheme, etc.

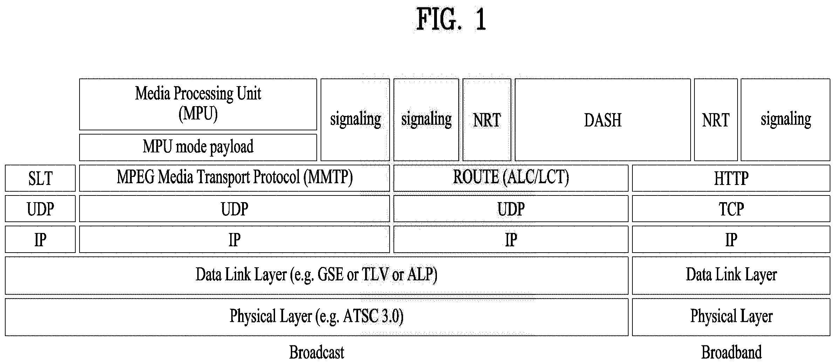

FIG. 1 is a diagram showing a protocol stack according to an embodiment of the present invention.

A service may be delivered to a receiver through a plurality of layers. First, a transmission side may generate service data. The service data may be processed for transmission at a delivery layer of the transmission side and the service data may be encoded into a broadcast signal and transmitted over a broadcast or broadband network at a physical layer.

Here, the service data may be generated in an ISO base media file format (BMFF). ISO BMFF media files may be used for broadcast/broadband network delivery, media encapsulation and/or synchronization format. Here, the service data is all data related to the service and may include service components configuring a linear service, signaling information thereof, non real time (NRT) data and other files.

The delivery layer will be described. The delivery layer may provide a function for transmitting service data. The service data may be delivered over a broadcast and/or broadband network.

Broadcast service delivery may include two methods.

As a first method, service data may be processed in media processing units (MPUs) based on MPEG media transport (MMT) and transmitted using an MMT protocol (MMTP). In this case, the service data delivered using the MMTP may include service components for a linear service and/or service signaling information thereof.

As a second method, service data may be processed into DASH segments and transmitted using real time object delivery over unidirectional transport (ROUTE), based on MPEG DASH. In this case, the service data delivered through the ROUTE protocol may include service components for a linear service, service signaling information thereof and/or NRT data. That is, the NRT data and non-timed data such as files may be delivered through ROUTE.

Data processed according to MMTP or ROUTE protocol may be processed into IP packets through a UDP/IP layer. In service data delivery over the broadcast network, a service list table (SLT) may also be delivered over the broadcast network through a UDP/IP layer. The SLT may be delivered in a low level signaling (LLS) table. The SLT and LLS table will be described later.

IP packets may be processed into link layer packets in a link layer. The link layer may encapsulate various formats of data delivered from a higher layer into link layer packets and then deliver the packets to a physical layer. The link layer will be described later.

In hybrid service delivery, at least one service element may be delivered through a broadband path. In hybrid service delivery, data delivered over broadband may include service components of a DASH format, service signaling information thereof and/or NRT data. This data may be processed through HTTP/TCP/IP and delivered to a physical layer for broadband transmission through a link layer for broadband transmission.

The physical layer may process the data received from the delivery layer (higher layer and/or link layer) and transmit the data over the broadcast or broadband network. A detailed description of the physical layer will be given later.

The service will be described. The service may be a collection of service components displayed to a user, the components may be of various media types, the service may be continuous or intermittent, the service may be real time or non real time, and a real-time service may include a sequence of TV programs.

The service may have various types. First, the service may be a linear audio/video or audio service having app based enhancement. Second, the service may be an app based service, reproduction/configuration of which is controlled by a downloaded application. Third, the service may be an ESG service for providing an electronic service guide (ESG). Fourth, the service may be an emergency alert (EA) service for providing emergency alert information.

When a linear service without app based enhancement is delivered over the broadcast network, the service component may be delivered by (1) one or more ROUTE sessions or (2) one or more MMTP sessions.

When a linear service having app based enhancement is delivered over the broadcast network, the service component may be delivered by (1) one or more ROUTE sessions or (2) zero or more MMTP sessions. In this case, data used for app based enhancement may be delivered through a ROUTE session in the form of NRT data or other files. In one embodiment of the present invention, simultaneous delivery of linear service components (streaming media components) of one service using two protocols may not be allowed.

When an app based service is delivered over the broadcast network, the service component may be delivered by one or more ROUTE sessions. In this case, the service data used for the app based service may be delivered through the ROUTE session in the form of NRT data or other files.

Some service components of such a service, some NRT data, files, etc. may be delivered through broadband (hybrid service delivery).

That is, in one embodiment of the present invention, linear service components of one service may be delivered through the MMT protocol. In another embodiment of the present invention, the linear service components of one service may be delivered through the ROUTE protocol. In another embodiment of the present invention, the linear service components of one service and NRT data (NRT service components) may be delivered through the ROUTE protocol. In another embodiment of the present invention, the linear service components of one service may be delivered through the MMT protocol and the NRT data (NRT service components) may be delivered through the ROUTE protocol. In the above-described embodiments, some service components of the service or some NRT data may be delivered through broadband. Here, the app based service and data regarding app based enhancement may be delivered over the broadcast network according to ROUTE or through broadband in the form of NRT data. NRT data may be referred to as locally cached data.

Each ROUTE session includes one or more LCT sessions for wholly or partially delivering content components configuring the service. In streaming service delivery, the LCT session may deliver individual components of a user service, such as audio, video or closed caption stream. The streaming media is formatted into a DASH segment.

Each MMTP session includes one or more MMTP packet flows for delivering all or some of content components or an MMT signaling message. The MMTP packet flow may deliver a component formatted into MPU or an MMT signaling message.

For delivery of an NRT user service or system metadata, the LCT session delivers a file based content item. Such content files may include consecutive (timed) or discrete (non-timed) media components of the NRT service or metadata such as service signaling or ESG fragments. System metadata such as service signaling or ESG fragments may be delivered through the signaling message mode of the MMTP.

A receiver may detect a broadcast signal while a tuner tunes to frequencies. The receiver may extract and send an SLT to a processing module. The SLT parser may parse the SLT and acquire and store data in a channel map. The receiver may acquire and deliver bootstrap information of the SLT to a ROUTE or MMT client. The receiver may acquire and store an SLS. USBD may be acquired and parsed by a signaling parser.

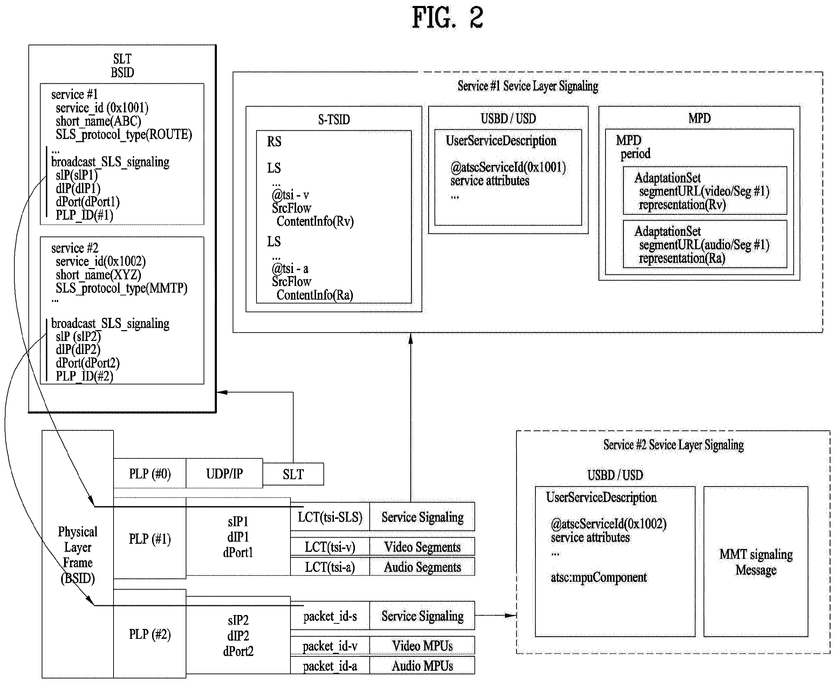

FIG. 2 is a diagram showing a service discovery procedure according to one embodiment of the present invention.

A broadcast stream delivered by a broadcast signal frame of a physical layer may carry low level signaling (LLS). LLS data may be carried through payload of IP packets delivered to a well-known IP address/port. This LLS may include an SLT according to type thereof. The LLS data may be formatted in the form of an LLS table. A first byte of every UDP/IP packet carrying the LLS data may be the start of the LLS table. Unlike the shown embodiment, an IP stream for delivering the LLS data may be delivered to a PLP along with other service data.

The SLT may enable the receiver to generate a service list through fast channel scan and provides access information for locating the SLS. The SLT includes bootstrap information. This bootstrap information may enable the receiver to acquire service layer signaling (SLS) of each service. When the SLS, that is, service signaling information, is delivered through ROUTE, the bootstrap information may include an LCT channel carrying the SLS, a destination IP address of a ROUTE session including the LCT channel and destination port information. When the SLS is delivered through the MMT, the bootstrap information may include a destination IP address of an MMTP session carrying the SLS and destination port information.

In the shown embodiment, the SLS of service #1 described in the SLT is delivered through ROUTE and the SLT may include bootstrap information sIP1, dIP1 and dPort1 of the ROUTE session including the LCT channel delivered by the SLS. The SLS of service #2 described in the SLT is delivered through MMT and the SLT may include bootstrap information sIP2, dIP2 and dPort2 of the MMTP session including the MMTP packet flow delivered by the SLS.

The SLS is signaling information describing the properties of the service and may include receiver capability information for significantly reproducing the service or providing information for acquiring the service and the service component of the service. When each service has separate service signaling, the receiver acquires appropriate SLS for a desired service without parsing all SLSs delivered within a broadcast stream.

When the SLS is delivered through the ROUTE protocol, the SLS may be delivered through a dedicated LCT channel of a ROUTE session indicated by the SLT. In some embodiments, this LCT channel may be an LCT channel identified by tsi=0. In this case, the SLS may include a user service bundle description (USBD)/user service description (USD), service-based transport session instance description (S-TSID) and/or media presentation description (MPD).

Here, USBD/USD is one of SLS fragments and may serve as a signaling hub describing detailed description information of a service. The USBD may include service identification information, device capability information, etc. The USBD may include reference information (URI reference) of other SLS fragments (S-TSID, MPD, etc.). That is, the USBD/USD may reference the S-TSID and the MPD. In addition, the USBD may further include metadata information for enabling the receiver to decide a transmission mode (broadcast/broadband network). A detailed description of the USBD/USD will be given below.

The S-TSID is one of SLS fragments and may provide overall session description information of a transport session carrying the service component of the service. The S-TSID may provide the ROUTE session through which the service component of the service is delivered and/or transport session description information for the LCT channel of the ROUTE session. The S-TSID may provide component acquisition information of service components associated with one service. The S-TSID may provide mapping between DASH representation of the MPD and the tsi of the service component. The component acquisition information of the S-TSID may be provided in the form of the identifier of the associated DASH representation and tsi and may or may not include a PLP ID in some embodiments. Through the component acquisition information, the receiver may collect audio/video components of one service and perform buffering and decoding of DASH media segments. The S-TSID may be referenced by the USBD as described above. A detailed description of the S-TSID will be given below.

The MPD is one of SLS fragments and may provide a description of DASH media presentation of the service. The MPD may provide a resource identifier of media segments and provide context information within the media presentation of the identified resources. The MPD may describe DASH representation (service component) delivered over the broadcast network and describe additional DASH presentation delivered over broadband (hybrid delivery). The MPD may be referenced by the USBD as described above.

When the SLS is delivered through the MMT protocol, the SLS may be delivered through a dedicated MMTP packet flow of the MMTP session indicated by the SLT. In some embodiments, the packet_id of the MMTP packets delivering the SLS may have a value of 00. In this case, the SLS may include a USBD/USD and/or MMT packet (MP) table.

Here, the USBD is one of SLS fragments and may describe detailed description information of a service as in ROUTE. This USBD may include reference information (URI information) of other SLS fragments. The USBD of the MMT may reference an MP table of MMT signaling. In some embodiments, the USBD of the MMT may include reference information of the S-TSID and/or the MPD. Here, the S-TSID is for NRT data delivered through the ROUTE protocol. Even when a linear service component is delivered through the MMT protocol, NRT data may be delivered via the ROUTE protocol. The MPD is for a service component delivered over broadband in hybrid service delivery. The detailed description of the USBD of the MMT will be given below.

The MP table is a signaling message of the MMT for MPU components and may provide overall session description information of an MMTP session carrying the service component of the service. In addition, the MP table may include a description of an asset delivered through the MMTP session. The MP table is streaming signaling information for MPU components and may provide a list of assets corresponding to one service and location information (component acquisition information) of these components. The detailed description of the MP table may be defined in the MMT or modified. Here, the asset is a multimedia data entity, is combined by one unique ID, and may mean a data entity used to one multimedia presentation. The asset may correspond to service components configuring one service. A streaming service component (MPU) corresponding to a desired service may be accessed using the MP table. The MP table may be referenced by the USBD as described above.

The other MMT signaling messages may be defined. Additional information associated with the service and the MMTP session may be described by such MMT signaling messages.

The ROUTE session is identified by a source IP address, a destination IP address and a destination port number. The LCT session is identified by a unique transport session identifier (TSI) within the range of a parent ROUTE session. The MMTP session is identified by a destination IP address and a destination port number. The MMTP packet flow is identified by a unique packet_id within the range of a parent MMTP session.

In case of ROUTE, the S-TSID, the USBD/USD, the MPD or the LCT session delivering the same may be referred to as a service signaling channel. In case of MMTP, the USBD/UD, the MMT signaling message or the packet flow delivering the same may be referred to as a service signaling channel.

Unlike the shown embodiment, one ROUTE or MMTP session may be delivered over a plurality of PLPs. That is, one service may be delivered through one or more PLPs. Unlike the shown embodiment, in some embodiments, components configuring one service may be delivered through different ROUTE sessions. In addition, in some embodiments, components configuring one service may be delivered through different MMTP sessions. In some embodiments, components configuring one service may be divided and delivered in a ROUTE session and an MMTP session. Although not shown, components configuring one service may be delivered through broadband (hybrid delivery).

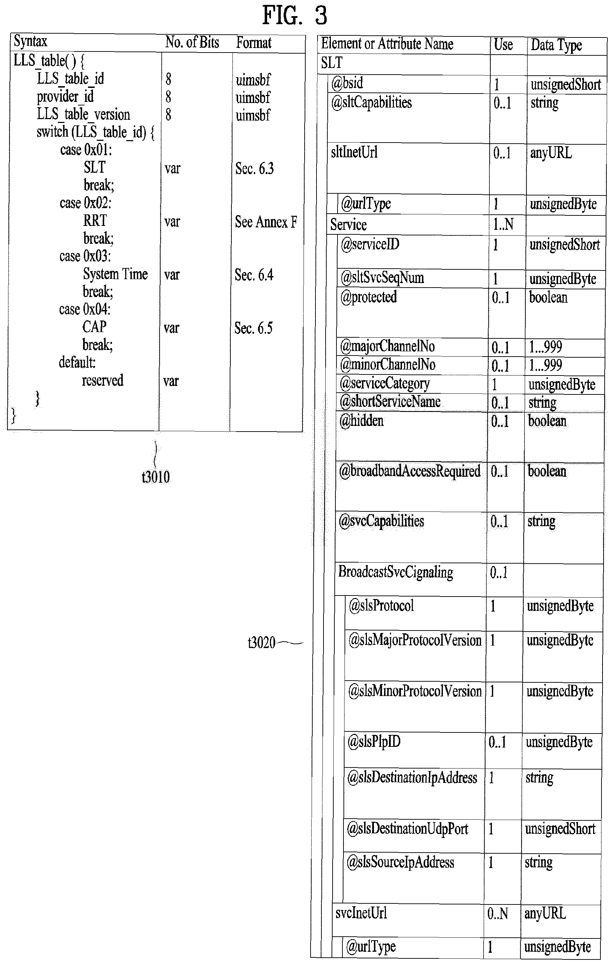

FIG. 3 is a diagram showing a low level signaling (LLS) table and a service list table (SLT) according to one embodiment of the present invention.

One embodiment t3010 of the LLS table may include information according to an LLS_table_id field, a provider_id field, an LLS_table_version field and/or an LLS_table_id field.

The LLS_table_id field may identify the type of the LLS table, and the provider_id field may identify a service provider associated with services signaled by the LLS table. Here, the service provider is a broadcaster using all or some of the broadcast streams and the provider_id field may identify one of a plurality of broadcasters which is using the broadcast streams. The LLS_table_version field may provide the version information of the LLS table.

According to the value of the LLS_table_id field, the LLS table may include one of the above-described SLT, a rating region table (RRT) including information on a content advisory rating, SystemTime information for providing information associated with a system time, a common alert protocol (CAP) message for providing information associated with emergency alert. In some embodiments, the other information may be included in the LLS table.

One embodiment t3020 of the shown SLT may include an @bsid attribute, an @sltCapabilities attribute, an sltInetUrl element and/or a Service element. Each field may be omitted according to the value of the shown Use column or a plurality of fields may be present.

The @bsid attribute may be the identifier of a broadcast stream. The @sltCapabilities attribute may provide capability information required to decode and significantly reproduce all services described in the SLT. The sltInetUrl element may provide base URL information used to obtain service signaling information and ESG for the services of the SLT over broadband. The sltInetUrl element may further include an @urlType attribute, which may indicate the type of data capable of being obtained through the URL.

The Service element may include information on services described in the SLT, and the Service element of each service may be present. The Service element may include an @serviceId attribute, an @sltSvcSeqNum attribute, an @protected attribute, an @majorChannelNo attribute, an @minorChannelNo attribute, an @serviceCategory attribute, an @shortServiceName attribute, an @hidden attribute, an @broadbandAccessRequired attribute, an @svcCapabilities attribute, a BroadcastSvcSignaling element and/or an svcInetUrl element.

The @serviceId attribute is the identifier of the service and the @sltSvcSeqNum attribute may indicate the sequence number of the SLT information of the service. The @protected attribute may indicate whether at least one service component necessary for significant reproduction of the service is protected. The @majorChannelNo attribute and the @minorChannelNo attribute may indicate the major channel number and minor channel number of the service, respectively.

The @serviceCategory attribute may indicate the category of the service. The category of the service may include a linear A/V service, a linear audio service, an app based service, an ESG service, an EAS service, etc. The @shortServiceName attribute may provide the short name of the service. The @hidden attribute may indicate whether the service is for testing or proprietary use. The @broadbandAccessRequired attribute may indicate whether broadband access is necessary for significant reproduction of the service. The @svcCapabilities attribute may provide capability information necessary for decoding and significant reproduction of the service.

The BroadcastSvcSignaling element may provide information associated with broadcast signaling of the service. This element may provide information such as location, protocol and address with respect to signaling over the broadcast network of the service. Details thereof will be described below.

The svcInetUrl element may provide URL information for accessing the signaling information of the service over broadband. The sltInetUrl element may further include an @urlType attribute, which may indicate the type of data capable of being obtained through the URL.

The above-described BroadcastSvcSignaling element may include an @slsProtocol attribute, an @slsMajorProtocolVersion attribute, an @slsMinorProtocolVersion attribute, an @slsPlpId attribute, an @slsDestinationIpAddress attribute, an @slsDestinationUdpPort attribute and/or an @slsSourceIpAddress attribute.

The @slsProtocol attribute may indicate the protocol used to deliver the SLS of the service (ROUTE, MMT, etc.). The @slsMajorProtocolVersion attribute and the @slsMinorProtocolVersion attribute may indicate the major version number and minor version number of the protocol used to deliver the SLS of the service, respectively.

The @slsPlpId attribute may provide a PLP identifier for identifying the PLP delivering the SLS of the service. In some embodiments, this field may be omitted and the PLP information delivered by the SLS may be checked using a combination of the information of the below-described LMT and the bootstrap information of the SLT.

The @slsDestinationIpAddress attribute, the @slsDestinationUdpPort attribute and the @slsSourceIpAddress attribute may indicate the destination IP address, destination UDP port and source IP address of the transport packets delivering the SLS of the service, respectively. These may identify the transport session (ROUTE session or MMTP session) delivered by the SLS. These may be included in the bootstrap information.

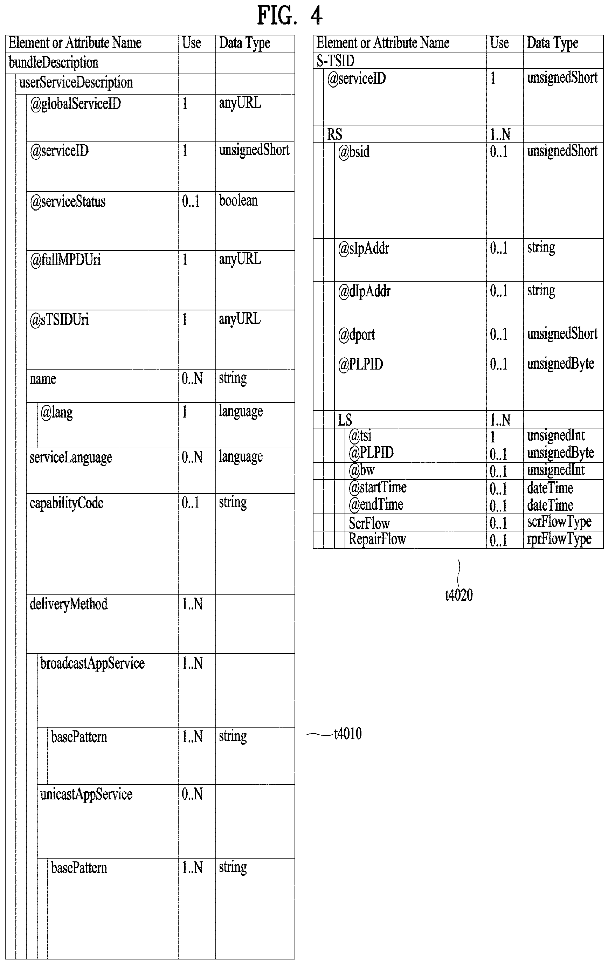

FIG. 4 is a diagram showing a USBD and an S-TSID delivered through ROUTE according to one embodiment of the present invention.

One embodiment t4010 of the shown USBD may have a bundleDescription root element. The bundleDescription root element may have a userServiceDescription element. The userServiceDescription element may be an instance of one service.

The userServiceDescription element may include an @globalServiceID attribute, an @serviceId attribute, an @serviceStatus attribute, an @fullMPDUri attribute, an @sTSIDUri attribute, a name element, a serviceLanguage element, a capabilityCode element and/or a deliveryMethod element. Each field may be omitted according to the value of the shown Use column or a plurality of fields may be present.

The @globalServiceID attribute is the globally unique identifier of the service and may be used for link with ESG data (Service@globalServiceID). The @serviceId attribute is a reference corresponding to the service entry of the SLT and may be equal to the service ID information of the SLT. The @serviceStatus attribute may indicate the status of the service. This field may indicate whether the service is active or inactive.

The @fullMPDUri attribute may reference the MPD fragment of the service. The MPD may provide a reproduction description of a service component delivered over the broadcast or broadband network as described above. The @sTSIDUri attribute may reference the S-TSID fragment of the service. The S-TSID may provide parameters associated with access to the transport session carrying the service as described above.

The name element may provide the name of the service. This element may further include an @lang attribute and this field may indicate the language of the name provided by the name element. The serviceLanguage element may indicate available languages of the service. That is, this element may arrange the languages capable of being provided by the service.

The capabilityCode element may indicate capability or capability group information of a receiver necessary to significantly reproduce the service. This information is compatible with capability information format provided in service announcement.

The deliveryMethod element may provide transmission related information with respect to content accessed over the broadcast or broadband network of the service. The deliveryMethod element may include a broadcastAppService element and/or a unicastAppService element. Each of these elements may have a basePattern element as a sub element.

The broadcastAppService element may include transmission associated information of the DASH representation delivered over the broadcast network. The DASH representation may include media components over all periods of the service presentation.

The basePattern element of this element may indicate a character pattern used for the receiver to perform matching with the segment URL. This may be used for a DASH client to request the segments of the representation. Matching may imply delivery of the media segment over the broadcast network.

The unicastAppService element may include transmission related information of the DASH representation delivered over broadband. The DASH representation may include media components over all periods of the service media presentation.

The basePattern element of this element may indicate a character pattern used for the receiver to perform matching with the segment URL. This may be used for a DASH client to request the segments of the representation. Matching may imply delivery of the media segment over broadband.

One embodiment t4020 of the shown S-TSID may have an S-TSID root element. The S-TSID root element may include an @serviceId attribute and/or an RS element. Each field may be omitted according to the value of the shown Use column or a plurality of fields may be present.

The @serviceId attribute is the identifier of the service and may reference the service of the USBD/USD. The RS element may describe information on ROUTE sessions through which the service components of the service are delivered. According to the number of ROUTE sessions, a plurality of elements may be present. The RS element may further include an @bsid attribute, an @sIpAddr attribute, an @dIpAddr attribute, an @dport attribute, an @PLPID attribute and/or an LS element.

The @bsid attribute may be the identifier of a broadcast stream in which the service components of the service are delivered. If this field is omitted, a default broadcast stream may be a broadcast stream including the PLP delivering the SLS of the service. The value of this field may be equal to that of the @bsid attribute.

The @sIpAddr attribute, the @dIpAddr attribute and the @dport attribute may indicate the source IP address, destination IP address and destination UDP port of the ROUTE session, respectively. When these fields are omitted, the default values may be the source address, destination IP address and destination UDP port values of the current ROUTE session delivering the SLS, that is, the S-TSID. This field may not be omitted in another ROUTE session delivering the service components of the service, not in the current ROUTE session.

The @PLPID attribute may indicate the PLP ID information of the ROUTE session. If this field is omitted, the default value may be the PLP ID value of the current PLP delivered by the S-TSID. In some embodiments, this field is omitted and the PLP ID information of the ROUTE session may be checked using a combination of the information of the below-described LMT and the IP address/UDP port information of the RS element.

The LS element may describe information on LCT channels through which the service components of the service are transmitted. According to the number of LCT channel, a plurality of elements may be present. The LS element may include an @tsi attribute, an @PLPID attribute, an @bw attribute, an @startTime attribute, an @endTime attribute, a SrcFlow element and/or a RepairFlow element.

The @tsi attribute may indicate the tsi information of the LCT channel. Using this, the LCT channels through which the service components of the service are delivered may be identified. The @PLPID attribute may indicate the PLP ID information of the LCT channel. In some embodiments, this field may be omitted. The @bw attribute may indicate the maximum bandwidth of the LCT channel. The @startTime attribute may indicate the start time of the LCT session and the @endTime attribute may indicate the end time of the LCT channel.

The SrcFlow element may describe the source flow of ROUTE. The source protocol of ROUTE is used to transmit a delivery object and at least one source flow may be established within one ROUTE session. The source flow may deliver associated objects as an object flow.

The RepairFlow element may describe the repair flow of ROUTE. Delivery objects delivered according to the source protocol may be protected according to forward error correction (FEC) and the repair protocol may define an FEC framework enabling FEC protection.

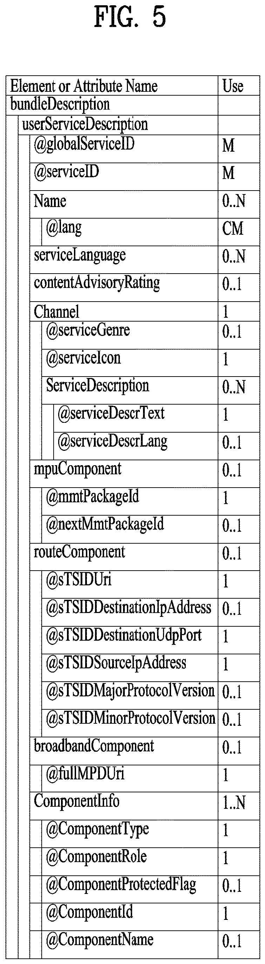

FIG. 5 is a diagram showing a USBD delivered through MMT according to one embodiment of the present invention.

One embodiment of the shown USBD may have a bundleDescription root element. The bundleDescription root element may have a userServiceDescription element. The userServiceDescription element may be an instance of one service.

The userServiceDescription element may include an @globalServiceID attribute, an @serviceId attribute, a Name element, a serviceLanguage element, a contentAdvisoryRating element, a Channel element, a mpuComponent element, a routeComponent element, a broadbandComponent element and/or a ComponentInfo element. Each field may be omitted according to the value of the shown Use column or a plurality of fields may be present.

The @globalServiceID attribute, the @serviceId attribute, the Name element and/or the serviceLanguage element may be equal to the fields of the USBD delivered through ROUTE. The contentAdvisoryRating element may indicate the content advisory rating of the service. This information is compatible with content advisory rating information format provided in service announcement. The Channel element may include information associated with the service. A detailed description of this element will be given below.

The mpuComponent element may provide a description of service components delivered as the MPU of the service. This element may further include an @mmtPackageId attribute and/or an @nextMmtPackageId attribute. The @mmtPackageId attribute may reference the MMT package of the service components delivered as the MPU of the service. The @nextMmtPackageId attribute may reference an MMT package to be used after the MMT package referenced by the @mmtPackageId attribute in terms of time. Through the information of this element, the MP table may be referenced.

The routeComponent element may include a description of the service components of the service. Even when linear service components are delivered through the MMT protocol, NRT data may be delivered according to the ROUTE protocol as described above. This element may describe information on such NRT data. A detailed description of this element will be given below.

The broadbandComponent element may include the description of the service components of the service delivered over broadband. In hybrid service delivery, some service components of one service or other files may be delivered over broadband. This element may describe information on such data. This element may further an @fullMPDUri attribute. This attribute may reference the MPD describing the service component delivered over broadband. In addition to hybrid service delivery, the broadcast signal may be weakened due to traveling in a tunnel and thus this element may be necessary to support handoff between broadband and broadband. When the broadcast signal is weak, the service component is acquired over broadband and, when the broadcast signal becomes strong, the service component is acquired over the broadcast network to secure service continuity.

The ComponentInfo element may include information on the service components of the service. According to the number of service components of the service, a plurality of elements may be present. This element may describe the type, role, name, identifier or protection of each service component. Detailed information of this element will be described below.

The above-described Channel element may further include an @serviceGenre attribute, an @serviceIcon attribute and/or a ServiceDescription element. The @serviceGenre attribute may indicate the genre of the service and the @serviceIcon attribute may include the URL information of the representative icon of the service. The ServiceDescription element may provide the service description of the service and this element may further include an @serviceDescrText attribute and/or an @serviceDescrLang attribute. These attributes may indicate the text of the service description and the language used in the text.

The above-described routeComponent element may further include an @sTSIDUri attribute, an @sTSIDDestinationIpAddress attribute, an @sTSIDDestinationUdpPort attribute, an @sTSIDSourceIpAddress attribute, an @sTSIDMajorProtocolVersion attribute and/or an @sTSIDMinorProtocolVersion attribute.

The @sTSIDUri attribute may reference an S-TSID fragment. This field may be equal to the field of the USBD delivered through ROUTE. This S-TSID may provide access related information of the service components delivered through ROUTE. This S-TSID may be present for NRT data delivered according to the ROUTE protocol in a state of delivering linear service component according to the MMT protocol.

The @sTSIDDestinationIpAddress attribute, the @sTSIDDestinationUdpPort attribute and the @sTSIDSourceIpAddress attribute may indicate the destination IP address, destination UDP port and source IP address of the transport packets carrying the above-described S-TSID. That is, these fields may identify the transport session (MMTP session or the ROUTE session) carrying the above-described S-TSID.

The @sTSIDMajorProtocolVersion attribute and the @sTSIDMinorProtocolVersion attribute may indicate the major version number and minor version number of the transport protocol used to deliver the above-described S-TSID, respectively.

The above-described ComponentInfo element may further include an @componentType attribute, an @componentRole attribute, an @componentProtectedFlag attribute, an @componentId attribute and/or an @componentName attribute.

The @componentType attribute may indicate the type of the component. For example, this attribute may indicate whether the component is an audio, video or closed caption component. The @componentRole attribute may indicate the role of the component. For example, this attribute may indicate main audio, music, commentary, etc. if the component is an audio component. This attribute may indicate primary video if the component is a video component. This attribute may indicate a normal caption or an easy reader type if the component is a closed caption component.

The @componentProtectedFlag attribute may indicate whether the service component is protected, for example, encrypted. The @componentId attribute may indicate the identifier of the service component. The value of this attribute may be the asset_id (asset ID) of the MP table corresponding to this service component. The @componentName attribute may indicate the name of the service component.

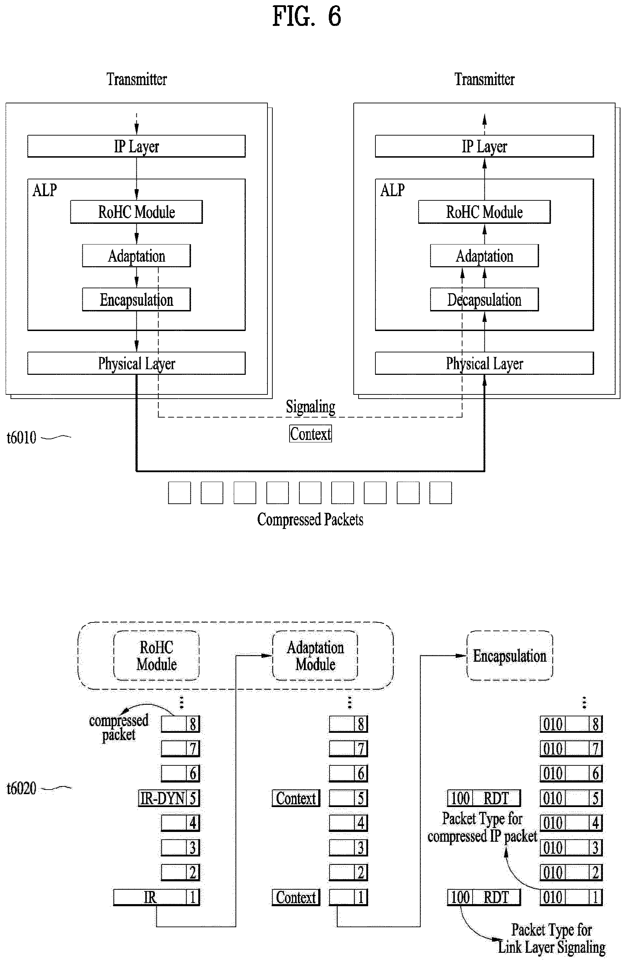

FIG. 6 is a diagram showing link layer operation according to one embodiment of the present invention.

The link layer may be a layer between a physical layer and a network layer. A transmission side may transmit data from the network layer to the physical layer and a reception side may transmit data from the physical layer to the network layer (t6010). The purpose of the link layer is to compress (abstract) all input packet types into one format for processing by the physical layer and to secure flexibility and expandability of an input packet type which is not defined yet. In addition, the link layer may provide option for compressing (abstracting) unnecessary information of the header of input packets to efficiently transmit input data. Operation such as overhead reduction, encapsulation, etc. of the link layer is referred to as a link layer protocol and packets generated using this protocol may be referred to as link layer packets. The link layer may perform functions such as packet encapsulation, overhead reduction and/or signaling transmission.

At the transmission side, the link layer (ALP) may perform an overhead reduction procedure with respect to input packets and then encapsulate the input packets into link layer packets. In addition, in some embodiments, the link layer may perform encapsulation into the link layer packets without performing the overhead reduction procedure. Due to use of the link layer protocol, data transmission overhead on the physical layer may be significantly reduced and the link layer protocol according to the present invention may provide IP overhead reduction and/or MPEG-2 TS overhead reduction.

When the shown IP packets are input as input packets (t6010), the link layer may sequentially perform IP header compression, adaptation and/or encapsulation. In some embodiments, some processes may be omitted. For example, the RoHC module may perform IP packet header compression to reduce unnecessary overhead. Context information may be extracted through the adaptation procedure and transmitted out of band. The IP header compression and adaption procedure may be collectively referred to as IP header compression. Thereafter, the IP packets may be encapsulated into link layer packets through the encapsulation procedure.

When MPEG 2 TS packets are input as input packets, the link layer may sequentially perform overhead reduction and/or an encapsulation procedure with respect to the TS packets. In some embodiments, some procedures may be omitted. In overhead reduction, the link layer may provide sync byte removal, null packet deletion and/or common header removal (compression). Through sync byte removal, overhead reduction of 1 byte may be provided per TS packet. Null packet deletion may be performed in a manner in which reinsertion is possible at the reception side. In addition, deletion (compression) may be performed in a manner in which common information between consecutive headers may be restored at the reception side. Some of the overhead reduction procedures may be omitted. Thereafter, through the encapsulation procedure, the TS packets may be encapsulated into link layer packets. The link layer packet structure for encapsulation of the TS packets may be different from that of the other types of packets.

First, IP header compression will be described.

The IP packets may have a fixed header format but some information necessary for a communication environment may be unnecessary for a broadcast environment. The link layer protocol may compress the header of the IP packet to provide a mechanism for reducing broadcast overhead.

IP header compression may include a header compressor/decompressor and/or an adaptation module. The IP header compressor (RoHC compressor) may reduce the size of each IP packet based on a RoHC method. Then, adaptation module may extract context information and generate signaling information from each packet stream. A receiver may parse signaling information related to a corresponding packet stream and attach the context information to the packet stream. The RoHC decompressor may recover a packet header to reconfigure an original IP packet. Hereinafter, IP header compression may refer to only IP header compressor via header compressor and may be a concept that combines IP header compression and the adaptation procedure by the adaptation module. This may be the same as in decompressing.

Hereinafter, adaptation will be described.

In transmission of a single-direction link, when the receiver does not have context information, the decompressor cannot restore the received packet header until complete context is received. This may lead to channel change delay and turn-on delay. Accordingly, through the adaptation function, configuration parameters and context information between the compressor and the decompressor may be transmitted out of band. The adaptation function may construct link layer signaling using context information and/or configuration parameters. The adaptation function may periodically transmit link layer signaling through each physical frame using a previous configuration parameter and/or context information.

Context information is extracted from the compressed IP packets and various methods may be used according to adaptation mode.

Mode #1 refers to a mode in which no operation is performed with respect to the compressed packet stream and an adaptation module operates as a buffer.

Mode #2 refers to a mode in which an IR packet is detected from a compressed packet stream to extract context information (static chain). After extraction, the IR packet is converted into an IR-DYN packet and the IR-DYN packet may be transmitted in the same order within the packet stream in place of an original IR packet.

Mode #3 (t6020) refers to a mode in which IR and IR-DYN packets are detected from a compressed packet stream to extract context information. A static chain and a dynamic chain may be extracted from the IR packet and a dynamic chain may be extracted from the IR-DYN packet. After extraction, the IR and IR-DYN packets are converted into normal compression packets. The converted packets may be transmitted in the same order within the packet stream in place of original IR and IR-DYN packets.

In each mode, the context information is extracted and the remaining packets may be encapsulated and transmitted according to the link layer packet structure for the compressed IP packets. The context information may be encapsulated and transmitted according to the link layer packet structure for signaling information, as link layer signaling.

The extracted context information may be included in a RoHC-U description table (RDT) and may be transmitted separately from the RoHC packet flow. Context information may be transmitted through a specific physical data path along with other signaling information. The specific physical data path may mean one of normal PLPs, a PLP in which low level signaling (LLS) is delivered, a dedicated PLP or an L1 signaling path. Here, the RDT may be context information (static chain and/or dynamic chain) and/or signaling information including information associated with header compression. In some embodiments, the RDT may be transmitted whenever context information is changed. In some embodiments, the RDT may be transmitted in every physical frame. To transmit the RDT in every physical frame, a previous RDT may be re-used.

The receiver may select a first PLP and first acquire signaling information of the SLT, the RDT, etc., prior to acquisition of a packet stream. Upon acquiring the signaling information, the receiver may combine the information to acquire mapping of service - IP information - context information - PLP. That is, the receiver may recognize IP streams through which a service is transmitted, IP streams transmitted through a PLP, and so on and acquire corresponding context information of the PLPs. The receiver may select a PLP for delivery of a specific packet stream and decode the PLP. The adaptation module may parse the context information and combine the context information with the compressed packets. Thereby, the packet stream may be recovered and transmitted to the RoHC de compressor. Then, decompression may be started. In this case, the receiver may detect an IR packet and start decompression from a first received IR packet according to an adaptation mode (mode 1), may detect an IR-DYN packet and start decompression from a first received IR-DYN packet (mode 2), or may start decompression from any general compressed packet (mode 3).

Hereinafter, packet encapsulation will be described.

The link layer protocol may encapsulate all types of input packets such as IP packets, TS packets, etc. into link layer packets. To this end, the physical layer processes only one packet format independently of the protocol type of the network layer (here, an MPEG-2 TS packet is considered as a network layer packet). Each network layer packet or input packet is modified into the payload of a generic link layer packet.

In the packet encapsulation procedure, segmentation may be used. If the network layer packet is too large to be processed in the physical layer, the network layer packet may be segmented into two or more segments. The link layer packet header may include fields for segmentation of the transmission side and recombination of the reception side. Each segment may be encapsulated into the link layer packet in the same order as the original location.

In the packet encapsulation procedure, concatenation may also be used. If the network layer packet is sufficiently small such that the payload of the link layer packet includes several network layer packets, concatenation may be performed. The link layer packet header may include fields for performing concatenation. In concatenation, the input packets may be encapsulated into the payload of the link layer packet in the same order as the original input order.

The link layer packet may include a header and a payload. The header may include a base header, an additional header and/or an optional header. The additional header may be further added according to situation such as concatenation or segmentation and the additional header may include fields suitable for situations. In addition, for delivery of the additional information, the optional header may be further included. Each header structure may be pre-defined. As described above, if the input packets are TS packets, a link layer header having packets different from the other packets may be used.

Hereinafter, link layer signaling will be described.

Link layer signaling may operate at a level lower than that of the IP layer. The reception side may acquire link layer signaling faster than IP level signaling of the LLS, the SLT, the SLS, etc. Accordingly, link layer signaling may be acquired before session establishment.

Link layer signaling may include internal link layer signaling and external link layer signaling. Internal link layer signaling may be signaling information generated at the link layer. This includes the above-described RDT or the below-described LMT. External link layer signaling may be signaling information received from an external module, an external protocol or a higher layer. The link layer may encapsulate link layer signaling into a link layer packet and deliver the link layer packet. A link layer packet structure (header structure) for link layer signaling may be defined and link layer signaling information may be encapsulated according to this structure.

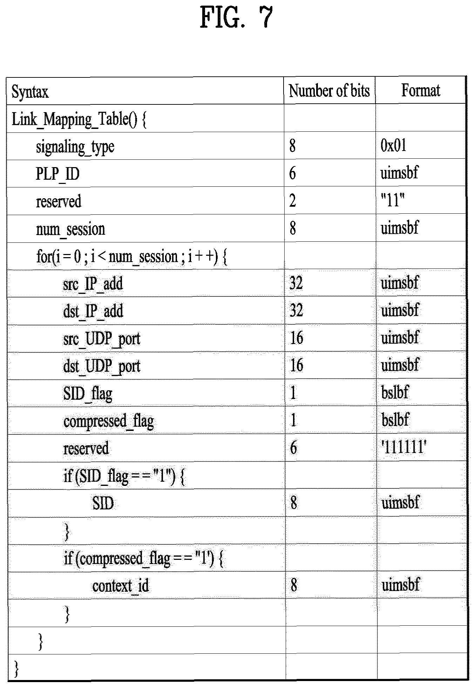

FIG. 7 is a diagram showing a link mapping table (LMT) according to one embodiment of the present invention.

The LMT may provide a list of higher layer sessions carried through the PLP. In addition, the LMT may provide additional information for processing link layer packets carrying the higher layer sessions. Here, the higher layer session may be referred to as multicast. Information on IP streams or transport sessions transmitted through one PLP may be acquired through the LMT. In contrast, information on through which PLP a specific transport session is delivered may be acquired.

The LMT may be transmitted through any PLP identified to deliver the LLS. Here, the PLP for delivering the LLS may be identified by an LLS flag of L1 detail signaling information of a physical layer. The LLS flag may be a flag field indicating whether the LLS is transmitted through a corresponding PLP with respect to each PLP. Here, the L1 detail signaling information may be correspond to PLS2 data which will be described later.

That is, the LMT may also be transmitted through the same PLP along with the LLS. Each LMT may describe mapping between PLPs and IP address/port as described above. As described above, the LLS may include an SLT and, in this regard, the IP address/ports described by the LMT may be any IP address/ports related to any service, described by the SLT transmitted through the PLP such as a corresponding LMT.

In some embodiments, the PLP identifier information in the above-described SLT, SLS, etc. may be used to confirm information indicating through which PLP a specific transport session indicated by the SLT or SLS is transmitted may be confirmed.

In another embodiment, the PLP identifier information in the above-described SLT, SLS, etc. will be omitted and PLP information of the specific transport session indicated by the SLT or SLS may be confirmed by referring to the information in the LMT. In this case, the receiver may combine the LMT and other IP level signaling information to identify the PLP. Even in this embodiment, the PLP information in the SLT, SLS, etc. is not omitted and may remain in the SLT, SLS, etc.

The LMT according to the shown embodiment may include a signaling_type field, a PLP_ID field, a num_session field and/or information on each session. Although the LMT of the shown embodiment describes IP streams transmitted through one PLP, a PLP loop may be added to the LMT to describe information on a plurality of PLPs in some embodiments. In this case, as described above, the LMT may describe PLPs of all IP addresses/ports related to all service described by the SLT transmitted therewith using a PLP loop.

The signaling_type field may indicate the type of signaling information delivered by the table. The value of signaling_type field for the LMT may be set to 0x01. The signaling_type field may be omitted. The PLP_ID field may identify a target PLP to be described. When the PLP loop is used, each PLP_ID field may identify each target PLP. Fields from the PLP_ID field may be included in the PLP loop. Here, the below-described PLP_ID field may be an identifier of one PLP of the PLP loop and the following fields may be fields corresponding to the corresponding PLP.

The num_session field may indicate the number of higher layer sessions delivered through the PLP identified by the PLP_ID field. According to the number indicated by the num_session field, information on each session may be included. This information may include a src_IP_add field, a dst_IP_add field, a src_UDP_port field, a dst_UDP_port field, an SID_flag field, a compressed_flag field, an SID field, and/or a context_id field.

The src_IP_add field, the dst_IP_add field, the src_UDP_port field, and the dst_UDP_port field may indicate the source IP address, the destination IP address, the source UDP port and the destination UDP port of the transport session among the higher layer sessions delivered through the PLP identified by the PLP_ID field.

The SID_flag field may indicate whether the link layer packet delivering the transport session has an SID field in the optional header. The link layer packet delivering the higher layer session may have an SID field in the optional header and the SID field value may be equal to that of the SID field in the LMT.

The compressed_flag field may indicate whether header compression is applied to the data of the link layer packet delivering the transport session. In addition, presence/absence of the below-described context_id field may be determined according to the value of this field. When header compression is applied (compressed_flag = 1), the RDT may be present and the PLP ID field of the RDT may have the same value as the corresponding PLP_ID field related to the present compressed_flag field.

The SID field may indicate a sub stream ID (SID) of link layer packets for delivering a corresponding transfer session. The link layer packets may include the SID having the same value as the present SID field in the optional header. Thereby, the receiver may filter link layer packets using information of the LMT and SID information of a link layer packet header without parsing of all link layer packets.

The context_id field may provide a reference for a context id (CID) in the RDT. The CID information of the RDT may indicate the context ID of the compression IP packet stream. The RDT may provide context information of the compression IP packet stream. Through this field, the RDT and the LMT may be associated.

In the above-described embodiments of the signaling information/table of the present invention, the fields, elements or attributes may be omitted or may be replaced with other fields. In some embodiments, additional fields, elements or attributes may be added.

In one embodiment of the present invention, service components of one service may be delivered through a plurality of ROUTE sessions. In this case, an SLS may be acquired through bootstrap information of an SLT. An S-TSID and an MPD may be referenced through the USBD of the SLS. The S-TSID may describe not only the ROUTE session delivered by the SLS but also transport session description information of another ROUTE session carried by the service components. To this end, the service components delivered through the plurality of ROUTE sessions may all be collected. This is similarly applicable to the case in which the service components of one service are delivered through a plurality of MMTP sessions. For reference, one service component may be simultaneously used by the plurality of services.

In another embodiment of the present invention, bootstrapping of an ESG service may be performed by a broadcast or broadband network. By acquiring the ESG over broadband, URL information of the SLT may be used. ESG information may be requested using this URL.

In another embodiment of the present invention, one service component of one service may be delivered over the broadcast network and the other service component may be delivered over broadband (hybrid). The S-TSID may describe components delivered over the broadcast network such that the ROUTE client acquires desired service components. In addition, the USBD may have base pattern information to describe which segments (which components) are delivered through which path. Accordingly, the receiver can confirm a segment to be requested from the broadband service and a segment to be detected in a broadcast stream.

In another embodiment of the present invention, scalable coding of a service may be performed. The USBD may have all capability information necessary to render the service. For example, when one service is provided in HD or UHD, the capability information of the USBD may have a value of "HD or UHD". The receiver may check which component is reproduced in order to render the UHD or HD service using the MPD.

In another embodiment of the present invention, through a TOI field of the LCT packets delivered through the LCT channel delivering the SLS, which SLS fragment is delivered using the LCT packets (USBD, S-TSID, MPD, etc.) may be identified.

In another embodiment of the present invention, app components to be used for app based enhancement/an app based service may be delivered over the broadcast network as NRT components or may be delivered over broadband. In addition, app signaling for app based enhancement may be performed by an application signaling table (AST) delivered along with the SLS. In addition, an event which is signaling for operation to be performed by the app may be delivered in the form of an event message table (EMT) along with the SLS, may be signaled in the MPD or may be in-band signaled in the form of a box within DASH representation. The AST, the EMT, etc. may be delivered over broadband. App based enhancement, etc. may be provided using the collected app components and such signaling information.

In another embodiment of the present invention, a CAP message may be included and provided in the above-described LLS table for emergency alert. Rich media content for emergency alert may also be provided. Rich media may be signaled by a CAP message and, if rich media is present, the rich media may be provided as an EAS service signaled by the SLT.

In another embodiment of the present invention, linear service components may be delivered over the broadcast network according to the MMT protocol. In this case, NRT data (e.g., app components) of the service may be delivered over the broadcast network according to the ROUTE protocol. In addition, the data of the service may be delivered over broadband. The receiver may access the MMTP session delivering the SLS using the bootstrap information of the SLT. The USBD of the SLS according to the MMT may reference the MP table such that the receiver acquires linear service components formatted into the MPU delivered according to the MMT protocol. In addition, the USBD may further reference the S-TSID such that the receiver acquires NRT data delivered according to the ROUTE protocol. In addition, the USBD may further reference the MPD to provide a reproduction description of data delivered over broadband.

In another embodiment of the present invention, the receiver may deliver location URL information capable of acquiring a file content item (file, etc.) and/or a streaming component to a companion device through a web socket method. The application of the companion device may acquire components, data, etc. through a request through HTTP GET using this URL. In addition, the receiver may deliver information such as system time information, emergency alert information, etc. to the companion device.

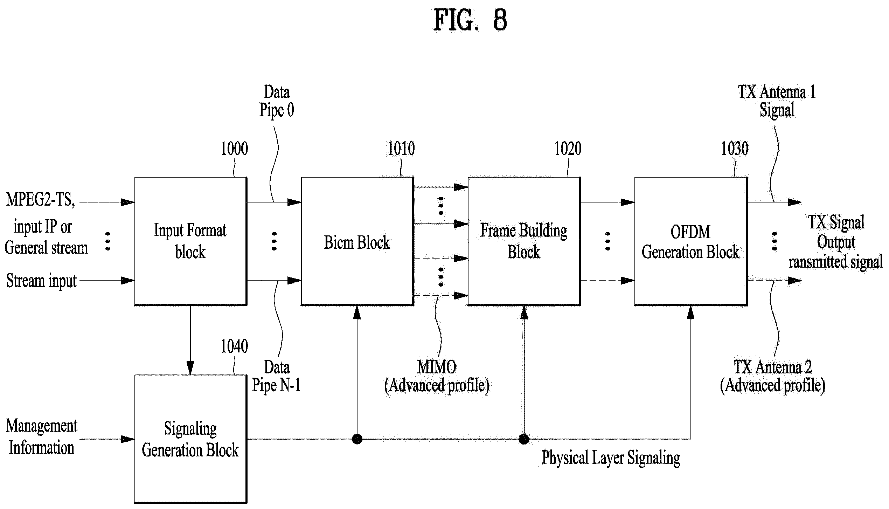

FIG. 8 is a diagram showing a structure of a broadcast signal transmission device of a next-generation broadcast service according to an embodiment of the present invention.

The broadcast signal transmission device of the next-generation broadcast service according to an embodiment of the present invention may include an input format block 1000, a bit interleaved coding & modulation (BICM) block 1010, a frame building block 1020, an orthogonal frequency division multiplexing (OFDM) generation block 1030, and a signaling generation block 1040. An operation of each block of the broadcast signal transmission device will be described.

According to an embodiment of the present invention, input data may use IP stream/packet and MPEG2-TS as main input format and other stream types may be handled as a general stream.

The input format block 1000 may demultiplex each input stream using one or more data pipes to which independent coding and modulation are applied. The data pipe may be a basic unit for robustness control and may affect quality of service (QoS). One or more services or service components may affect one data pipe. The data pipe may be a logical channel in a physical layer for delivering service data or metadata for delivering one or more services or service components.

Since QoS is dependent upon the characteristics of a service provided by the broadcast signal transmission device of the next-generation broadcast service according to an embodiment of the present invention, data corresponding to each service needs to be processed via different methods.

The BICM block 1010 may include a processing block applied to a profile (or system) to which MIMO is not applied and/or a processing block of a profile (or system) to which MIMO is applied and may include a plurality of processing blocks for processing each data pipe.

The processing block of the BICM block to which MIMO is not applied may include a data FEC encoder, a bit interleaver, a constellation mapper, a signal space diversity (SSD) encoding block, and a time interleaver. The processing block of the BICM block to which MIMO is applied is different from the processing block of the BICM to which MIMO is not applied in that a cell word demultiplexer and an MIMO encoding block are further included.

The data FEC encoder may perform FEC encoding on an input BBF to generate a FECBLOCK procedure using external coding (BCH) and internal coding (LDPC). The external coding (BCH) may be a selective coding method. The bit interleaver may interleave output of the data FEC encoder to achieve optimized performance using a combination of the LDPC code and a modulation method. The constellation mapper may modulate cell word from a bit interleaver or a cell word demultiplexer using QPSK, QAM-16, irregular QAM (NUQ-64, NUQ-256, NUQ-1024), or irregular constellation (NUC-16, NUC-64, NUC-256, NUC-1024) and provide a power-normalized constellation point. NUQ has an arbitrary type but QAM-16 and NUQ have a square shape. All of the NUQ and the NUC may be particularly defined with respect to each code rate and signaled by parameter DP_MOD of PLS2 data. The time interleaver may be operated at a data pipe level. A parameter of the time interleaving may be differently set with respect to each data pipe.

The time interleaver according to the present invention may be positioned between the BICM chain and the frame builder. In this case, the time interlever according to the present invention may selectively use a convolution interleaver (CI) and a block interleaver (BI) according to a physical layer pipe (PLP) mode or may use all. The PLP according to an embodiment of the present invention may be a physical path used using the same concept as the aforementioned DP and its term may be changed according to designer intention. The PLP mode according to an embodiment of the present invention may include a single PLP mode or a multiple PLP mode according to the number of PLPs processed by the broadcast signal transmitter or the broadcast signal transmission device. Time interleaving using different time interleaving methods according to a PLP mode may be referred to as hybrid time interleaving.

A hybrid time interleaver may include a block interleaver (BI) and a convolution interleaver (CI). In the case of PLP_NUM=1, the BI may not be applied (BI off) and only the CI may be applied. In the case of PLP_NUM>1, both the BI and the CI may be applied (BI on). The structure and operation of the CI applied in the case of PLP_NUM>1 may be different from those of the CI applied in the case of PLP_NUM=1. The hybrid time interleaver may perform an operation corresponding to a reverse operation of the aforementioned hybrid time interleaver.

The cell word demultiplexer may be used to divide a single cell word stream into a dual cell word stream for MIMO processing. The MIMO encoding block may process output of the cell word demultiplexer using a MIMO encoding method. The MIMO encoding method according to the present invention may be defined as full-rate spatial multiplexing (FR-SM) for providing increase in capacity via relatively low increase in complexity at a receiver side. MIMO processing may be applied at a data pipe level. When a pair of constellation mapper outputs, NUQ e_{1,i} and e_{2,i} is input to a MIMO encoder, a pair of MIMO encoder outputs, g1,i and g2,i may be transmitted by the same carrier k and OFDM symbol l of each transmission antenna.

The frame building block 1020 may map a data cell of an input data pipe in one frame to an OFDM symbol and perform frequency interleaving for frequency domain diversity.

According to an embodiment of the present invention, a frame may be divided into a preamble, one or more frame signaling symbols (FSS), and a normal data symbol. The preamble may be a special symbol for providing a combination of basic transmission parameters for effective transmission and reception of a signal. The preamble may signal a basic transmission parameter and a transmission type of a frame. In particular, the preamble may indicate whether an emergency alert service (EAS) is currently provided in a current frame. The objective of the FSS may be to transmit PLS data. For rapid synchronization and channel estimation and rapid decoding of PLS data, the FSS may have a pipe pattern with higher density than a normal data symbol.

The frame building block may include a delay compensation block for adjusting timing between a data pipe and corresponding PLS data to ensure co-time between a data pipe and corresponding PLS data at a transmitting side, a cell mapper for mapping a PLS, a data pipe, an auxiliary stream, a dummy stream, and so on to an active carrier of an OFDM symbol in a frame, and a frequency interleaver.

The frequency interleaver may randomly interleave a data cell received from the cell mapper to provide frequency diversity. The frequency interleaver may operate with respect to data corresponding to an OFDM symbol pair including two sequential OFDM symbols or data corresponding to one OFDM symbol using different interleaving seed orders in order to acquire maximum interleaving gain in a single frame.

The OFDM generation block 1030 may modulate an OFDM carrier by the cell generated by the frame building block, insert a pilot, and generate a time domain signal for transmission. The corresponding block may sequentially insert guard intervals and may apply PAPR reduction processing to generate a last RF signal.

The signaling generation block 1040 may generate physical layer signaling information used in an operation of each functional block. The signaling information according to an embodiment of the present invention may include PLS data. The PLS may provide an element for connecting a receiver to a physical layer data pipe. The PLS data may include PLS 1 data and PLS2 data.

The PLS1 data may be a first combination of PLS data transmitted to FSS in a frame with fixed size, coding, and modulation for transmitting basic information on a system as well as a parameter required to data PLS2 data. The PLS 1 data may provide a basic transmission parameter including a parameter required to receive and decode PLS2 data. The PLS2 data may be a second combination of PLP data transmitted to FSS for transmitting more detailed PLS data of a data pipe and a system. PLS2 signaling may further include two types of parameters of PLS2 static data (PLS2-STAT data) and PLS2 dynamic data (PLS2-DYN data). The PLS2 static data may be PLS2 data that is static during duration of a frame group and the PLS2 dynamic data may be PLS2 data that is dynamically changed every frame.

The PLS2 data may include FIC_FLAG information. A fast information channel (FIC) may be a dedicated channel for transmitting cross-layer information for enabling fast service acquisition and channel scanning. The FIC_FLAG information may indicate whether a fast information channel (FIC) is used in a current frame group via a 1-bit field. When a value of the corresponding field is set to 1, the FIC may be provided in the current frame. When a value of the corresponding field is set to 0, the FIC may not be transmitted in the current frame. The BICM block 1010 may include a BICM block for protecting PLS data. The BICM block for protecting the PLS data may include a PLS FEC encoder, a bit interleaver, and a constellation mapper.

The PLS FEC encoder may include a scrambler for scrambling PLS 1 data and PLS2 data, a BCH encoding/zero inserting block for performing external encoding on the scrambled PLS 1 and 2 data using a BCH code shortened for PLS protection and inserting a zero bit after BCH encoding, a LDPC encoding block for performing encoding using an LDPC code, and an LDPC parity puncturing block. Only the PLS 1 data may be permutated before an output bit of zero insertion is LDPC-encoded. The bit interleaver may interleave each of the shortened and punctured PLS 1 data and PLS2 data, and the constellation mapper may map the bit-interleaved PLS 1 data and PLS2 data to constellation.

A broadcast signal reception device of a next-generation broadcast service according to an embodiment of the present invention may perform a reverse operation of the broadcast signal transmission device of the next-generation broadcast service that has been described with reference to FIG. 8.

The broadcast signal reception device of a next-generation broadcast service according to an embodiment of the present invention may include a synchronization & demodulation module for performing demodulation corresponding to a reverse operation performed by the broadcast signal transmission device, a frame parsing module for parsing an input signal frame to extract data transmitted by a service selected by a user, a demapping & decoding module for converting an input signal into bit region data, deinterleaving bit region data as necessary, performing demapping on mapping applied for transmission efficiency, and correcting error that occurs in a transmission channel for decoding, an output processor for performing a reverse operation of various compression/signal processing procedures applied by the broadcast signal transmission device, and a signaling decoding module for acquiring and processing PLS information from the signal demodulated by the synchronization & demodulation module. The frame parsing module, the demapping & decoding module, and the output processor may perform the functions using the PLS data output from the signaling decoding module.

Hereinafter, the timer interleaver will be described. A time interleaving group according to an embodiment of the present invention may be directly mapped to one frame or may be spread over P_{I} frames. In addition, each time interleaving group may be divided into one or more (N_{TI}) time interleaving blocks. Here, each time interleaving block may correspond to one use of a time interleaver memory. A time interleaving block in the time interleaving group may include different numbers of XFECBLOCK. In general, the time interleaver may also function as a buffer with respect to data pipe data prior to a frame generation procedure.

The time interleaver according to an embodiment of the present invention may be a twisted row-column block interleaver. The twisted row-column block interleaver according to an embodiment of the present invention may write a first XFECBLOCK in a first column of the time interleaving memory, write a second XFECBLOCK in a next column, and write the remaining XFECBLOCKs in the time interleaving block in the same manner. In an interleaving array, a cell may be read in a diagonal direction to a last row from a first row (a leftmost column as a start column is read along a row in a right direction). In this case, to achieve single memory deinterleaving at a receiver side irrespective of the number of XFECBLOCK in the time interleaving block, the interleaving array for the twisted row-column block interleaver may insert a virtual XFECBLOCK into the time interleaving memory. In this case, to achieve single memory deinterleaving at a receiver side, the virtual XFECBLOCK needs to be inserted into another frontmost XFECBLOCK.

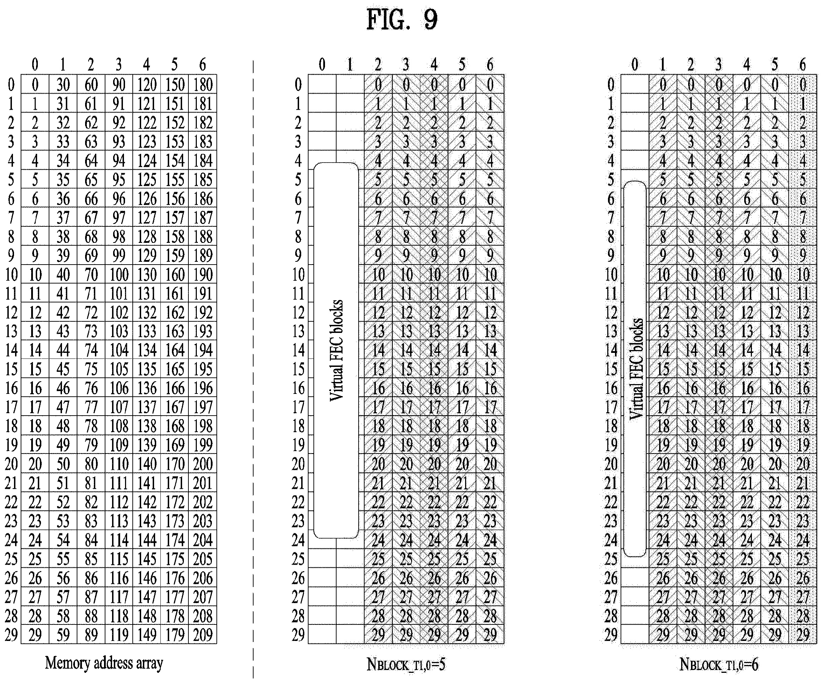

FIG. 9 is a diagram showing a writing operation of a time interleaver according to an embodiment of the present invention.

A block shown in a left portion of the drawing shows a TI memory address array and a block shown in a right portion of the drawing shows a writing operation when two or one virtual FEC blocks are inserted into a frontmost group of TI groups with respect to two consecutive TI groups.

The frequency interleaver according to an embodiment of the present invention may include an interleaving address generator for generating an interleaving address to be applied to data corresponding to a symbol pair.

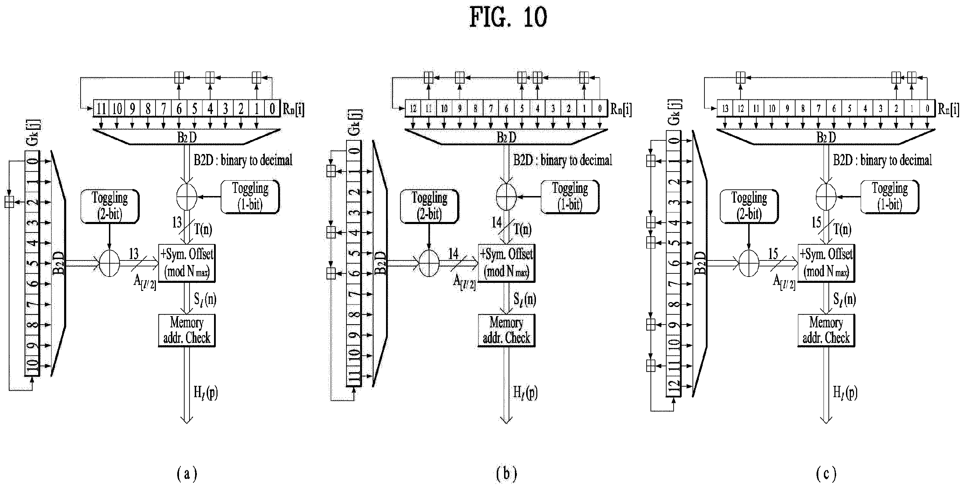

FIG. 10 is a block diagram of an interleaving address generator including a main-PRBS generator and a sub-PRBS generator according to each FFT mode, included in the frequency interleaver, according to an embodiment of the present invention.

(a) is a block diagram of an interleaving address generator with respect to a 8K FFT mode, (b) is a block diagram of an interleaving address generator with respect to a 16K FFT mode, and (c) is a block diagram of an interleaving address generator with respect to a 32K FFT mode.

An interleaving procedure with respect to an OFDM symbol pair may use one interleaving sequence and will be described below. First, an available data cell (output cell from a cell mapper) to be interleaved in one OFDM symbol O_{m,l} may be defined as O_{m,l} =[x_{m,l,0},...,x_{m,l,p},...,x_{m,l,Ndata-1}] with respect to *l* = 0, ..., N_{sym}-1. In this case, x_{m,l,p} may be a *p ^{th}*cell of a *l^{th}*OFDM symbol in a *m^{th}*frame and N_{data} may be the number of data cells. In the case of a frame signaling symbol, N_{data} = C_{FSS}, in the case of normal data, N_{data} = C_{data}, and in the case of a frame edge symbol, N_{data} = C_{FES}. In addition, the interleaving data cell may be defined as P_{m,l} =[v_{m,l,0},...,v_{m,l,Ndata-1}] with respect to *l* = 0, ..., N_{sym}-1.

With respect to an OFDM symbol pair, an interleaved OFDM symbol pair may be given according to v_{m,l,Hi(p)} = x_{m,l,p}, p=0,...,N_{data}-1 for a first OFDM symbol of each pair and given according to v_{m,l,p} = x_{m,l,Hi(p)}, p=0,...,N_{data}-1 for a second OFDM symbol of each pair. In this case, Hₗ(p) may be an interleaving address generated based on a cyclic shift value (symbol offset) of a PRBS generator and a sub-PRBS generator.

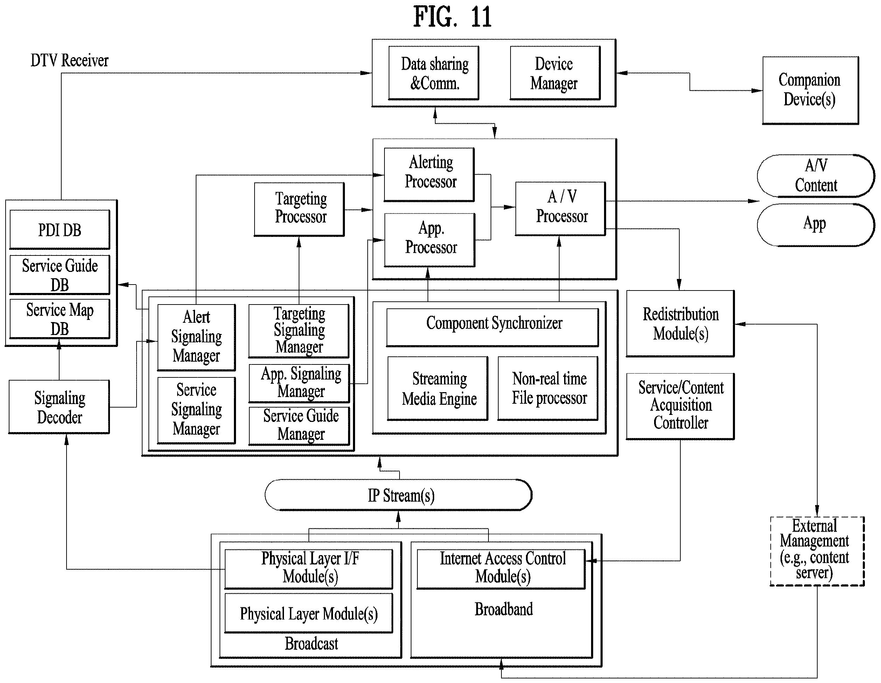

FIG. 11 is a block diagram illustrating a hybrid broadcast reception apparatus according to an embodiment of the present invention.

A hybrid broadcast system can transmit broadcast signals in connection with terrestrial broadcast networks and the Internet. The hybrid broadcast reception apparatus can receive broadcast signals through terrestrial broadcast networks (broadcast networks) and the Internet (broadband). The hybrid broadcast reception apparatus may include physical layer module(s), physical layer I/F module(s), service/content acquisition controller, Internet access control module(s), a signaling decoder, a service signaling manager, a service guide manager, an application signaling manager, an alert signal manager, an alert signaling parser, a targeting signaling parser, a streaming media engine, a non-real time file processor, a component synchronizer, a targeting processor, an application processor, an A/V processor, a device manager, a data sharing and communication unit, redistribution module(s), companion device(s) and/or an external management module.

The physical layer module(s) can receive a broadcast related signal through a terrestrial broadcast channel, process the received signal, convert the processed signal into an appropriate format and deliver the signal to the physical layer I/F module(s).

The physical layer I/F module(s) can acquire an IP datagram from information obtained from the physical layer module. In addition, the physical layer I/F module can convert the acquired IP datagram into a specific frame (e.g., RS frame, GSE, etc.).

The service/content acquisition controller can perform control operation for acquisition of services, content and signaling data related thereto through broadcast channels and/or broadband channels.

The Internet access control module(s) can control receiver operations for acquiring service, content, etc. through broadband channels.

The signaling decoder can decode signaling information acquired through broadcast channels.

The service signaling manager can extract signaling information related to service scan and/or content from the IP datagram, parse the extracted signaling information and manage the signaling information.

The service guide manager can extract announcement information from the IP datagram, manage a service guide (SG) database and provide a service guide.

The application signaling manager can extract signaling information related to application acquisition from the IP datagram, parse the signaling information and manage the signaling information.

The alert signaling parser can extract signaling information related to alerting from the IP datagram, parse the extracted signaling information and manage the signaling information.

The targeting signaling parser can extract signaling information related to service/content personalization or targeting from the IP datagram, parse the extracted signaling information and manage the signaling information. In addition, the targeting signaling parser can deliver the parsed signaling information to the targeting processor.

The streaming media engine can extract audio/video data for A/V streaming from the IP datagram and decode the audio/video data.

The non-real time file processor can extract NRT data and file type data such as applications, decode and manage the extracted data.

The component synchronizer can synchronize content and services such as streaming audio/video data and NRT data.

The targeting processor can process operations related to service/content personalization on the basis of the targeting signaling data received from the targeting signaling parser.

The application processor can process application related information and downloaded application state and represent parameters.

The A/V processor can perform audio/video rendering related operations on the basis of decoded audio/video data and application data.

The device manager can perform connection and data exchange with external devices. In addition, the device manager can perform operations of managing external devices connectable thereto, such as addition/deletion/update of the external devices.

The data sharing and communication unit can process information related to data transmission and exchange between a hybrid broadcast receiver and external devices. Here, data that can be transmitted and exchanged between the hybrid broadcast receiver and external devices may be signaling data, A/V data and the like.

The redistribution module(s) can acquire information related to future broadcast services and content when the broadcast receiver cannot directly receive terrestrial broadcast signals. In addition, the redistribution module can support acquisition of future broadcast services and content by future broadcast systems when the broadcast receiver cannot directly receive terrestrial broadcast signals.

The companion device(s) can share audio, video or signaling data by being connected to the broadcast receiver according to the present invention. The companion device may be an external device connected to the broadcast receiver.

The external management module can refer to a module for broadcast services/content provision. For example, the external management module can be a future broadcast services/content server. The external management module may be an external device connected to the broadcast receiver.

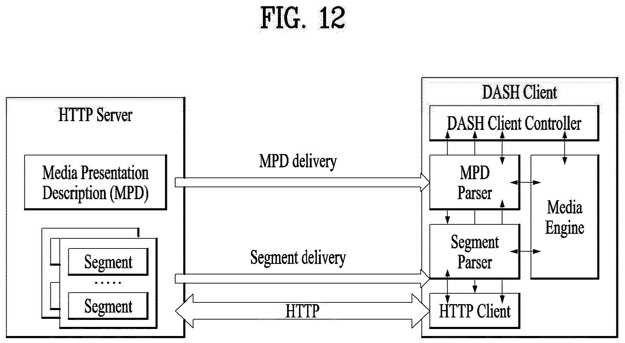

FIG. 12 is a diagram showing an overall operation of a DASH-based adaptive streaming model according to an embodiment of the present invention.

The present invention proposes a next-generation media service providing method for providing high dynamic range (HDR) supportable content. The present invention proposes related metadata and a method of transmitting the metadata when HDR content for expressing sufficient brightness is provided. Thereby, content may be adaptively adjusted according to characteristics of various scenes of content and image quality with enhanced content may be provided.

In the case of UHD broadcast, etc., brightness that is not capable of being expressed by existing content, thereby providing sense of high realism. By virtue of introduction of HDR, an expression range of brightness of a content image is increased and, thus, a difference between characteristics for respective scenes of content may be increased compared with a previous case. To effectively express characteristics for respective scenes, metadata may be defined and transmitted to a receiver. An image of content may be appropriately provided according to intention of a service provider based on the metadata received by the receiver.

The DASH-based adaptive streaming model according to the illustrated embodiment may write an operation between an HTTP server and a DASH client. Here, a dynamic adaptive streaming over HTTP (DASH) may be a protocol for supporting HTTP-based adaptive streaming and may dynamically support streaming according to a network situation. Accordingly, AV content reproduction may be seamlessly provided.

First, the DASH client may acquire MPD. The MPD may be transmitted from a service provider such as a HTTP server. The MPD may be transmitted according to delivery according to the aforementioned embodiment. The DASH client may request a server of corresponding segments using access information to a segment described in the MPD. Here, the request may reflect a network state and may be performed.

The DASH client may acquire a corresponding segment and, then, process the segment in a media engine and, then, display the segment on a screen. The DASH client may reflect a reproduction time and/or a network situation in real time and make a request for and acquire a required segment (Adaptive Streaming). Thereby, content may be seamlessly reproduced.

The media presentation description (MPD) may be represented in the form of XML as a file containing detailed information for permitting the DASH client to dynamically acquire a segment. In some embodiments, the MPD may be the same as the aforementioned MPD.

A DASH client controller may reflect a network situation to generate a command for making a request for MPD and/or a segment. The controller may control the acquired information to be used in an internal block such as a media engine.

A MPD parser may parse the acquired MPD in real time. Thereby, the DASH client controller may generate a command for acquiring a required segment.

A segment parser may parse the acquired segment in real time. Internal blocks such as a media engine may perform a specific operation according to information included in a segment.

A HTTP client may make a request for required MPD and/or segment to a HTTP server. The HTTP client may transmit the MPD and/or segments acquired from the server to the MPD parser or the segment parser.

The media engine may display content on a screen using media data included in a segment. In this case, information of the MPD may be used.

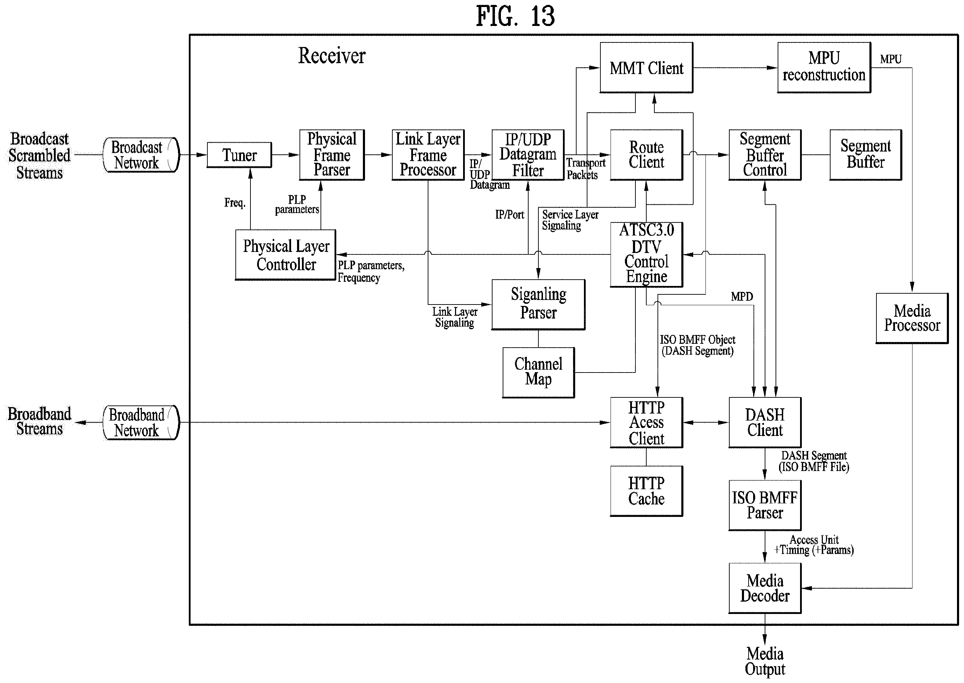

FIG. 13 is a block diagram of a receiver according to an embodiment of the present invention.

The receiver according to the illustrated embodiment may include a tuner, a physical layer controller, a physical frame parser, a link layer frame processor, an IP/UDP datagram filter, a DTV control engine, a route client, a segment buffer control, an MMT client, an MPU reconstruction, a media processor, a signaling parser, a DASH client, an ISO BMFF parser, a media decoder, and/or an HTTP access client. Each detailed block of the receiver may be a hardware processor.

The tuner may receive and process a broadcast signal through a terrestrial broadcast channel to tune the broadcast signal in a proper form (physical frame, etc.). The physical layer controller may control operations of the tuner, the physical frame parser, etc. using RF information, etc. of a broadcast channel as a reception target. The physical frame parser may parse the received physical frame and acquire a link layer frame, etc. via processing related to the physical frame.

The link layer frame processor may acquire link layer signaling, etc. from the link layer frame or may acquire IP/UDP datagram and may perform related calculation. The IP/UDP datagram filter may filter specific IP/UDP datagram from the received IP/UDP datagram. The DTV control engine may mange an interface between components and control each operation via transmission of a parameter, etc.

The route client may process a real-time object delivery over unidirectional transport (ROUTE) packet for supporting real-time object transmission and collect and process a plurality of packets to generate one or more base media file format (ISOBMFF) objects. The segment buffer control may control a buffer related to segment transmission between the route client and the dash client.

The MMT client may process a MPEG media transport (MMT) transport protocol packet for supporting real-time object transmission and collect and process a plurality of packets. The MPU reconstruction may reconfigure a media processing unit (MPU) from the MMTP packet. The media processor may collect and process the reconfigured MPU.

The signaling parser may acquire and parse DTV broadcast service related signaling (link layer/ service layer signaling) and generate and/or manage a channel map, etc. based thereon. This component may process low level signaling and service level signaling.

The DASH client may perform real-time streaming or adaptive streaming related calculation and process the acquired DASH segment, etc. The ISO BMFF parser may extract data of audio/video, a related parameter, and so on from the ISO BMFF object. The media decoder may process decoding and/or presentation of the received audio and video data. The HTTP access client may make a request for specific information to the HTTP server and process response to the request.

The present invention can provide a method for converting and presenting content as images with enhanced video quality by transmitting, to a receiver, a factor which can adaptively adjust the content for characteristics of various scenes included in the content when high dynamic range (HDR) content which can be represented in a wide range of luminance is provided. UHD broadcast can be discriminated from conventional broadcast and can provide high level of presence by representing luminance which cannot be expressed in conventional content. As a dynamic range of images increases according to introduction of HDR (high dynamic range), a characteristic difference between scenes included in content may increase. Accordingly, a broadcast transmission device can additionally provide information for effectively displaying characteristics of each scene on a display and a reception device can present images through a method suitable for a producer's intention by providing video effects on the basis of the transmitted information.

UHD broadcast can provide enhanced video quality and immersiveness to viewers through various methods compared to HD broadcast. As one of the methods, UHD broadcast can provide a method of extending ranges of representation of luminance and color expressed in content to luminance and color recognition ranges which can be recognized by the human visual system. That is, HDR (high dynamic range) and WCG (wide color gamut) can be applied to UHD content. That is, content with enhanced contrast and colors is provided such that a UHD content user can experience improved immersiveness and presence. The present invention provides a method for effectively presenting luminance and color of images of content depending on intention of a producer when the content is presented through a display such that a user can view images with enhanced video quality.

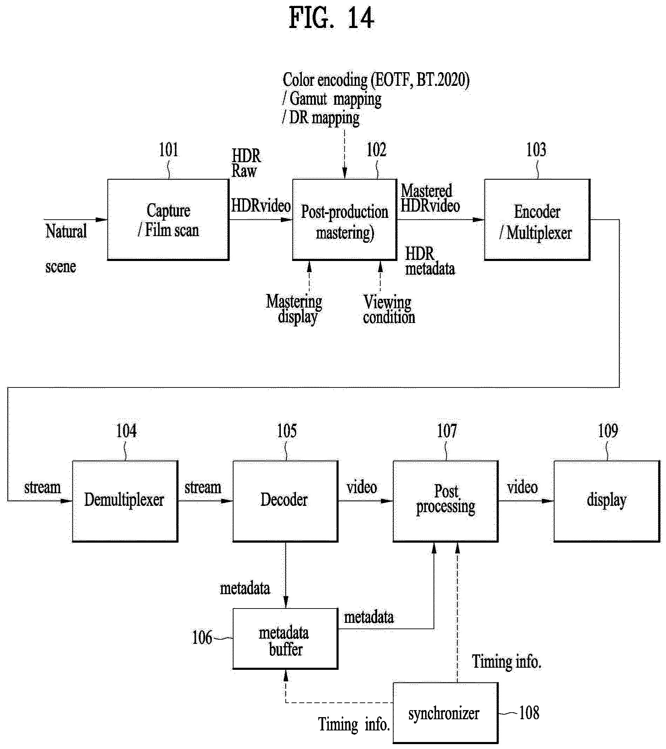

FIG. 14 illustrates a device that produces and reproduces a metadata based HDR broadcast service according to an embodiment of the present invention. An HDR video production device may include at least one of a capture/film scanner 101, a post-production block (mastering unit) 102 and an encoder/multiplexer 103. An HDR video reproduction device may include at least one of a demultiplexer 104, a decoder 105, a metadata processor 106, a post processor 107, a synchronizer 108 and a display 109. While the figure shows metadata received by being included in a video stream, metadata of the present invention may be transmitted and received through other routes (e.g., IP based broadcast/communication, wired/wireless communication, wired/wireless interfaces, short-range wireless communication, etc.) in addition to broadcast signals.

The capture/film scanner 101 of the HDR video production device may convert a natural scene into digital video. For example, the capture/film scanner may be a device that converts optical images obtained by a video camera, a camera, a scanner and the like into digital images. The capture/film scanner 101 may sense an optical image and output raw HDR (High Dynamic Range) video.

The post-production block (mastering unit) 102 may receive the raw HDR video and output mastered HDR video and HDR metadata. The post-production block may receive mastering display information, viewing condition information, color encoding information, gamut mapping information and/or DR (Dynamic Range) information and perform mastering. Here, the color encoding information can be an EOTF (electro-optical transfer function) such as BT.2020, for example.

The encoder/multiplexer 103 may encode and multiplex at least one piece of mastered HDR video and HDR metadata.

The demultiplexer 104 of the HDR video reproduction device may receive and demultiplex an HDR stream. A single HDR stream may include a plurality of pieces of content. The demultiplexer may output the HDR stream corresponding to a decoding target to the decoder.

The decoder 105 may receive and decode the HDR stream. In this process, the decoder may output decoded HDR video and HDR metadata. The decoded HDR video may be output to the post processor and the HDR metadata may be output to the metadata processor.

The metadata processor 106 may receive and store the HDR metadata. The metadata processor may check whether the stored HDR metadata has been changed by checking a set number or a version number included in the HDR metadata and update existing HDR metadata when the stored HDR metadata has been changed. The metadata processor may output the HDR metadata to the post processor according to timing information received from the synchronizer.

The post processor 107 may perform post-processing on the HDR video received from the decoder using the HDR metadata received from the metadata processor. Through this process, the HDR video can be converted to enhanced HDR video in which the HDR metadata has been reflected.

The synchronizer 108 may provide timing information to the metadata processor and the post processor such that metadata is applied to the whole HDR video or each scene thereof, each video clip or each frame at correct timing. Here, metadata may represent information about mastering display or may refer to information commonly applied for a channel, a program and content or information applied to continuous scenes, video clips and frames.

The HDR display 109 may display and provide the enhanced HDR video to a user.

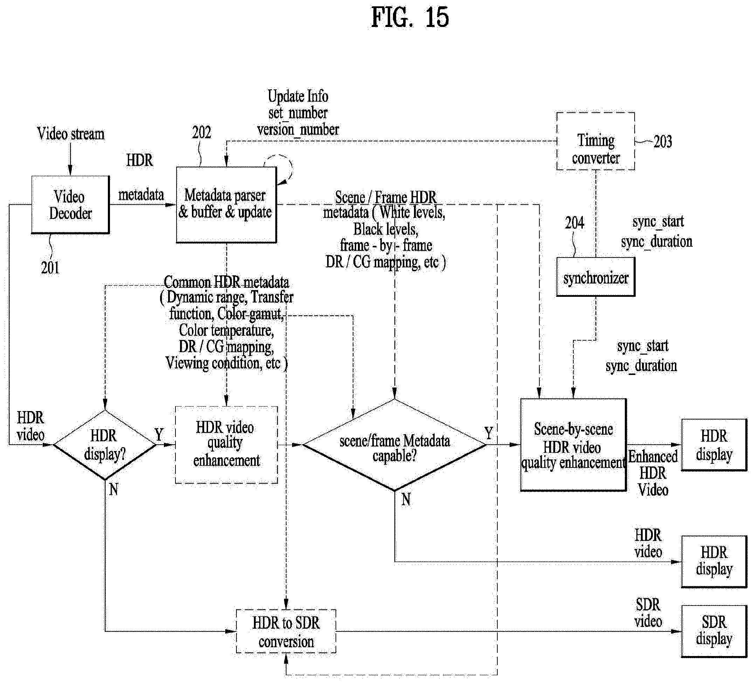

FIG. 15 illustrates an operation method of a receiver for HDR video according to an embodiment of the present invention. Although receiver operation is mainly described in the present invention, the same details can be considered when related signals are generated and can be applied to delivery signals between productions and a mastering signal.

When a video stream is received, the receiver may separate HDR metadata from an HDR video signal using a video decoder 201 and store the separated HDR metadata in a separate metadata parser 202. The metadata processor may include a metadata parser, a metadata buffer and a metadata update unit. The HDR metadata may include common HDR metadata and scene/frame HDR metadata. The common HDR metadata is applicable to entire content and may refer to information commonly applied in units of channel, program and content.

The scene/frame HDR metadata may be metadata limitedly applicable to part of content and may refer to information applied to continuous scenes, video clips or frames. The receiver may determine the performance for reproducible content type and then apply received common HDR metadata or scene/frame HDR metadata to content and process the content. A receiver capable of reproducing HDR video may convert content using received metadata. The receiver may display the converted content as a final image after the processing operation. A detailed receiver operation method will be described below.

In the first step, the receiver may decode a video stream and acquire HDR metadata. The HDR metadata may refer to HDR video information (referred to as HDR_info() hereinafter). The receiver may deliver the metadata acquired from the video stream to the metadata parser 202, analyze the metadata and store the metadata in a memory. The metadata can be divided into common HDR metadata and scene/frame HDR metadata. In the present invention, it is possible to apply the metadata according to mastering display, to commonly apply the metadata to a channel, a program and content or to apply the metadata to continuous scenes, video clips and frames by delivering a range within which the metadata is applied using type information HDR_info_type which will be described below.

In addition, the metadata may further include a period to which the metadata is applied, for example, information for matching the metadata with an applied video frame in the format of synchronization start information sync_start and synchronization duration information sync_duration.

According to an embodiment, the common HDR metadata may include at least one of a value indicating the dynamic range of content/mastering display/frame, such as maximum/minimum luminance or high contrast, a transfer function such as EOTF, the color gamut of the content or mastering display, the color temperature of the content or mastering display, a dynamic range transfer function, a color gamut transfer function and viewing condition information.

In the specification, the value indicating the dynamic range of the content/mastering display/frame may be transmitted using dynamic_range_info_type and dynamic_range_info_value[i]. The transfer function such as EOTF may be transmitted using transfer_function_type. The color gamut of the content or mastering display may be transmitted using color_gamut_type. The color temperature of the content or mastering display may be transmitted using color_temperature_type. The dynamic range transfer function may be transmitted using dynamic_range_mapping_info_type. The color gamut transfer function may be transmitting using color_gamut_mapping_info_type. The viewing condition information may be transmitted using viewing_condition_info_type. The syntax of information and fields included therein will be described below.

The scene/frame HDR metadata may include information identical or similar to the common HDR metadata and may also include information about a range to which the scene/frame HDR metadata is applied. The scene/frame HDR metadata can deliver more specific information because the range to which the scene/frame HDR metadata is applied is limited to some parts of content. For example, the common HDR metadata can deliver a dynamic range applied to entire content as a value such as f-stop or high contrast, whereas the scene/frame HDR metadata can deliver maximum and minimum values for a frame unit to achieve delivery of more specific information. Accordingly, different information delivery ranges can be applied to steps according to types of delivered metadata. Similarly, in the case of dynamic range mapping, information regarding transformation of overall content may be delivered as the common HDR metadata and then a complicated transfer function capable of representing characteristics of each scene may be delivered through the scene/frame HDR metadata.

In the second step, the receiver may determine whether the display included therein is an HDR display. The receiver may determine whether a presentation condition of the receiver is suitable on the basis of information about the acquired content (or information about mastering display) using common information. For example, the receiver may use the aforementioned common HDR metadata and may consider an SDR display or a display having performance between SDR and HDR if the content presentation condition is not suitable.

A case in which the display included in the receiver is an SDR display or a display having performance equivalent thereto will be described first. Upon determining that the receiver display cannot completely present decoded HDR content, the receiver may not present the HDR content or may perform conversion for content presentation. A receiver that can convert HDR video into SDR video can convert received HDR video into SDR video and present the SDR video. To this end, HDR metadata may include information about a transfer function for converting HDR video into SDR video. For example, dynamic_range_mapping_info_type or color_gamut_mapping_info_type may be used as the information about the transfer function, and the HDR metadata may additionally signal use of the information to convert HDR video into SDR video as necessary.

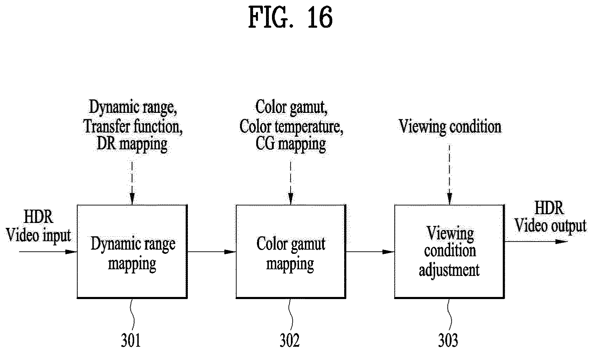

Next, a case in which the display included in the receiver is an HDR display will be described. This corresponds to a case in which the display of the receiver is determined to be able to completely present decoded content. In this case, video quality can be enhanced using the common HDR metadata included in the HDR metadata, and video quality enhancement can be achieved using dynamic range mapping, color gamut mapping and viewing condition mapping. According to an embodiment, video quality enhancement for content using the common HDR metadata may be omitted when the scene/frame HDR metadata can be applied in the third step which will be described below. Further, video quality enhancement using the common HDR metadata may be realized using an additional module or applied in association with a post processing module which will be described with reference to FIG. 16.

In the third step, the receiver may perform video quality enhancement per scene of HDR video. When it is determined that the receiver can present HDR content on the basis of metadata information, the receiver may determine whether the receiver can process additional HDR metadata.

FIG. 15 shows a case in which scene-by-scene (or clip-by-clip or frame-by-frame) processing is additionally performed. In this case, it is possible to display HDR video with enhanced quality through detailed dynamic conversion per scene, video clip or frame of content using metadata provided on a scene-by-scene or frame-by-frame basis. Here, a broadcast transmission device can cause the receiver to identify transmission of information in units of scene or frame through a supplemental enhancement information (SEI) message using HDR_info_type according to an embodiment of the present invention. Furthermore, the broadcast transmission device can provide, to the receiver, information about a time at which the information in units of scene or frame needs to be applied using sync_info_type, sync_start and sync_duration. The receiver can identify transmission of the information in units of scene, video clip or frame through HDR_info_type and acquire timing information about the time at which the information in units of scene or frame is applied through sync_info_type, sync_start and sync_duration. In addition, the receiver may convert the timing information provided through metadata into information for synchronization with images as necessary.

In addition, the broadcast transmission device may inform the receiver of the type of metadata in units of scene, video clip or frame which will be provided when providing the common HDR metadata. The broadcast transmission device may previously inform the receiver of the aforementioned information through HDR_video_enhancement_info_present_type. That is, the receiver can acquire information about whether the scene/frame HDR metadata is received and the type thereof from the common HDR metadata and prepare to operate a related module. According to an embodiment, the broadcast transmission device may indicate the fact that the metadata in units of frame, video clip or scene is provided or indicate presence of information in units of frame, video clip or scene using the common HDR metadata. For example, the broadcast transmission device can indicate provision of dynamic range mapping and/or color gamut mapping information in units of frame or scene using the common HDR metadata.

According to an embodiment, the receiver may apply the common HDR metadata and scene HDR metadata to HDR video in stages or apply the same through one operation. Further, the receiver may apply the common HDR metadata and scene HDR metadata to the HDR video per dynamic range mapping and color gamut mapping or apply the same through one transfer function.

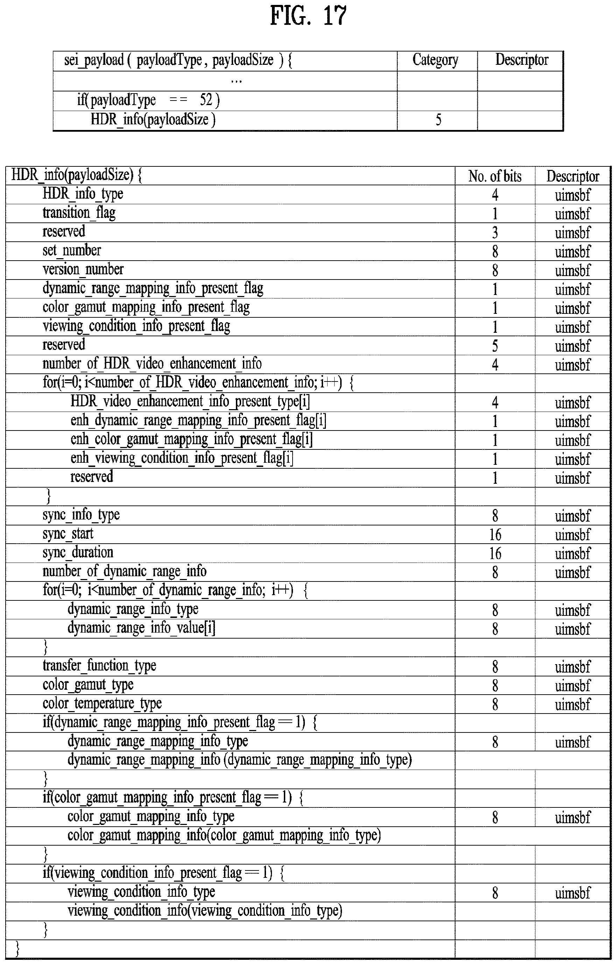

FIG. 16 illustrates a post processor according to an embodiment of the present invention. In the present invention, the post processor may include a dynamic range (DR) mapping block 301, a color gamut (CG) mapping block 302 and a viewing condition adjustment block 303. The post processor may receive HDR video data and perform video quality enhancement using dynamic range mapping, color gamut mapping and viewing condition mapping. The DR mapping block 301 may perform video quality enhancement by applying dynamic range information, transfer function information and DR mapping information to the input HDR video data. The CG mapping block 302 may perform video quality enhancement by applying color gamut information, color temperature information and CG mapping information to the input HDR video data. The viewing condition adjustment block 303 may perform video quality enhancement by applying viewing condition information to the HDR video data. Details of the information will be described below with reference to FIGS. 17 to 29.

FIGS. 17 to 20 illustrate syntaxes of an SEI message and HDR information descriptors according to an embodiment of the present invention.

An SEI message may include an HDR information descriptor, and the HDR information descriptor may include at least one of the following fields. In the present invention, HDR information may have the same meaning as HDR video information.

HDR_info_type can indicate an information application unit in the HDR information descriptor. For example, HDR_info_type may indicate information about mastering display or may be commonly applied in units of channel, program and content. Further, HDR_info_type may be used to discriminate HDR information by being applied to continuous scenes, video clips or frames. Additionally, HDR information may be classified through other methods (e.g., depending on states before and after conversion, a transmission format, a target format after conversion, static/dynamic metadata, etc.).

Types of HDR information defied in the current payloadType can be discriminated as described above. Here, only detailed information corresponding to a single HDR_info_type may be described or two or more pieces of information may be described in the payloadType as in the embodiment of FIG. 17. In this case, a syntax may be configured such that pieces of information classified in accordance with HDR_info_type are continuously positioned.

In addition to the method of defining an information application unit in an SEI message, the information application unit may be defined by allocating different payloadType to pieces of HDR information. For example, HDR information can be classified such thatpayloadType = 52 (mastering display), payloadType = 53 (channel), payloadType = 54 (program), payloadType = 55 (content), payloadType = 56 (scene), payloadType = 57 (clip) and payloadType = 58 (frame).

Transition_flag is a signal regarding an end time of content associated with an SEI message. For example, when HDR content is ended and switched to SDR content, transition_flag is set to 1 for the last frame. This can represent termination of transmission of the HDR information descriptor depending on application field. The receiver may turn off a module related to the HDR information descriptor on the basis of this signal. When the receiver is divided into a set-top box (STB) and a display device which are connected through a wired/wireless interface (e.g., HDMI, display port, MHL or the like), information, similar to the transition_flag, which represents that HDR related information transmission is stopped or HDR content is finished may be delivered from the STB to the display device. The transition_flag may indicate a content end time in a frame in which the HDR information descriptor is ended. A content end time may be indicated in an RAP including an end frame if previously set.

Set_number can indicate an identification number unique to an HDR information descriptor. That is, when a plurality of HDR information descriptors is delivered in units of time or frame from the broadcast transmission device to the receiver, the set_number can discriminate the HDR information descriptors. The set_number may discriminate a plurality of descriptors for each of a channel, a program, content, a frame, a scene and a clip in association with the aforementioned HDR_info_type as necessary. For example, when different DR mapping functions are delivered in order to supply displays having various types of luminance, the set_number can discriminate a plurality of descriptors for each of a channel, a program, content, a frame, a scene and a clip in association with the aforementioned HDR_info_type.

Version_number can indicate the version of the HDR information descriptor. The version_number can indicate an information change in the current descriptor in association with at least one of HDR_info_type and set_number. For example, when a descriptor having the same HDR_info_type and/or the same set_number has the same version number as the previous version number, information in a metadata processor can be applied as it is to images. When the version_number is changed, however, the broadcast reception device can update information in a metadata buffer and apply new information to video.

DR flag (dynamic_range_mapping_info_present_flag) can indicate that dynamic range mapping related information is included in the descriptor.

CG flag (Color_gamut_mapping_info_present_flag) can indicate that gamut mapping related information is included in the descriptor.

Viewing_condition_info_present_flag can indicate that viewing condition related information is included in the descriptor.

Number_of_HDR_video_enhancement_info indicates the number of pieces of related information when there is an additional SEI message related to the current SEI message. The number_of_HDR_video_enhancement_info may provide enhanced information. For example, when information HDR_info_type = 0011 (content) is delivered, information about mastering display and scenes may be transmitted in association with the number_of_HDR_video_enhancement_info. In this case, the number_of_HDR_video_enhancement_info is 3. Here, the receiver can use only information in content depending on performance when performing video quality processing such as tone mapping, gamut mapping and the like. Furthermore, the receiver may use only information of HDR_info_type = 0100 (scene), for example, or use all information according to an embodiment, upon determining that the receiver has detailed information.

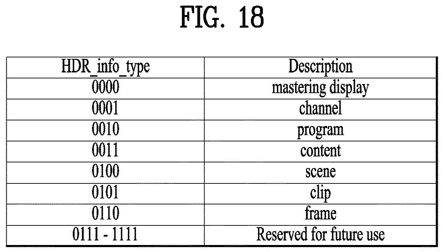

HDR_video_enhancement_info_present_type indicates the type of additional information related to the current SEI message and may be defined using the same value as HDR_info_type of FIG. 18. Here, this information can indicate whether information related to DR mapping, gamut mapping and viewing condition is transmitted through enh_dynamic_range_mapping_info_present_flag, enh_color_gamut_mapping_info_present_flag and enh_viewing_condition_info_present_flag and can be used when a receiver operation for information processing is prepared or whether more enhanced information than current information is used is determined.

Enh_dynamic_range_mapping_info_present_flag can indicate presence of DR mapping information for related metadata information when set to 1.

Enh_color_gamut_mapping_info_present_flag can indicate presence of gamut mapping information for related metadata information when set to 1.

Enh_viewing_condition_info_present_flag can indicate presence of viewing condition information for related metadata information when set to 1.

When the metadata type is specified by a payloadType value of an SEI message instead of HDR info, the payloadType value of the SEI message can be directly transmitted in addition to the aforementioned method of using HDR_info_type and flags related thereto. That is, payloadType = 52 (mastering display) and payloadType = 56 (scene) can be transmitted as additional (enhancement) information related to payloadType = 53 (content) in the above example. Alternatively, payloadType may be added and provided along with HDR_info_type.

Sync_info_type can indicate a method of representing information for synchronization with content, scenes, clips or frames to which information in the HDR information descriptor needs to be applied. For example, sync_info_type can deliver a picture order count (POC) value used in a decoder or directly deliver a pic_order_count_lsb value. In the case of storage media, media time information can be used, and the number of accumulated frames on the basis of a reference time for video start may be decided as sync_info_type.

Sync_start is information related to synchronization start time. When information is delivered in a specific period such as an RAP instead of being delivered per frame, it is necessary to connect the start and end of a period in which the information is used to video frames. The present invention may apply an embodiment of representing start information of the period or a frame to which the corresponding information is applied as information such as a time, a POC, the number of frames or PTS in association with sync_info_type using sync_start. Sync_info_type can define a synchronization information type as a time, a time difference, start order, a POC (picture order count), PTS or the number of aggregated frames.

For example, it is possible to consider a case in which three pieces of metadata are applied to 2 seconds (start time), 2.5 seconds and 3.5 seconds within an RAP of 2 to 4 seconds for a 50 fps video stream having an RAP interval of 2 seconds.

When sync_info_type=0x00, the synchronization information type can be set to time and sync_start information of the metadata can be delivered as 2000, 2500 and 3500. Additionally, sync_duration can be signaled as 500, 1000 and 1000. Here, a reference time may be needed for determination of time. In this case, the reference time may be additionally signaled in such a manner that a time is defined in an adaptation field of a TS header.

When sync_info_type=0x01, the synchronization information type can be set to a time difference. The broadcast transmission device can inform the receiver of immediate application of metadata, application of the metadata after 0.5 seconds from RAP and application of metadata after 1.5 seconds from RAP by signaling sync_start = 0, 500 and 1000.

When sync_info_type=0x02, the synchronization information type can be set to a start order and the order can be signaled like sync_start = 0, 1, 2. When the start order is signaled, the receiver can apply synchronization information in the order at a specific interval. The specific interval may be a fixed value or may be a value determined in the order. For example, 0 can indicate immediate application, 1 can indicate application after 0.5 seconds from RAP, and 2 can indicate application after 1.5 seconds after RAP.

When sync_info_type = 0x03, the synchronization information type can be set to a POC. In this case, 100, 125 and 175 may be delivered as POC values of video at metadata application timing, and 25, 50 and 50 may be delivered as duration values which will be described below depending on the unit of the POC. Further, values related to a POC in a video codec syntax may be directly delivered.

When a PTS (presentation time stamp) and the number of frames are signaled, a metadata application timing can be indicated through the PTS and the number of frames similarly to the aforementioned example of the POC.

Sync_duration is information about a duration starting from sync_start. A synchronization expiration timing can be calculated as sync_start + sync_duration as in the aforementioned example, and synchronization expiration timing information may be directly delivered along with or instead of sync_duration as necessary. In the case of live broadcast, an expiration time cannot be determined in advance and thus may be set to a predetermined value such as FFFF. If the metadata application timing can be determined only with the sync_start information, sync_duration may not be used. In this case, sync_duration may be used as a flag that provides additional information such as information indicating whether other metadata is transmitted following the corresponding metadata.

Number_of_dynamic_range_info can indicate the number of methods of representing dynamic range information corresponding to mastering display, a channel, a program, content, a scene, a clip or a frame.

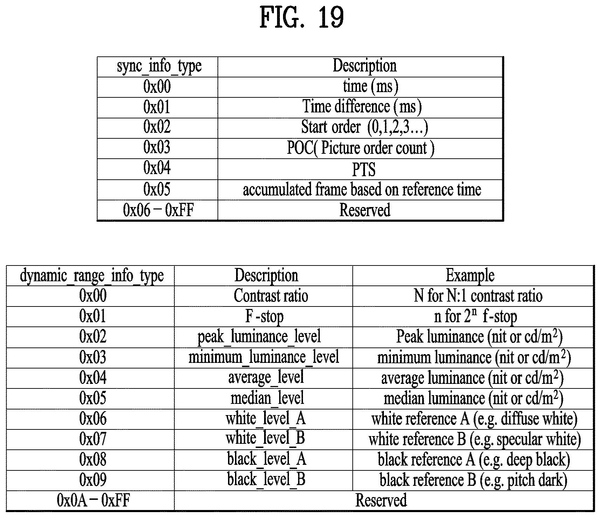

Dynamic_range_info_type indicates a method of representing dynamic range information corresponding to mastering display, video, a scene or a frame. Methods for representing a dynamic range may be as shown in the lower part of FIG. 19. Dynamic range can be represented using at least one of maximum luminance, minimum luminance, average luminance, and an average or median value composed of a specific component. Further, white may be subdivided into normal white, diffuse white and specular white according to characteristics and black may be classified into normal black, deep black and pitch dark according to characteristics and presented.

As described in the example below, the broadcast transmission device can subdivide and represent luminance of a bright part and a dark part of content by providing information such as specular white and pitch dark through HDR info, and such information can be used as a criterion for determination of receiver display conditions or as information for mapping according to display conditions.

A DR information value dynamic_range_info_value can deliver a corresponding value according to dynamic_range_info_type. That is, content, mastering display and scene DR can be represented in detail according to dynamic_range_info_type as described below. Further, the DR information value may be used to separately describe a container video format and characteristics of actual content.

Ex) Content: peak_luminance_level = 2000(nit), minimum_luminance_level = 0.1(nit)

Mastering display: peak_luminance_level = 4000(nit), minimum_luminance_level = 0.01(nit)

Scene: white_level_A = 800(nit), white_level_B = 1500(nit), black_level_A = 1(nit), black_level_B = 0.1(nit)

Transfer_function_type can indicate the type of a transfer function used for mastering display, a channel, a program, content, a scene, a clip or a frame of HDR video. For example, a predetermined EOTF such as SMPTE ST 2084, ITU BT.1886 and BT.2020 can be signaled. Luminance representation methods may be divided into an absolute luminance representation method and a relative luminance representation method depending on the type of a transfer function and a specific method may be signaled. A coefficient of an arbitrary transfer function may be delivered as necessary.

Color_gamut_type can indicate a color gamut type corresponding to mastering display, a channel, a program, content, a scene, a clip or a frame of HDR video. For example, color_gamut_type can indicate a standard color gamut such as BT.709, BT.2020 and DCI-P3 or indicate an arbitrary color gamut through RGB color primary (XYZ, RGBW and the like may be used) as necessary.

Color_temperature_type can indicate information about standard white corresponding to mastering display, a channel, a program, content, a scene, a clip or a frame of a color gamut. For example, color_temperature_type may be a standard light source color temperature such as D65 and D50 and may indicate an arbitrary value representative of a color temperature such as RGB color primary (XYZ, RGBW and the like are possible) with respect to white as necessary.

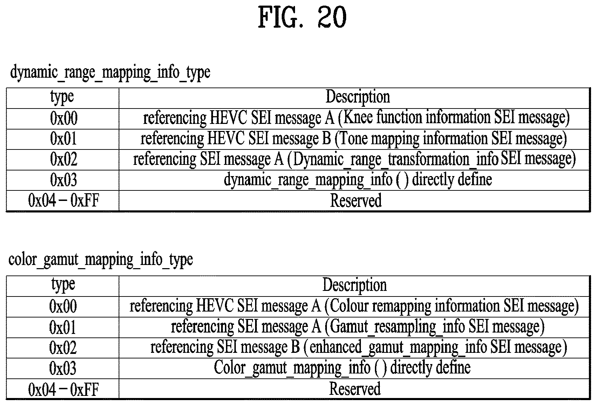

Dynamic_range_mapping_info_type indicates the type of dynamic range mapping information corresponding to mastering display, a channel, a program, content, a scene, a clip or a frame. For example, dynamic_range_mapping_info_type can refer to a knee function information SEI message or a tone mapping information SEI message included in HEVC, as shown in the upper part of FIG. 20. Furthermore, dynamic_range_mapping_info_type may be directly described in a predetermined HDR information descriptor.

Color_gamut_mapping_info_type indicates the type of color gamut mapping information corresponding to mastering display, a channel, a program, content, a scene, a clip or a frame. For example, color_gamut_mapping_info_type can refer to information defined in a color remapping information SEI message included in HEVC, as shown in the lower part of FIG. 20. Further, color_gamut_mapping_info_type may be directly described in a predetermined HDR information descriptor.

Viewing_condition_info_type indicates the type of viewing condition information corresponding to mastering display, a channel, a program, content, a scene, a clip or a frame. For example, viewing_condition_info_type may refer to information defined in viewing_condition defined as a separate SEI message and may be directly described in a predetermined HDR information descriptor.

When an external SEI message is referred to for the aforementioned dynamic_range_mapping_info_type, color_gamut_mapping_info_type and viewing_condition_info_type, a method of directly signaling payloadType of the SEI message may be used, distinguished from the aforementioned method. For example, when a knee function information SEI message is referred to, a signaling method using dynamic_range_mapping_info_type = 0 and payloadType = 141 may be used.

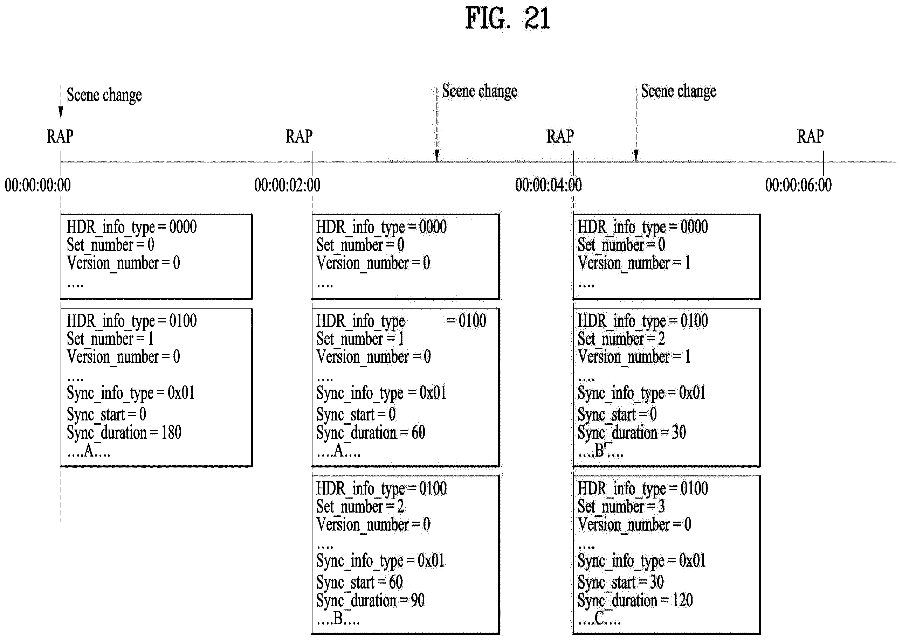

FIG. 21 illustrates a method of signaling metadata information with time according to an embodiment of the present invention.

For metadata transmission with time, various methods such as 1) a method of transmitting all of corresponding information for each frame, 2) a method of transmitting metadata in frames corresponding to a period in which the metadata is changed and applied within an RAP, 3) a method of simultaneously transmitting metadata applied within a period such as an RAP in the period, and 4) a method of transmitting metadata prior to an RAP related to an application timing can be considered. Further, a combination of methods 1) to 4) may be used.

FIG. 21 illustrates an embodiment of signaling metadata information according to RAP. The common type applied to entire video can be transmitted in each RAP. This corresponds to a case in which HDR_info_type is set to 0000 in FIG. 21. Although the common type is repetitive information, the broadcast transmission device can compensate for information loss due to transmission error by transmitting the common type per RAP.

When information applied differently for each scene needs to be provided, the information may be transmitted using scene metadata. This corresponds to a case in which HDR_info_type is set to 0100 in FIG. 21. In this case, information corresponding to an RAP and information applied after scene change in the RAP can be transmitted together. Information corresponding to an RAP and information applied after scene change in the RAP may be defined as sets having different roles and may be discriminated from each other by being assigned different set numbers. According to an embodiment, when pieces of information having different roles are separately delivered even though the information is applied to the same scene, different set numbers can be used to discriminate the information. When information is applied over two or more RAPs, the information has the same set_number and, when detailed information is not updated, the same version_number is set for the information. When detailed information is changed, the information may have a different version_number such that the metadata processor can identify a set having updated information and determine whether to perform update. When the next RAP arrives, a scene start time changes to the new RAP and thus sync_start can change to the new RAP and can be applied. In this case, when a sync duration end point (sync_start+sync_duration) is not changed, the same version_number can be applied upon determining that there is no information change.

When application information is previously transmitted before arrival of an RAP related to a metadata application timing used in a program, application timing can be signaled through a relative concept such as time difference, order and number of frames. In this case, it may be possible to signal that the corresponding metadata is not applied in the corresponding RAP but will be applied later using predetermined signaling such as sync_start = FFFF or a method of signaling with a longer duration than an RAP.

In FIG. 21, sync_start=0 and sync_duration=180can be set for the second HDR_info_type=0100 in a period of 00:00:00:00 to 00:00:02:00, and sync_start=0 and sync_duration=60 can be set for the second HDR_info_type=0100 in a period of 0:00:02:00 to 00:00:04:00. As start time changes from 00:00:00:00 to 00:00:02:00, duration can be changed and signaled for the same information (set 1, ver 0). The receiver does not perform metadata update when it is confirmed that the metadata has not been changed.

When details of information that plays the same role as previous information have been changed, the broadcast transmission device can increase version_number of common HDR metadata while maintaining set_number thereof. The metadata processor of the receiver can recognize information change on the basis of changed version_number and update previous information to new information.

When information has been changed in the metadata in a period of 00:00:04:00 to 00:00:06:00 as shown in FIG. 21, information such as start time may be additionally delivered. When information has been changed in the metadata, for example, when information B has been changed to information B', a new version number can be assigned. It can be confirmed from the figure that the version number for set_number=2 is 0 in the period of 00:00:02:00 to 00:00:04:00 but the version number has increased to 1 in the period of 00:00:04:00 to 00:00:06:00. It is also possible to signal that update needs to be performed when expiration time is changed.

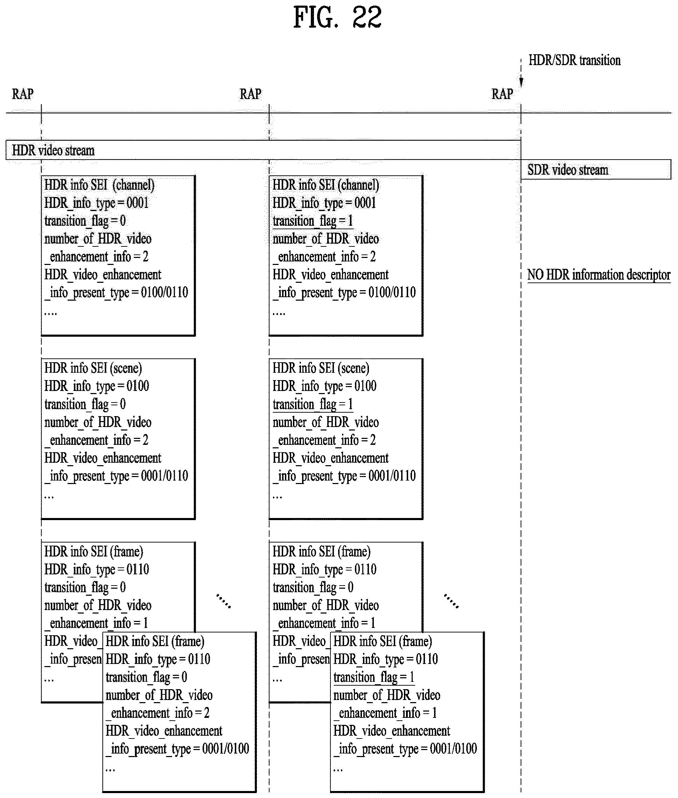

FIG. 22 illustrates a method of signaling metadata information with time according to another embodiment of the present invention. FIG. 22 shows a case in which there is transition between HDR and SDR in signaling of metadata information. As shown, transition of an HDR video stream to an SDR video stream occurs in the third RAP. In this case, the HDR information descriptor is transmitted and received no longer after the third RAP.

When transmission of the HDR information descriptor is stopped, the broadcast transmission device can notify the receiver that transmission of the HDR information descriptor is stopped through transition_flag. In the case of transition of content DR from HDR to SDR, transmission of an SEI message delivering video properties of HDR/WCG content is stopped and no more information may be transmitted after a content transition time. Although the HDR information descriptor such as mastering display information, color gamut mapping and viewing condition may be used for SDR content, of course, legacy SDR content that does not use the HDR information descriptor can be considered in the present example. In this case, a transition_flag on time, that is, a time at which the transition_flag is set to 1 is important. As in the above example, the transition_flag can be set to 0 in a frame immediately before the transition time and the RAP (the second RAP in the figure) including the frame.

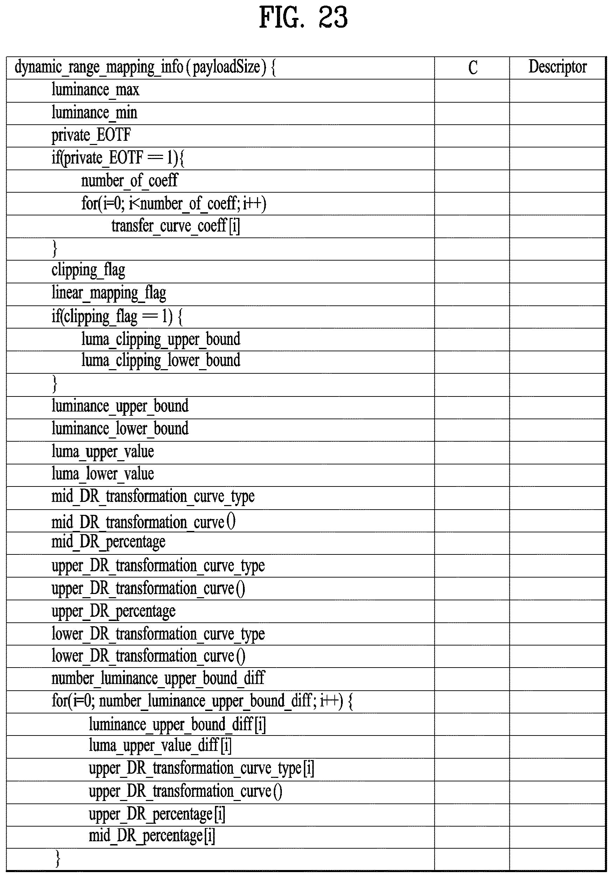

FIG. 23 illustrates dynamic_range_mapping_info according to an embodiment of the present invention. When dynamic_range_mapping_info_type described above with reference to the upper part of FIG. 20 is set to 0x03, dynamic_range_mapping_info() can be directly defined in the HDR_info descriptor. When HDR_info_type is a channel, a program or content as common HDR metadata related to mastering display or video, information described in FIG. 22 can be used for the entire video (channel, program or content). When HDR_info_type is scene type or frame type as scene/frame HDR metadata, the information described in FIG. 22 can be used for a corresponding section. Fields included in dynamic_range_mapping_info() will be described below.

Dynamic_range_mapping_info() according to an embodiment of the present invention may include luminance_max, luminance_min, private_EOTF, number_of_coeff, transfer_curve_coeff[i],clipping_flag, linear-mapping-flag, luma_clipping_upper_bound, luma_clipping_lower_bound, luminance_upper_bound, luminance_lower_bound, luma_upper_value, luma_lower_value, mid_DR_transformation_curve_type,mid_DR_transformation_curve(), mid_DR_percentage, upper_DR_transformation_curve_type, upper_DR_transformation_curve(),upper_DR_percentage,lower_DR_transformation_curve _type,lower_DR_transformation_curve(), number_luminance_upper_bound_diff,luminance_upper_bound_diff[i],luma_upper_value_ diff[i],upper_DR_transformation_curve_type[i], upper_DR_transformation_curve(), upper_DR_percentage[i] and/or mid_DR_percentage[i].

Luminance_max indicates maximum reference luminance represented in UHD broadcast content. That is, this indicates a maximum value of dynamic range (DR). For example, in the case of a reference monitor, 100cd/m^2 is decided as maximum reference luminance. In this case, 1, which is the quotient of a value obtained by dividing the above value by 100 (decimal number) in consideration of a general range, can be transmitted.

Luminance_min indicates minimum reference luminance represented in UHD broadcast content. That is, this indicates a minimum value of the dynamic range. For example, in the case of a reference monitor, 0.05cd/m^2 is decided as minimum reference luminance. In this case, 5 obtained by multiplying the above value by 100 (decimal number) in consideration of a general range can be transmitted.

Private_EOTF indicates whether any EOTF function is used. This can be delivered through VUI information when a widely-used EOTF such as ITU-R BT.1886, REC.709 and BT.2020 is used. However, when an EOTF which has not been decided as a standard is used, the corresponding field value can be set to 1. For example, perceptual quantization can be used as an EOTF which has not been decided as standard, that is, arbitrary EOTF.

number_of_coeff indicates the number of coefficients used for an arbitrary EOTF.

transfer_curve_coeff[i] indicates a coefficient used for an arbitrary EOTF.

clipping_flag indicates whether a clipping option is used and can have a value of 1 when use of the clipping option is permitted.

linear_mapping_flag indicates whether a linear dynamic range transformation method is used. When the linear dynamic range transformation method is used, linear_mapping_flag has a value of 1.

luma_clipping_upper_bound indicates a digital value of an upper critical point in a dynamic range (DR) displayed when the clipping option is used.

luma_clipping_lower_bound indicates a digital value of a lower critical point in the dynamic range (DR) displayed when the clipping option is used.

luminance_upper_bound indicates a maximum value (in nit) of a dynamic range that needs to be mandatorily represented among dynamic ranges represented in UHD broadcast content. luminance_upper_bound may be a criterion for determination of a display type of a receiving device. Further, luminance_upper_bound may signal an additional criterion for determination of a display type of a receiving device.

luminance_lower_bound indicates a minimum value (in nit) of a dynamic range that needs to be mandatorily represented among dynamic ranges represented in UHD broadcast content. luminance_lower_bound may be a criterion for determination of a display type of a receiving device. Further, luminance_lower bound may signal an additional criterion for determination of a display type of a receiving device.

luma_upper_value indicates a digital value corresponding to luminance_upper_bound.

luma_lower_value indicates a digital value corresponding to luminance_lower_bound.

mid_DR_transformation_curve_type identifies a DR transformation curve used in a mid dynamic range. One of a linear curve, an exponential curve, an S-curve, a logarithmic curve, a combination curve and a look-up table (LUT) may be used as a transformation curve.

mid_DR_transformation_curve() indicates additional information according to a transformation curve identified by mid_DR_transformation_curve_type. For example, gradient information can be transmitted when a linear curve is used, information on a base can be transmitted when an exponential curve or a logarithmic curve is used, information about coordinates of an inflection point and a base and a y-intercept of each section can be transmitted when an S-curve is used, and information about an x-coordinate of each section, a curve type of each section and the corresponding graph can be transmitted when a combination curve is used.

mid_DR_percentage indicates the percentage of a mid dynamic range among dynamic ranges of UHD broadcast content, which occupies the entire dynamic range of a receiver display.

upper_DR_transformation_curve_type identifies a dynamic range transformation curve used in an upper dynamic range. One of a linear curve, an exponential curve, an S-curve, a logarithmic curve, a combination curve and a look-up table (LUT) may be used as a transformation curve.

upper_DR_transformation_curve() indicates additional information according to a transformation curve identified by upper_DR_transformation_curve_type. For example, gradient information can be transmitted when a linear curve is used, information on a base can be transmitted when an exponential curve or a logarithmic curve is used, information about coordinates of an inflection point and a base and a y-intercept of each section can be transmitted when an S-curve is used, and information about an x-coordinate of each section, a curve type of each section and the corresponding graph can be transmitted when a combination curve is used.

upper_DR_percentage indicates the percentage of an upper dynamic range among dynamic ranges of UHD broadcast content, which occupies the entire dynamic range of a receiver display.

lower_DR_transformation_curve_type identifies a dynamic range transformation curve used in a lower dynamic range. One of a linear curve, an exponential curve, an S-curve, a logarithmic curve, a combination curve and a look-up table (LUT) may be used as a transformation curve.

lower_DR_transformation_curve() indicates additional information according to a transformation curve identified by lower_DR_transformation_curve_type. For example, gradient information can be transmitted when a linear curve is used, information on a base can be transmitted when an exponential curve or a logarithmic curve is used, information about coordinates of an inflection point and a base and a y-intercept of each section can be transmitted when an S-curve is used, and information about an x-coordinate of each section, a curve type of each section and the corresponding graph can be transmitted when a combination curve is used.

number_luminance_upper_bound_diff indicates the number of variables used to extend a mid dynamic range.

luminance_upper_bound_diff[i] indicates a difference value for constituting an (i+1)-th luminance value in UHD broadcast content. When a mid dynamic range is extended in a display which has a wider dynamic range than an existing dynamic range but cannot accommodate all dynamic ranges represented in UHD broadcast content (case 2), luminance_upper_bound can be changed to a value indicated by luminance_upper_bound + luminance-upper-bound-diff[0] + ... + luminance_upper_bound_diff[i].

luma_upper_value_diff[i] indicates a digital value corresponding to an (i+1)-th luminance value in UHD broadcast content. When a mid dynamic range is extended in a display which has a wider dynamic range than an existing dynamic range but cannot accommodate all dynamic ranges represented in UHD broadcast content (case 2), luma_upper_value can be changed to a value indicated by luma_upper_value + luma_upper_value_diff[0] + ... + luma_upper_value_diff[i].

upper_DR_transformation_curve_type[i] can identify a transformation curve used in a changed upper dynamic range when an (i+1)-th dynamic range is supported. That is, when a mid dynamic range is extended, upper_DR_transformation_curve_type[i] can identify a transformation curve used in an upper dynamic range changed according to the extended mid dynamic range.

upper_DR_transformation_curve() indicates additional information according to a transformation curve identified by upper-DR-transformation-curve-type[i]. That is, upper_DR_transformation_curve() indicates details of a transformation curve used in a changed upper dynamic range when an (i+1)-th dynamic range is supported.

upper_DR_percentage[i] indicates the percentage of a changed upper dynamic range, which occupies the entire dynamic range of a receiver display, when a mid dynamic range of UHD broadcast content is changed.

mid_DR_percentage[i] indicates the percentage of a changed mid dynamic range which occupies the entire dynamic range of a receiver display when a mid dynamic range of UHD broadcast content is changed.

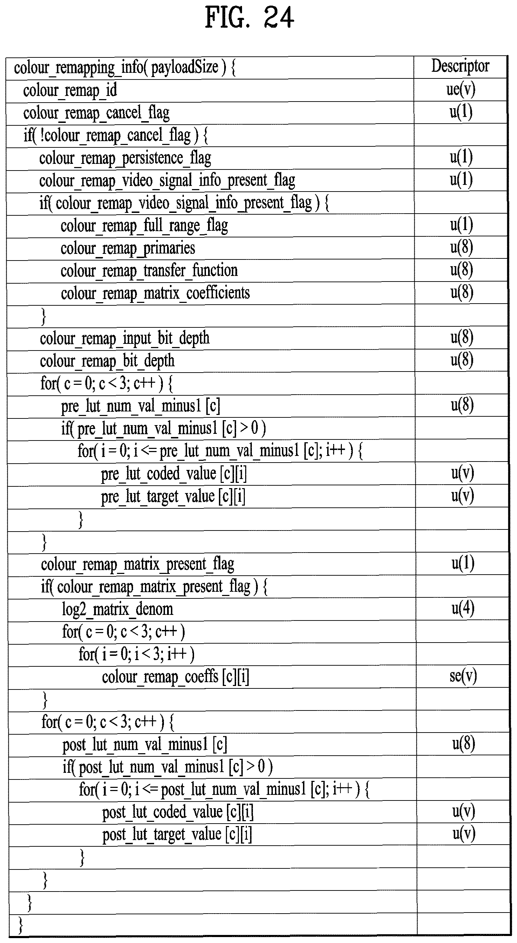

FIG. 24 illustrates a case in which an SEI message defined in HEVC according to an embodiment of the present invention is referenced. When color_gamut_mapping_info_type described in the lower part of FIG. 20 is set to 0x00, gamut_mapping_info() is not directly defined in HDR_video_info descriptor and the SEI message defined in HEVC can be referred to. Here, the SEI message can comply with a color remapping information SEI message syntax defined in HEVC.

When HDR_info_type is a channel, a program or content as common HDR metadata related to mastering display or video, referenced information can be used for the entire video (channel, program or content). When HDR_video_info_type is scene type or frame type as scene/frame HDR metadata, referenced information can be applied only to a corresponding section.

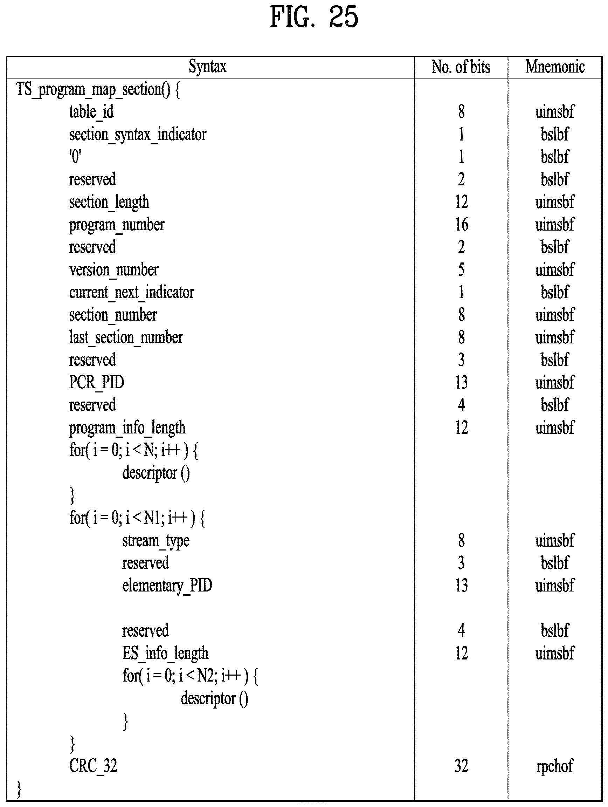

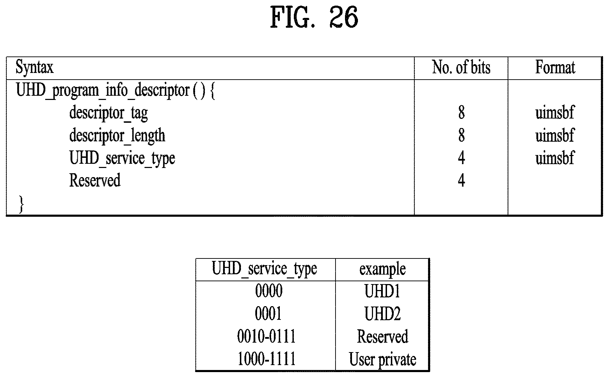

FIGS. 25 and 26 illustrate an embodiment of signaling HDR_info descriptor according to an embodiment of the present invention through a PMT. The PMT refers to a program mapping table and may include table ID information, section syntaxindicator information, section length information, program number information, version number information, current_next indicator information, section number information, PCR_PID information, program info length information, first descriptor information, stream type information, elementary PID information, elementary stream length (Es_info_length) information, second descriptor information, CRC information, etc. The first descriptor information can refer to descriptor information included in the first loop following the program info length information and the second descriptor information can refer to descriptor information included in the second loop following the Es_info_length information.

UHD_program_info_descriptor according to an embodiment of the present invention can be signaled by being included in the first descriptor information included in the PMT, and the aforementioned HDR_info descriptor can be signaled by being included in the second descriptor information included in the PMT.

UHD_program_info_descriptor may include at least one of descriptor_tag, descriptor_length and UHD_service_type as shown in the upper part of FIG. 26. Here, UHD_service_type can refer to the type of a UHD service as shown in the lower part of FIG. 26. For example, UHD_service_type can indicate a UHD service type designated by a user, such as UHD1(4K), UHD2(8K) or a type classified by quality. Various UHD services can be provided to a receiver through UHD_service_type. The present invention can indicate provision of HDR info regarding different stages or units such as video, scenes, clips or frames by setting UHD_service_type = 1100 (UHD1 service with HDR information metadata; an example of 4K).

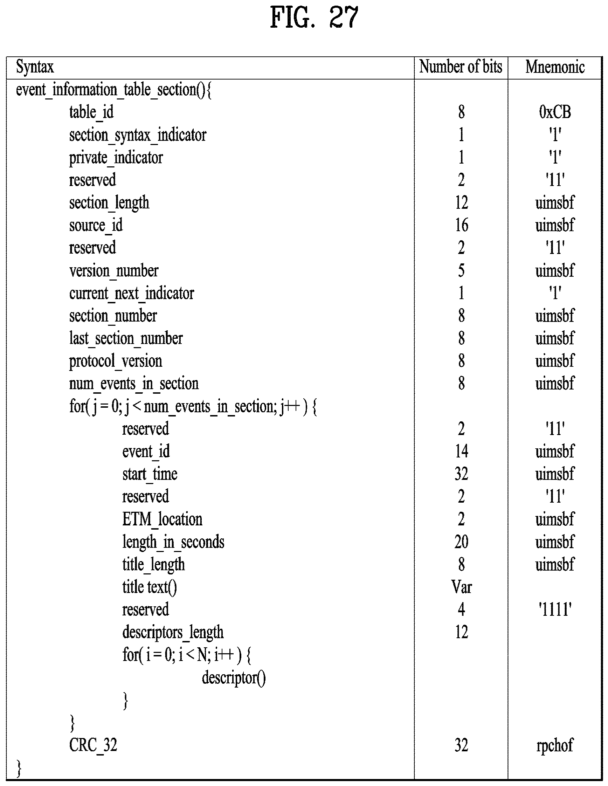

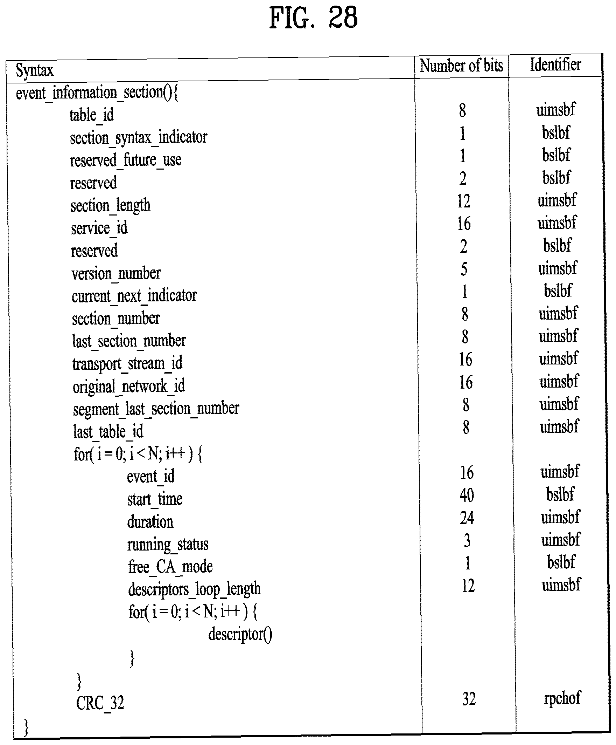

FIGS. 27 and 28 illustrate an embodiment of signaling HDR_info descriptor according to an embodiment of the present invention through an EIT. ATSC and DVB systems may include the EIT as a signaling table. Syntaxes included in the EIT are shown in FIGS. 27 and 28.

The EIT (Event Information Table) of ATSC and DVB systems according to an embodiment of the present invention may commonly include a table_id field, a section_syntax_indicator field, a section_length field, a source_id (service_id) field, a version_number field, a current_next_indicator field, a section_number field, a last_section_number field, a num_events_in_section (segment_last_section_number) field, an event_id field, a start_time field, a length_in_seconds (duration) field, a descriptors_length field, a descriptor() field and/or a CRC_32 field.

The table_id field indicates that the corresponding table is an EIT (Event Information Table). The section_syntax_indicator field is a 1-bit field which is set to 1 to indicate a long format of an MPEG-2 private_section table. The section_length field indicates the length of a table section following this field in bytes. The source_id field indicates a source ID of a virtual channel carrying an event described in the corresponding section. The version_number field is a 5-bit field indicating a version number of the table. The current_next_indicator field is a 1-bit field which indicates whether the table is currently applicable or applicable later. The section_number field indicates a section number. The last_section_number field identifies the number of the last section. The num_events_in_section field indicates the number of events included in the corresponding table section. The event_id field identifies a specific number indicating a described event. The start_time field indicates a start time of the corresponding event on the basis of GPS time in seconds. A value indicating a start time of an event may be greater than a value indicating an expiration time of an event which is being broadcast on a virtual channel. The expiration time of an event can be defined as the sum of the start time of the event and the duration of the event. The length_in_seconds (duration) field indicates a duration of an event in seconds. The descriptors_length field indicates the length of descriptor () described following this field. The descriptor() is a descriptor loop located within the table. The descriptor loop may include an additional descriptor. The EIT may include zero or more descriptors, and the relevant descriptor may correspond to an event level descriptor which describes information applied to each event. According to an embodiment of the present invention, UHD_program_info_descriptor and HDR_info descriptor can be included in the event level descriptor and delivered. UHD_program_info_descriptor may be used to identify a UHD service type. Whether HDR_info descriptor includes HDR video information metadata may be checked at the event level, and HDR_video_info descriptor may be used to determine whether a receiver can accommodate the HDR video information metadata. In the case of cable broadcast, the same information may be provided to an AEIT instead of the aforementioned descriptors.

The CRC_32 field includes a CRC value used to check data integrity. The CRC value can guarantee output of "0" from a register included in a decoder defined in Annex A of ISO-13818-1 "MPEG-2 Systems" after all EIT sections are processed.

When UHD_service_type of UHD_program_info_descriptor signaled through the EIT is set to 1100, the receiver can confirm that information about an appropriate viewing condition is delivered through metadata. For example, when UHD_service_type is 1100, the receiver can confirm that the corresponding service is UHD1 service with HDR video information metadata, 4K.

When UHD_service_type of UHD_program_info_descriptor signaled through the EIT is set to 0000, the receiver can check whether HDR_info_descriptor() is present and recognize provision of HDR info regarding different stages or units such as video, scenesor frames. Here, UHD_service_type of 0000 can indicate UHD1 service.

In the above case, it is possible to determine whether information in units of mastering display, content, scene or frame, which a content provider desires, can be used in a viewer's display using HDR_info_descriptor(). By using HDR_info_descriptor(), it is possible to predetermine whether content, scene or frame based metadata is used for content currently played or played later and a receiver can prepare setting for a situation such as scheduled recording.

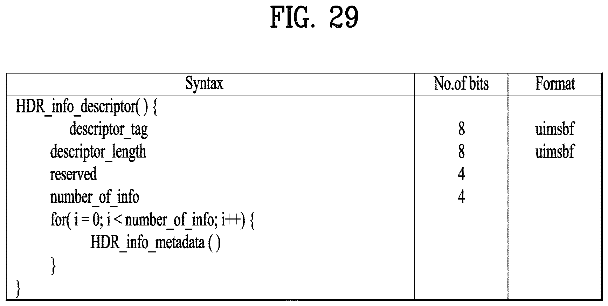

FIG. 29 illustrates HDR_info_descriptor() according to another embodiment of the present invention. A plurality of pieces of information may be present for one event. That is, information is not consistently applied to content but applied information can be changed according to time or presence/absence of inserted content. Alternatively, various modes intended by a producer may be supported for one piece of content. Here, it is necessary to determine whether a receiver display can accommodate such modes, and information thereabout can be provided by a broadcast transmission device through viewing_condition_metadata. A syntax in viewing_condition_metadata can comply with the definition of the viewing condition descriptor of the SEI message.

HDR_info_descriptor may include at least one of descriptor_tag, descriptor_length and number_of_info as shown in the upper part of FIG. 29. HDR_info_descriptor may include a loop and can include as many pieces of HDR_info_metadata() as the number indicated by number_of_info. The syntax of HDR_info_metadata()may deliver the script or part thereof of the HDR information descriptor configuration of FIG. 17.

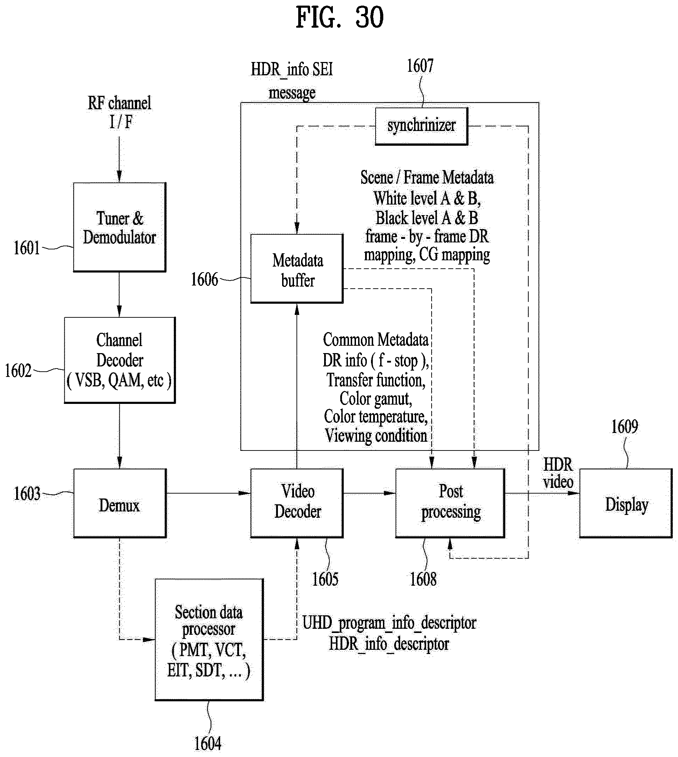

FIG. 30 is a block diagram of a receiver, which illustrates an operation method according to an embodiment of the present invention. When HDR information is transmitted through the aforementioned method, the receiver analyzes a signal and applies information to HDR video on the basis of the analyzed signal through the following process.

The receiver according to an embodiment of the present invention may receive a broadcast signal from a radio frequency (RF) channel using a tuner and a demodulator 1601. The broadcast signal may be received through other paths (not shown) as well as an RF channel. For example, the broadcast signal can be received through IP based broadcast/communication, wired/wireless communication and wired/wireless interfaces. Further, the broadcast signal and metadata which will be described below may be received through different paths. The metadata which will be described below may be transmitted and received through other paths (e.g., IP based broadcast/communication, wired/wireless communication, wired/wireless interfaces, short-range wireless communication, etc.) as well as broadcast signals.

The receiver may decode the received broadcast signal using a channel decoder 1602. Here, the channel decoder may decode the broadcast signal using VSB or QAM. The decoded broadcast signal may be demultiplexed into broadcast content data and signaling data by a demultiplexer 1603. The broadcast content data may include HDR video data and may be decoded by a video decoder 1605. The signaling data may include information about the broadcast content data and include a signaling table or signaling information such as a PMT, a VCT, an EIT or an SDT according to an embodiment. The receiver may extract UHD_program_info_descriptor from the signaling information (e.g., a PMT) using a section data processor 1604.

The receiver checks whether there are additional services or media that the receiver needs to additionally receive in order to constitute original UHDTV broadcast using UHD_program_info_descriptor. In an embodiment of the present invention, the receiver can recognize presence of additional information through an SEI message upon reception of UHD_service_type = 1100. Alternatively, the receiver can recognize presence of video related additional information through an SEI message using an EIT upon receiving UHD_service_type = 0000(8K is 0001).

Upon confirmation of presence of additional information, the receiver can recognize whether a range to which the additional information is applied is a channel, a program, content, a scene, a clip or a frame on the basis of the HDR information SEI message or HDR_info_type. In addition, HDR_info_descriptor() can include information about the start time and expiration time of the additional information for synchronization of the additional information range for each case. In an embodiment, sync_info_type, sync_start and sync_duration which are information for synchronization on the basis of a video frame are used. Further, HDR_info_descriptor() can include transition_flag indicating HDR end time.

When HDR_video_info_type is information applied to entire content, signaling information can signal whether information in units of scene, clip or frame is additionally provided through HDR_video_enhancement_info_present_type. Accordingly, the receiver can recognize that information in units of scene, clip or frame is provided in advance and prepare settings for metadata processing in units of scene, flip or frame and HDR video quality enhancement.

The receiver may recognize the type of information regarding high contrast or information representing luminance as information capable or representing a dynamic range through signaling information using dynamic_range_info_type. For example, dynamic_range_info_type can indicate an aspect ratio and f-stop as high contrast information and indicate peak luminance and minimum luminance as luminance information. A value according to each type may be delivered to the receiver through dynamic_range_info_value[i]. Particularly, according to an embodiment of the present invention, dynamic ranges according to characteristics of content, mastering display, a frame and a scene can be represented, and luminance can be subdivided and represented through dynamic_range_info_type. In addition, the receiver can recognize an EOTF type, a color gamut type and a color temperature type used for color encoding through transfer_function_type, color_gamut_type and color_temperature_type.

HDR_info_descriptor() is additional information which provides dynamic range mapping, color gamut mapping and viewing condition information to the receiver. When various additional information provision methods are available, an SEI message defined in HEVC or a predetermined SEI message may be designated for each method through dynamic_range_mapping_info_type, color_gamut_mapping_info_type and viewing_condition_info_type. When additional information is directly defined in HDR_info descriptor, the receiver can recognize detailed information through dynamic_range_mapping_info(), color_gamut_mapping_info() and viewing_condition_info().

The aforementioned signaling information may be stored in a metadata processor 1606 of the receiver. The stored signaling information may be updated when the aforementioned set number or version is changed. The receiver may synchronize video quality enhancement information (signaling information) stored in the metadata processor 1606 with video data using a synchronizer 1607 such that the video quality enhancement information can be applied to the video data according to an application unit.

The receiver may deliver dynamic range information in units of content, scene or frame to an HDR algorithm or a video quality enhancement unit such as an existing post processor 1608 (post-processing module) on the basis of information provided thereto, to achieve video quality enhancement. In addition, when there is detailed information related to dynamic range mapping, color gamut mapping and viewing condition information, the receiver may directly connect related modules such as tone mapping, color mapping, color correction and white balance modules to achieve video quality enhancement. If video processing is performed in a linear luminance domain in the receiver, EOTF recognized through transfer_function_type can be applied.

The receiver may display post-processed HDR video through a display unit 1609 to provide the HDR video to a user.

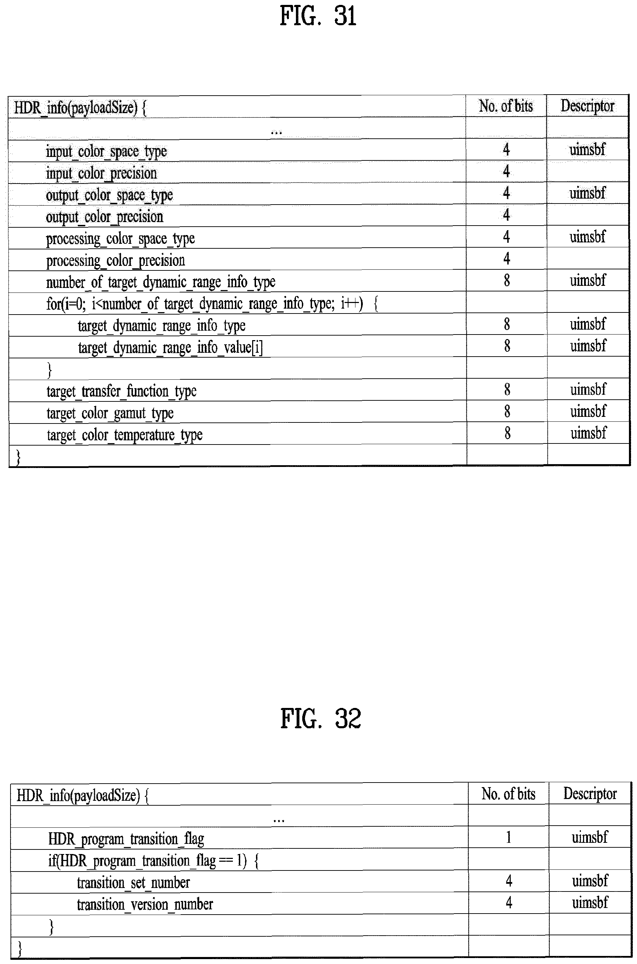

FIG. 31 illustrates an HDR information descriptor according to an embodiment of the present invention. To correctly apply HDR information proposed by the present invention, an input video format and an output video format need to be described in detail. That is, a broadcast signal transmission device may additionally signal information about video formats applied before and after processing of video data such that a broadcast signal reception device can perform more accurate color mapping. The shown information may be additionally included in the corresponding descriptor together with the information included in the HDR information descriptor described above with reference to FIG. 17. The shown information may be equally applied to processing of all HDR videos in an SEI message as in the present embodiment. Furthermore, the information may be defined for each type of HDR video processing, for example, color gamut mapping and dynamic range mapping to define different input/output properties.

Input-color-space-type information indicates a color gamut criterion among information about an image which is an HDR video processing target delivered in the present invention. As a color gamut criterion, RGB, YCbCr, xvYCC, XYZ or the like may be used. That is, the input color space type information may indicate RGB when set to 0000, indicate YCbCr when set to 0001, indicate xvYCC when set to 0010 and indicate XYZ when set to 0011. Values of the input_color_space_type information, 0100 to 1111, may be reserved for future use. The input_color_space_type information may be used along with color_gamut_type information. For example, when the input_color_space_type information indicates RGB and the color_gamut_type information indicates BT.2020 constant luminance, the information may indicate that the corresponding image is expressed in RGB based on BT.2020 CL.

Input_color_precision information indicates color expression precision and may be used in association with the input_color_space_type information as necessary. For example, in the case of RGB, the same color can be expressed with different precisions such as 10 bits, 12 bits and 14 bits. When a color needs to be expressed with a floating point, the input_color_precision information can indicate precision corresponding to digits after a decimal point.

Output_color_space_type information is opposite of the input_color_space_type information and indicates a final color gamut criterion targeted after HDR video processing. As a color gamut criterion, RGB, YCbCr, xvYCC, XYZ or the like may be used. That is, the output_color_space_type information may indicate RGB when set to 0000, indicate YCbCr when set to 0001, indicate xvYCC when set to 0010 and indicate XYZ when set to 0011. Values of the output_color_space_type information, 0100 to 1111, may be reserved for future use. Output_color_precision information indicates color expression precision and may be used in association with the output_color_space_type information as necessary. Embodiments with respect to the output_color_precision information may be applied in the same manner as embodiments with respect to the input_color_precision information. Processing_color_space_type information indicates a color space in which HDR video processing is performed. While a neutral color space such as XYZ may be used in general, a specific color space may be designated and used. As a processing color space, XYZ, YCbCr (BT.2020, non-CL), YCbCr (BT.2020, CL), CIE L*a*b* and YUV may be used. That is, XYZ may be set as a color space type when the processing_color_space_type information is set to 0000, YCbCr (BT.2020, non-CL) may be set as a color space type when the processing_color_space_type information is set to 0001, YCbCr (BT.2020, CL) may be set as a color space type when the processing_color_space_type information is set to 0010, CIE L*a*b* may be set as a color space type when the processing_color_space_type information is set to 0011 and YUV may be set as a color space type when the processing_color_space_type information is set to 0100.

Processing_color_precision information indicates color expression precision and may be used in association with the processing_color_space_type information as necessary. Embodiments with respect to the processing_color_precision information may be applied in the same manner as embodiments with respect to the input_color_precision information.

The HDR information descriptor may further include target information. For the dynamic range information, the target information indicates information about a result which is a target when image enhancement of a corresponding frame/scene is achieved through the HDR information descriptor. Here, the target may be a video format or a targeted display.

Target information may include the following elements. Number_of_target_dynamic_range_info_type information indicates the number of target dynamic range information types. Target_dynamic_range_info_type information defines the type of dynamic range information which is a target of HDR video processing. Target_dynamic_range_info_value information indicates a specific value of information defined by the target_dynamic_range_info_type information. Target_transfer_function_type, target-Color-gamut-type and target_color_temperature_type respectively indicate information about a type of a target transfer function, a type of a color gamut, and a type of a color temperature. This information may have meanings corresponding to the aforementioned number_of_dynamic_range_info_type, dynamic_range_info_type, dynamic_range_info_value, transfer-function-type, color_gamut_type and color_temperature_type. Here, previously defined values indicate a dynamic range, a color gamut and a transfer function of an image which is a target of HDR video processing.

FIG. 32 illustrates an HDR information descriptor according to an embodiment of the present invention. The shown information may be additionally included in the corresponding descriptor together with the information included in the HDR information descriptor described above with reference to FIG. 17. The HDR information descriptor may further include HDR program transition flag information, transition set number information and transition version number information. The HDR transition flag information HDR_program_transition_flag indicates a major change in the HDR information descriptor. For example, the HDR_program_transition_flag may indicate termination of current HDR program/content when set to 1. Further, the HDR_program_transition_flag may indicate a change in HDR content, a change in an applied HDR information type, and the like when set to 1. A broadcast transmission device may indicate that the HDR information descriptor and HDR content/program have changed by setting the HDR_program_transition_flag to 1 for predetermined frames/time after generation of the changes. Otherwise, the broadcast transmission device may indicate that the HDR information descriptor and HDR content/program will change after predetermined frames/time by setting the HDR_program_transition_flag to 1 for the predetermined frames/time before generation of the changes. When this flag is signaled, a condition that a corresponding SEI message must be referred to in order to apply major change may be appended. Such signaling may be performed at a system level or a service level as well as a video level as necessary. Transition_set_number information and transition_version_number information may be transmitted as additional information for signaling properties of changed HDR content/programs. For example, it is possible to signal an HDR system used for HDR content/programs which have changed or will change or to signal set_number information related to a current target when information about a plurality of HDR targets is present, through the transition_set_number information. In addition to the transition_set_number information, the transition_version_number information may be provided as information about the next HDR content/program. Links with respect to various types of information may be provided as necessary. For example, set_number information and version_number information corresponding to 1000nit/500nit/100nit target displays may be provided.

In regard to the HDR transition flag information, the transition_flag information described above with reference to FIG. 17 may be used in the following manner. The meaning of the transition_flag information may be extended to indicate a major change in the HDR information descriptor. That is, the transition_flag information may be used in such a manner that the transition_flag information indicates termination of an HDR information descriptor corresponding to the current program when set to 1 and thus represents that SDR starts, another HDR program starts or another type of metadata is applied. A specific meaning and method of signaling may conform to HDR_program_transition_flag. Here, the transition_flag information may be used alone or may be used in association with HDR_program_transition_flag information. For example, the transition_flag information may be signaled at the end time of the corresponding HDR information descriptor (HDR content end time) and the HDR_program_transition_flag information may be signaled at the start time of the next HDR content.

In regard to the HDR transition flag information, the meaning of the set_number information described above with reference to FIG. 17 may be extended and used. The meaning of the set_number information may be extended to indicate a major change in the HDR information descriptor. That is, different set numbers may be designated to the HDR information descriptor according to program/content/channel. In this case, the set_number information can indicate that the HDR information descriptor has changed, HDR content is terminated and new HDR content is started. Further, the set_number information may be set such that it has a fixed value for a specific HDR information descriptor. For example, when different parameters can be delivered depending on HDR systems, the HDR systems may be discriminated using the set_number information.

In regard to the HDR transition flag information, the meaning of the version_number information described above with reference to FIG. 17 may be extended and used. The meaning of the version_number information may be extended to indicate a major change in the HDR information descriptor. That is, a broadcast transmission device may assign a changed version number when the HDR information descriptor changes such that a broadcast reception device mandatorily refers to the new HDR information descriptor from a frame to which the changed HDR information descriptor is applied. The version_number information may be used in a case in which a program/content changes within a channel, that is, current HDR content changes to another type of HDR content, as well as a case in which a frame/scene changes within a program. Here, the broadcast transmission device may assign and signal a specific version number to indicate a major change such as program/content change.

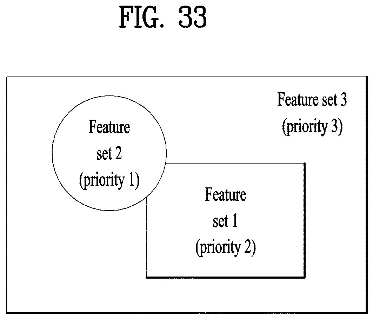

FIG. 33 illustrates a case in which a region in a frame is divided according to a feature set according to an embodiment of the present invention. Here, the frame may refer to an entire region range including all pixels in a picture configuring an image and, in some embodiments, may be referred to as a window. Dynamic metadata may be information that indicates a feature of frame/scene that is changed over time. In this regard, different metadata processing methods according to a predetermined feature may also be applied to one frame. For example, when a dark area and a light area are present together in a frame, different processing methods may be to respective areas to maximize an effect of an HDR image. In this case, a transmitter end may transmit characteristics for identifying each feature and transmit different processing methods of the respective areas. A receiver end may area-adaptively perform processing based on the received featuring characteristics or processing methods for the respective area. Here, the area may refer to a single area defined in a closed curve or refer to a set of at least one area with the same or similar features. For example, as illustrated, three areas configuring one frame may be present. The three areas may have different features. Here, overlapped portions may be present between different areas. In this case, priority of the areas may be determined and the areas may be processed. The priority of the respective areas may be determined by an image manufacturer and may be obtained by applying manufacturer's intention. For example, as illustrated, feature set 1 and feature set 2 may be overlapped. In this case, feature set 2 with priority 1 has higher priority and, thus, feature set 2 may be applied to the overlapped area. In addition, when areas are determined, the areas may be determined in such a way that a union of sets of the areas equals to an entire frame to perform processing on all the areas. That is, in the entire frame, there is no area that is excluded from area determination and is not processed. Needless to say, in this case, it may also be necessary to transmit a signal indicating that processing is not intentionally performed. As described above, as a reference for determining or identifying areas, a position, a color feature, a luminance feature, or the like may be used. In addition, when tracking of a specific object is supported, the corresponding object may be determined as an area. In this case, when the corresponding object is moved in a frame, the determined area may also be moved together.

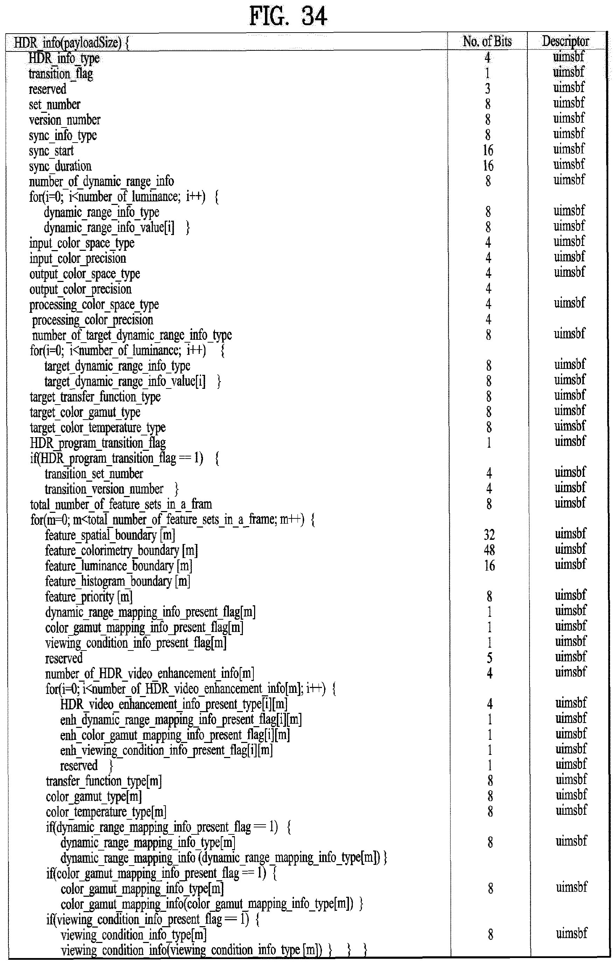

FIG. 34 is a diagram showing information for signaling HDR information and a feature set according to an embodiment of the present invention. One frame may be divided into feature sets corresponding to a plurality of areas and different processing methods may be applied to the respective areas according to the features. To this end, features of feature sets for the respective areas may be determined and information items matched with the features may be listed. The drawing illustrates the case in which information items are described in parallel in one piece of metadata. That is, like dynamic range mapping information, color gamut mapping information, and viewing condition information obtained by excluding information applied to the entire frame, such as HDR information type, transition_flag, set number, version number, sync information, and input/output/processing color space type, a processing procedure according to a feature set may be transmitted in parallel. As a reference for identifying a feature set, a position, color, luminance, a histogram, and the like may be considered and, a set may be defined as an intersection thereof. When a plurality of feature sets are applied to the same frame, HDR information may include the following fields.

A total_number_of_feature_sets_in_a_frame field may indicate the number of feature sets defined in a frame. When an area is not defined, the corresponding field may be determined as 1.

A feature_spatial_boundary field may directly indicate an area position as one of references for determining a feature set. The area position may be indicated with x and y indexes, in general. For example, when an area shape is a rectangle, the area position may be indicated by starting point coordinates (x, y) and ending point coordinates (x+N, y+M). Alternatively, the area position may be indicated with a starting point and side lengths N and M. When an area shape is a circle, the area position may be indicated with a central portion and diameter of the circle. When the field has a specific value, this may indicate that the field is not used. A detailed embodiment thereof will be described below with reference to the following drawings.

A feature_colorimetry_boundary field may determine an area with specific color as one of references for determining a feature set. In general, RGB colorimetry may be indicated with CIE xy coordinates. Alternatively, RGB colorimetry may be indicated with center coordinates and a circle (or sphere) diameter in a color space or the field may determine an arbitrary range. When the field has a specific value, this may indicate that the field is not used.

A feature_luminance_boundary field may determine an area with specific luminance as one of references for determining a feature set. The field may indicate a luminance range corresponding to a range between maximum and minimum values of luminance or a luminance range that is summed or subtracted (+-) based on specific luminance. When the field has a specific value, this may indicate that the field is not used.

A feature_histogram_boundary field may be used to define areas according to a histogram feature as one of references for determining a feature set. For example, the field may transmit central luminance (or digital value) information of boundary information of a portion with local maximum of an image histogram. In this case, the histogram may transmit luminance distribution of luminance, a specific channel of RGB, or information thereof to determine a feature. When the field has a specific value, this may indicate that the field is not used.

A feature_priority field may indicate priority that is applied when areas defined by feature sets are overlapped. As in the aforementioned embodiment, different priorities may be applied to all feature sets and a plurality of feature sets may have the same priority. When a corresponding field is 0, the field may be determined in such a way that processing such as blending is performed on the overlapped area. In addition to the aforementioned parts, parts associated with boundary processing between defined areas may be added.

For processing according to different pieces of metadata on areas in a frame, a feature for defining an area in the frame needs to be transmitted. In this case, as defined in the above drawings, signaling of different categories such as spatial, colorimetry, luminance, color volume, and histogram may be considered. In addition, one area may be defined as an intersection of at least two categories. For example, a rectangular area may be determined by a spatial boundary field and an area with specific color may be determined by the colorimetry boundary field in the rectangular area. That is, an area that simultaneously satisfies determined areas that are determined by the spatial boundary field and the colorimetry boundary field, respectively, may correspond to a specific feature set. One or more signaling methods of respective categories may be used and the following signaling may be considered as a detailed embodiment of each category.

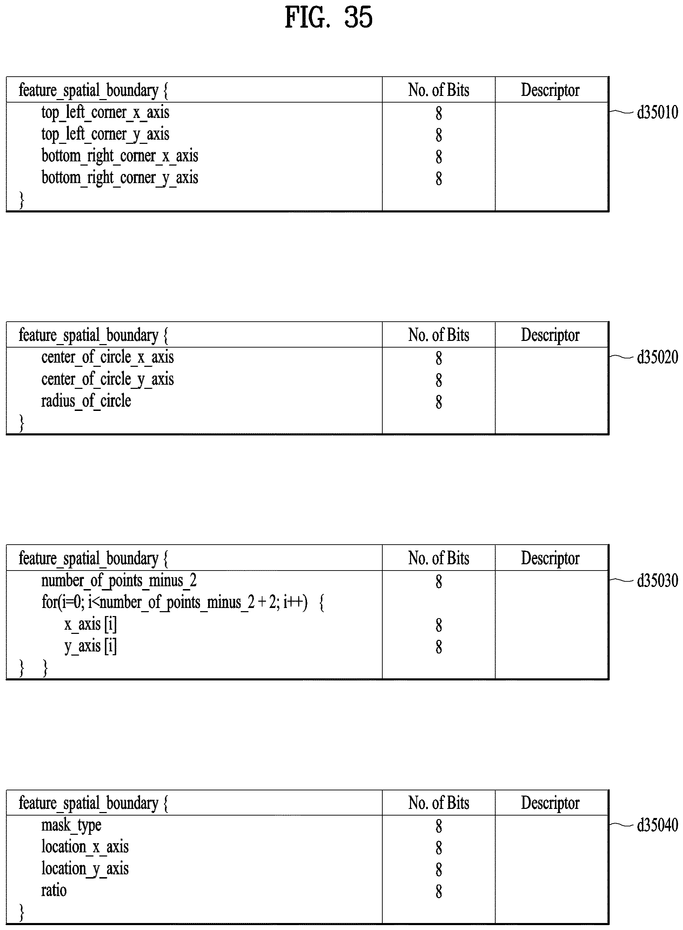

FIG. 35 is a diagram showing a spatial boundary field for determining a spatial area according to an embodiment of the present invention. As a method of determining a spatial area, signaling for a predetermined area in a frame may be considered. As a first method, a rectangular area may be determined as the spatial area (d35010). The spatial boundary field may signal vertexes of the rectangular area and signal points of a top left corner and a bottom right corner via more effective signaling, as illustrated. In the drawing, top_left_corner_x_axis and top_left_corner_y_axis may indicate x and y coordinates of a vertex of the top left corner of the rectangle, respectively. Similarly, bottom-right-comer x-axis and bottom_right_corner_y_axis may indicate x and y coordinates of a vertex of the bottom right corner of the rectangle, respectively. When an area is signaled using a method illustrated in d35010, an area containing an internal portion of a rectangle determined by two diagonally opposite corners of the rectangle.

As a second method, when a circular area but not a rectangle is determined, an area included in the circle may be determined as the spatial area. In this case, the spatial boundary field may signal information on circle center coordinates (center_of_circle_x_axis, center_of_circle_y_axis) and a circle radius (radius_of_circle) (d35020). When an area is signaled using the method, the area may be considered to include all pixels included in the circle.

As a third method, a well known figure such as an ellipse as well as the aforementioned rectangle and circle may be considered. In the case of signaling of an arbitrary polygon, the number of vertexes of a polygon (number_of_points_minus_2) and a position of each vertex (x_axis [i], y_axis [i]) may be signaled as illustrated in d35030. In this case, to form a polygon, the minimum of vertexes may be three. A number_of_points_minus_2 field may also signal a number that is smaller than the number of actual vertexes of the polygon by 2. For example, when the number_of_points_minus_2 field is 2, the aforementioned rectangular shape may be signaled. As such, when an arbitrary polygon is signaled, the area may be considered to refer to an area inside the polygon configured using all points contained in the corresponding polygon.

As a fourth method, a predetermined or pre-transmitted area may be used as another signaling method with respect to an arbitrary polygon. In this case, as illustrated in d35040, an area with a predetermined shape may be determined via information such as a mask type (mask_type), a start or central location of a mask (location_x_axis, location_y_axis), and a mask size (ratio: a ratio based on a reference size). In this case, a mask type may use a predetermined or pre-transmitted area. Detailed information on an area shape according to a mask type may use information that is pre-transmitted via static metadata or previous frame information or a mask may be transmitted directly to pixel data.

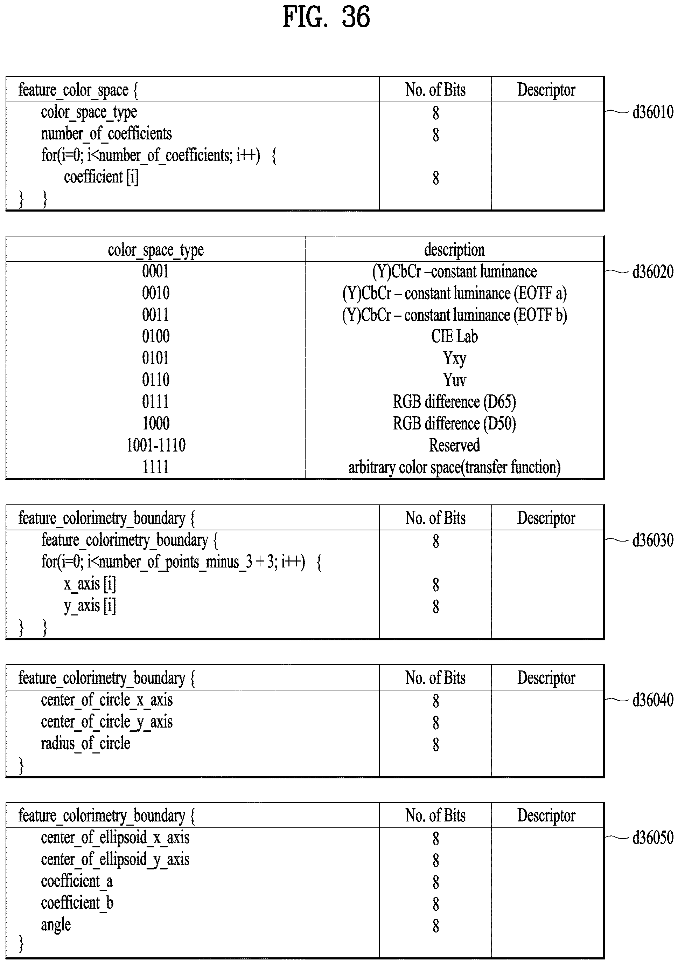

FIG. 36 is a diagram showing a colorimetry boundary field for determining a spatial area according to an embodiment of the present invention. To determine an area corresponding to a feature set, HDR information may also determine a color range on a chromaticity plane. In general, a chromaticity plane based on a color space that is basically used in an image may be used. However, as necessary, a color range on a specific chromaticity plane intended by a manufacturer may be considered. To signal a color range on a specific chromaticity plane intended by a manufacturer, the corresponding chromaticity plane needs to be signaled. In this case, as illustrated in d36010, a specific color space type (color_space_type) and a transfer function (coefficient [i]) if necessary may be provided. Here, a color space type may use a color space such as YCbCr, Lab, and Yuv, as illustrated in d36020. In addition, the color space may be divided according to a reference such as a luminance expression method (linear and non-linear), a luminance transfer function (EOTF a and EOTF b), and a central color temperature (D65 and D50). In some embodiments, an arbitrary color space but not a pre-defined color space may be used and, in this case, may be defined via a transfer function into an arbitrary color space from a neutral color space such as XYZ.

As a color set in a predetermined range in a predetermined color space after color coordinates for determining a color range are determined, a color range may be considered. In this case, a color range may be determined as an arbitrary polygon, circle, ellipse, or the like on a color coordinate. In the case of a polygon, as illustrated in d36030, a color area in a polygon determined through a vertex coordinate value (x_axis[i], y_axis[i]) according to the number of points (number_of_points_minus_3) may be defined. Detailed area determination is the same as in the above description of the previous drawings.

As illustrated in d36040, a color area may be signaled as a color set in a predetermined radius based on specific color coordinates (center_of_circle_x_axis, center_of_circle_y_axis).

Similarly, as illustrated in d36050, a color area may be defined as an ellipse shape (coefficient_a, coefficient_b) based on an axis with a predetermined angle with respect to specific color coordinates (center_of_ellipsoid_x_axis, center_of_ellipsoid_y_axis).

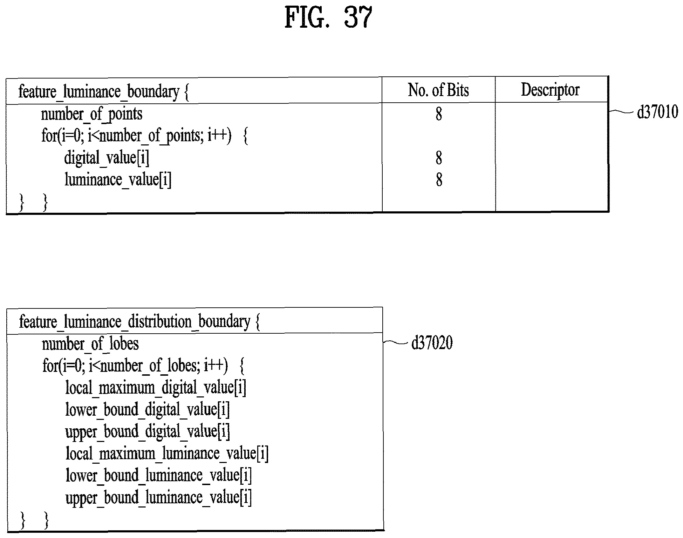

FIG. 37 is a diagram showing a luminance boundary field and a luminance distribution boundary field for determining a spatial area according to an embodiment of the present invention. To determine an area corresponding to a feature set, HDR information may determine a luminance boundary or determine luminance distribution in an image. The luminance boundary field may determine an area as a luminance boundary as illustrated in d37010. Assuming that pixel luminance is present on a line formed by connecting opposite ends of black and white, a luminance range may be defined using points on the corresponding line. In this case, luminance may be represented with a digital value (digital_value) indicating relative distribution of luminance or represented with an absolute luminance value (luminance_value).

The luminance distribution boundary field may determine an area as luminance distribution as illustrated in d37020. As another method of discriminating a feature according to a luminance range, luminance distribution in an image may be used. In this case, a upper luminance limit (upper_bound) and a lower luminance limit (lower_bound) may be determined based on luminance (local_maximum) of a point at which luminance is significantly distributed to discriminate a luminance range. That is, an upper limit and a lower limit may be signaled based on reference luminance. Here, each of field values may be a digital value (digital_value) or an absolute luminance value (luminance_value) indicating relative distribution of luminance and, as necessary, may use both the two values as illustrated in the drawing. In the present invention, although a range is determined based on histogram distribution as a representative example of luminance distribution, another type of distribution such as luminance cumulative distribution may be used in some embodiments.

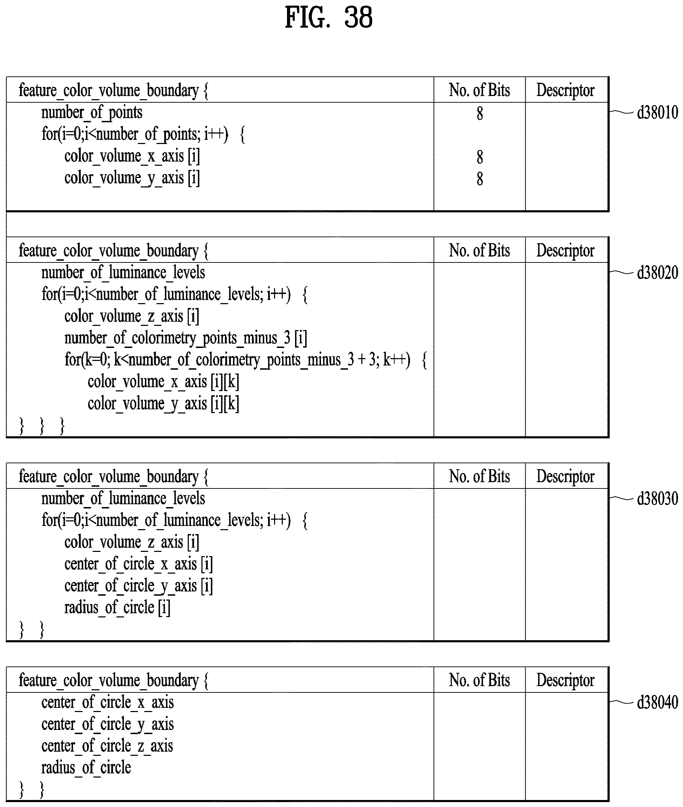

FIG. 38 is a diagram showing a color volume boundary field for determining a spatial area according to an embodiment of the present invention. An area corresponding to a feature set may be defined in one color space. That is, differently from the aforementioned embodiment, a color area and a luminance region may be defined in one color space. In this case, when a color space with a color volume defined therein needs to be separately defined, the aforementioned feature_color_space may be used.

As a method of defining a color volume in a color space, a vertex of a polyhedron may be defined. Here, as illustrated in d38010, a polyhedron may be defined through the number of vertexes (number_of_points) and coordinates of each vertex (color_volume_x_axis, color_volume_y_axis). That is, color included in the defined polyhedron in a color space may be determined as a necessary area of a color volume.

Then, another method of determining a range in a color volume, a method of defining colorimetry according to a luminance stage may be considered as illustrated in d38020. For example, when color (hue and saturation) and luminance (intensity) are discriminated as in hue saturation intensity (HSI) color space, each of hue, saturation, and intensity may correspond to each axis on a xyz coordinate plane. In this case, a luminance stage (color_volume_z_axis) may be divided into levels corresponding to respective predetermined numbers (number_of_luminance_levels) and color coordinates (color_volume_x_axis, color_volume_y_axis) of a polygon according to each luminance stage may be defined. That is, colorimetry according to a luminance level may be defined and each interlayer may define a color volume via interpolation. In other words, a color boundary (color volume) to be defined in a color space may be represented through at least one color boundary defined for at least one luminance section discriminated in a color space. For example, a first color boundary may be signaled for a first luminance section in a color space and a second color boundary may be signal for a second luminance section to represent a color boundary that is differently defined for each luminance section. Signaling of the color boundary may be defined for an entire frame and, in some embodiments, may be defined for a plurality of areas configuring one frame. Here, the frame may refer to an entire area range including all pixels in a picture configuring an image and, in some embodiments, may also be referred to as a window.

As another example of color volume signaling according to luminance level discrimination, colorimetry may be signaled in the form of a circle as illustrated in d38030. That is, a radius (radius_of_circle) predicted to contain similar color to color coordinates (center_of_circle_x_axis, center_of_circle_y_axis) of central color may be signaled with respect to a color plane defined in a discriminated luminance value (color_volume_z_axis) and a color inter-plane may provide information on an entire color volume via interpolation.

As a method of signaling a boundary of specific color in specific luminance in a color volume, color volume information may be provided using a method of signaling a radius (radius_of_circle) of similar color based on target color coordinates (center_of_circle_x_axis, center_of_circle_y_axis, center_of_circle_z_axis) and target color as illustrated in d38040. In this case, a color volume may be defined as inside of a sphere having a radius with similar color based on corresponding color coordinates.

In addition to the aforementioned method, an ellipse or a stereoscopic figure based on an ellipse on a color plane may be considered as a color volume. In general, a similar color/luminance group may be present in a predetermined range of central color and, in this case, when different weights according to directivity are required, an ellipse or an elliptic stereoscopic figure may be used.

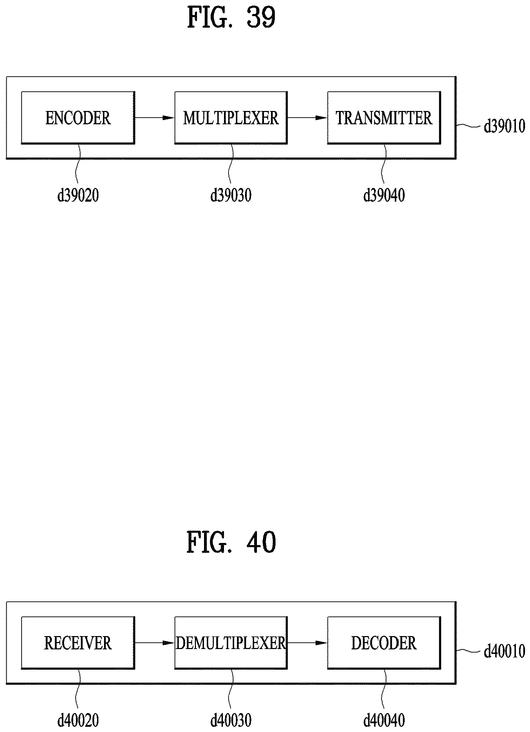

FIG. 39 is a block diagram showing a broadcast transmission device according to an embodiment of the present invention. A broadcast transmission device d39010 according to the present invention may include an encoder d39020, a multiplexer d39030, and/or a transmitter d39040.

Resolution of audio data input to the broadcast transmission device d39010 may be UHD. Metadata input to the broadcast transmission device d39010 may include image quality enhancement metadata of UHD video. The image quality enhancement metadata may be transmitted in an SEI message that is transmitted with video data. As described above with reference to FIGS. 17 to 38, image quality enhancement metadata may include an HDR information descriptor (HDR_info_descriptor) and include information required to enhance image quality of UHD video. The information required to enhance image quality of UHD video may be applied in units of entire content (channel, program, and content), scene, clip, or frame and may include together commonly applied information applied to the entire content and partially applied information applied in units of scene, clip, or frame. In addition, HDR_info_descriptor() may include transition_flag information indicating an end time of HDR.

As described above, the HDR information descriptor may include processing color space type information and processing color accuracy information of a processing operation for image quality enhancement. In addition thereto, the HDR information descriptor may further include input color space type information and input color accuracy information prior to the processing operation, and output color space type information and input color accuracy information after the processing operation. The HDR information descriptor may also include information on a dynamic range, a transformation function type, color gamut, and a color temperature type that are targeted by image quality enhancement processing. In addition, the HDR information may include HDR program transition flag information indicating that HDR content or HDR information is supposed to be changed and set number information and version number information that are targeted by transition thereof.

The HDR information descriptor may discriminate a plurality of areas included in a frame and may include feature set information corresponding to each area. The feature set information may apply different metadata processing methods to the respective areas in the same frame. Each feature set may be discriminated by an area position or discriminated by color in a predetermined range in a color space. A feature set may be discriminated by a luminance range or luminance distribution. In addition, the feature set may also be discriminated by at least one of the aforementioned location, color, luminance range, or luminance distribution in a color volume discriminated by a polyhedron defined in a color space. The HDR information descriptor may include information for discriminating the aforementioned feature set and, for example, may include at least one of spatial boundary information, colorimetry boundary information, luminance boundary information, luminance distribution boundary information, or color volume boundary information. A detailed description of the information is the same as the above description of FIGs. 35 to 38.

The video data input to the broadcast transmission device d39010 may be encoded by the encoder d39020. A transmission end may use high efficiency video coding (HEVC) as an encoding method of the video data. The transmission end may synchronize the encoded video data and image quality enhancement metadata and multiplex the encoded video data and the image quality enhancement metadata using the multiplexer d39030. The image quality enhancement metadata may further include synchronization information. The image quality enhancement metadata may include synchronization information such as a time, a time difference, a timing order, POC, PTS, and the number of accumulated frames according to a synchronization method.

The transmitter d39040 may transmit a transport stream output from the multiplexer d39030 as a broadcast signal. Here, the transport stream may be transmitted as a broadcast signal after channel coding and modulation prior to transmission. According to another embodiment of the present invention, the metadata may also be transmitted through another path (e.g., IP-based broadcast/communication, wired/wireless communication, a wired/wireless interface, and short-distance wireless communication) as well as a broadcast signal. In addition, the metadata may also be transmitted through a separate path from video data.

FIG. 40 is a block diagram showing a broadcast reception device according to an embodiment of the present invention. A broadcast reception device d40010 according to the present invention may include a receiver d40020, a demultiplexer d40030, and/or a decoder d40040.

The broadcast signal received by the receiver d40020 may be demodulated and then, channel-decoded. The channel-decoded broadcast signal may be input to the demultiplexer d40030 and demultiplexed to a video stream and image quality enhancement metadata. The metadata may also be received through another path (e.g., IP-based broadcast/communication, wired/wireless communication, a wired/wireless interface, and short-distance wireless communication) as well as a broadcast signal. Output of the demultiplexer may be input to the decoder d40040. The decoder may include a video decoder and a metadata processor. That is, the video stream may be decoded by the video decoder and the image quality enhancement metadata may be decoded by the metadata processor. Each of the decoded video stream and the image quality enhancement metadata may be used to enhance UHD video image quality by the post processor as described above with reference to FIG. 19. The receiver may post-process the decoded video data based on the image quality enhancement metadata to obtain an effect of enhancing image quality of video data with respect to at least one of HDR or WCG. The image quality enhancement metadata may include an HDR information descriptor as described above and the HDR information descriptor may include processing color space type information and processing color accuracy information of a processing operation for enhancing image quality, as described above. In addition thereto, the HDR information descriptor may further include input color space type information and input color accuracy information prior to the processing operation, and output color space type information and input color accuracy information after the processing operation. The HDR information descriptor may also include information on a dynamic range, a transformation function type, color gamut, and a color temperature type that are targeted by image quality enhancement processing. In addition, the HDR information may include HDR program transition flag information indicating that HDR content or HDR information is supposed to be changed and set number information and version number information that are targeted by transition thereof.

The HDR information descriptor may discriminate a plurality of areas included in a frame and may include feature set information corresponding to each area. The feature set information may apply different metadata processing methods to the respective areas in the same frame. Each feature set may be discriminated by an area position or discriminated by color in a predetermined range in a color space. A feature set may be discriminated by a luminance range or luminance distribution. In addition, the feature set may also be discriminated by at least one of the aforementioned location, color, luminance range, or luminance distribution in a color volume discriminated by a polyhedron defined in a color space. The HDR information descriptor may include information for discriminating the aforementioned feature set and, for example, may include at least one of spatial boundary information, colorimetry boundary information, luminance boundary information, luminance distribution boundary information, or color volume boundary information. A detailed description of the information is the same as the above description of FIGs. 35 to 38.

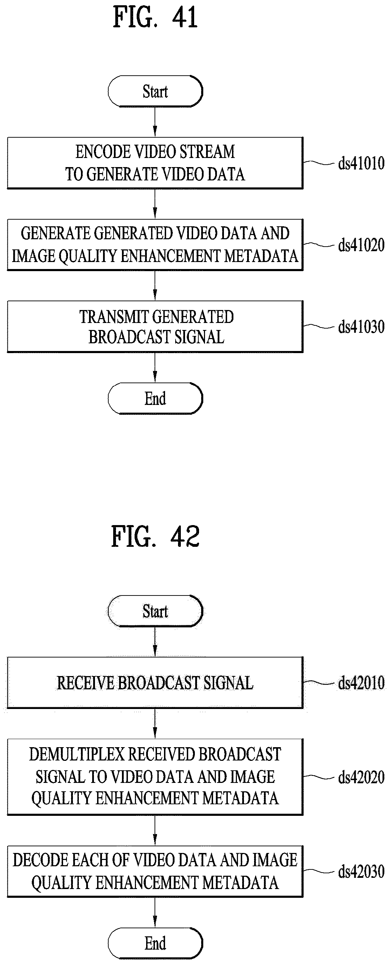

FIG. 41 is a diagram showing a method of transmitting a broadcast signal including image quality enhancement metadata according to an embodiment of the present invention. The method of transmitting a broadcast signal including image quality enhancement metadata may include encoding a video stream to generate video data (ds41010), generating a broadcast signal including the generated video data and image quality enhancement metadata (ds41020), and transmitting the generated broadcast signal (ds41030).

The encoding of the video stream to generate video data (ds41010) may include receiving a video stream with resolution of UHD and encoding the video stream to generate video data. Here, the video stream may be encoded via high efficiency video coding (HEVC). Along therewith, the encoding of the video stream to generate video data (ds41010) may include generating image quality enhancement metadata. As described above, a broadcast transmission device may generate the video data in units of entire content (channel, program, and content), scene, clip, or frame in the encoding of the video stream to generate video data (ds41010). The image quality enhancement metadata may be data of at least one of HDR or WCG and may have different amounts of information according to an application unit. The image quality enhancement metadata may be transmitted in the aforementioned HDR_info_descriptor(). The HDR_info_descriptor() may include transition_flag information indicating an end time of HDR. As described above, the HDR information descriptor may include processing color space type information and processing color accuracy information of a processing operation for image quality enhancement. In addition thereto, the HDR information descriptor may further include input color space type information and input color accuracy information prior to the processing operation, and output color space type information and input color accuracy information after the processing operation. The HDR information descriptor may also include information on a dynamic range, a transformation function type, color gamut, and a color temperature type that are targeted by image quality enhancement processing. In addition, the HDR information may include HDR program transition flag information indicating that HDR content or HDR information is supposed to be changed and set number information and version number information that are targeted by transition thereof.

The HDR information descriptor may discriminate a plurality of areas included in a frame and may include feature set information corresponding to each area. The feature set information may apply different metadata processing methods to the respective areas in the same frame. Each feature set may be discriminated by an area position or discriminated by color in a predetermined range in a color space. A feature set may be discriminated by a luminance range or luminance distribution. In addition, the feature set may also be discriminated by at least one of the aforementioned location, color, luminance range, or luminance distribution in a color volume discriminated by a polyhedron defined in a color space. The HDR information descriptor may include information for discriminating the aforementioned feature set and, for example, may include at least one of spatial boundary information, colorimetry boundary information, luminance boundary information, luminance distribution boundary information, or color volume boundary information. A detailed description of the information is the same as the above description of FIGs. 35 to 38.

The image quality enhancement metadata may be directly defined in signaling information or may be generated with reference to another message. The image quality enhancement metadata may be reference data for allowing a receiver to enhance image quality of video data according to an application unit. As a result, the receiver may dynamically enhance image quality of video data using the image quality enhancement metadata that is received with the video data.

The generating of the broadcast signal including the generated video data and image quality enhancement metadata (ds41020) may include building a broadcast signal frame and generating the broadcast signal using a modulation procedure.

The transmitting of the generated broadcast signal (ds41030) may include transmitting a transport stream as a broadcast signal.

FIG. 42 is a diagram showing a method of receiving a broadcast signal including image quality enhancement metadata according to an embodiment of the present invention. The method of receiving a broadcast signal including image quality enhancement metadata may include receiving a broadcast signal (ds42010), demultiplexing the received broadcast signal to video data and image quality enhancement metadata (ds42020), and decoding and applying the video data and the image quality enhancement metadata (ds42030).

The receiving of the broadcast signal (ds42010) may include receiving the broadcast signal using a receiver and, here, the received broadcast signal may be demodulated and, then, channel-decoded. The broadcast signal may include a UHD broadcast signal and may further include image quality enhancement metadata of UHD broadcast content. A detailed description of the image quality enhancement metadata is the same as the above description of FIGs. 17 to 38.

The demultiplexing of the received broadcast signal to video data and image quality enhancement metadata (ds42020) may include demultiplexing the channel-decoded broadcast signal to the video data and the image quality enhancement metadata using the demultiplexer. The video data may include UHD video data and the image quality enhancement metadata may include HDR and WCG related data applied to UHD video data. The image quality enhancement metadata may be received in the aforementioned HDR_info_descriptor(). The HDR_info_descriptor() may include transition_flag information indicating an end time of HDR. Here, the image quality enhancement metadata may be classified into commonly applied information or partially applied information according to an application range thereof. The image quality enhancement metadata may at least one of commonly applied information or partially applied information. The commonly applied information may be information applied to an entire channel, an entire program, or entire video data for forming one piece of content and the partially applied information may be data to be partially applied to a partial scene, clip, or frame of the video data. The image quality enhancement metadata may be directly defined in signaling information of a broadcast signal or may be generated with reference to a predefined message.

The decoding and applying of the video data and the image quality enhancement metadata (ds42030) may include decoding video data using a video decoder to acquire data. In this operation, with regard to the image quality enhancement metadata, the image quality enhancement metadata may be acquired by a signaling data parser or a metadata decoder. A receiver may enhance image quality of the decoded video data based on the image quality enhancement metadata. The image quality enhancement metadata may include HDR or WCG information of video data and may further include synchronization information indicating a time at which each piece of information is applied. The image quality enhancement metadata may include HDR information descriptor as described above and the HDR information descriptor may include processing color space type information and processing color accuracy information of a processing operation for enhancing image quality, as described above. In addition thereto, the HDR information descriptor may further include input color space type information and input color accuracy information prior to the processing operation, and output color space type information and input color accuracy information after the processing operation. The HDR information descriptor may also include information on a dynamic range, a transformation function type, color gamut, and a color temperature type that are targeted by image quality enhancement processing. In addition, the HDR information may include HDR program transition flag information indicating that HDR content or HDR information is supposed to be changed and set number information and version number information that are targeted by transition thereof.

The HDR information descriptor may discriminate a plurality of areas included in a frame and may include feature set information corresponding to each area. The feature set information may apply different metadata processing methods to the respective areas in the same frame. Each feature set may be discriminated by an area position or discriminated by color in a predetermined range in a color space. A feature set may be discriminated by a luminance range or luminance distribution. In addition, the feature set may also be discriminated by at least one of the aforementioned location, color, luminance range, or luminance distribution in a color volume discriminated by a polyhedron defined in a color space. The HDR information descriptor may include information for discriminating the aforementioned feature set and, for example, may include at least one of spatial boundary information, colorimetry boundary information, luminance boundary information, luminance distribution boundary information, or color volume boundary information. A detailed description of the information is the same as the above description of FIGs. 35 to 38.

The image quality enhancement metadata may be applied to video data based on synchronization information. Thereby, image quality enhancement may be applied to the video data entirely or for each section. A user may receive UHD content with enhanced image quality through HDR and WCG information that are additionally applied to existing UHD content.

Modules or units may be processors executing consecutive processes stored in a memory (or a storage unit). The steps described in the aforementioned embodiments can be performed by hardware/processors. Modules/blocks/units described in the above embodiments can operate as hardware/processors. The methods proposed by the present invention can be executed as code. Such code can be written on a processor-readable storage medium and thus can be read by a processor provided by an apparatus.

While the embodiments have been described with reference to respective drawings for convenience, embodiments may be combined to implement a new embodiment. In addition, designing computer-readable recording media storing programs for implementing the aforementioned embodiments is within the scope of the present invention.

The apparatus and method according to the present invention are not limited to the configurations and methods of the above-described embodiments and all or some of the embodiments may be selectively combined to obtain various modifications.

The methods proposed by the present invention may be implemented as processor-readable code stored in a processor-readable recording medium included in a network device. The processor-readable recording medium includes all kinds of recording media storing data readable by a processor. Examples of the processor-readable recording medium include a ROM, a RAM, a CD-ROM, a magnetic tape, a floppy disk, an optical data storage device and the like, and implementation as carrier waves such as transmission over the Internet. In addition, the processor-readable recording medium may be distributed to computer systems connected through a network, stored and executed as code readable in a distributed manner.

Although the preferred embodiments of the present invention have been disclosed for illustrative purposes, those skilled in the art will appreciate that various modifications, additions and substitutions are possible, without departing from the scope and spirit of the invention as disclosed in the accompanying claims. Such modifications should not be individually understood from the technical spirit or prospect of the present invention.

Both apparatus and method inventions are mentioned in this specification and descriptions of both the apparatus and method inventions may be complementarily applied to each other.

Those skilled in the art will appreciate that the present invention may be carried out in other specific ways than those set forth herein without departing from the spirit and essential characteristics of the present invention.

In the specification, both an apparatus invention and a method invention are mentioned and description of both the apparatus invention and the method invention can be applied complementarily.

### [Mode for Invention]

Various embodiments have been described in the best mode for carrying out the invention.

### [Industrial Applicability]

The present invention can be used for broadcast and video signal processing and is reproducible and industrially applicable.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A method of transmitting a broad signal, the method comprising:
generating video data;
generating a broadcast signal comprising the generated video data and image quality enhancement metadata; and
transmitting the generated broadcast signal.

2. The method according to claim 1, wherein the image quality enhancement metadata comprises feature set information corresponding to a plurality of areas included in a frame of the video data.

3. The method according to claim 2, wherein the feature set information comprises information indicating the number of the plurality of areas.

4. The method according to claim 2, wherein the feature set information comprises positional information for discriminating the plurality of areas.

5. The method according to claim 2, wherein the feature set information comprises luminance distribution information or luminance range information for discriminating the plurality of areas.

6. The method according to claim 2, wherein the feature set information comprises color boundary information for discriminating the plurality of areas.

7. A method of receiving a broadcast signal, the method comprising:
receiving a broadcast signal comprising video data and image quality enhancement metadata;
demultiplexing the broadcast signal to the video data and the image quality enhancement metadata;
decoding each of the video data and the image quality enhancement metadata; and
applying the image quality enhancement metadata to the video data.

8. The method according to claim 7, wherein the image quality enhancement metadata comprises feature set information corresponding to a plurality of areas included in a frame of the video data.

9. The method according to claim 8, wherein the feature set information comprises information indicating the number of the plurality of areas.

10. The method according to claim 8, wherein the feature set information comprises positional information for discriminating the plurality of areas.

11. The method according to claim 8, wherein the feature set information comprises luminance distribution information or luminance range information for discriminating the plurality of areas.

12. The method according to claim 8, wherein the feature set information comprises color boundary information for discriminating the plurality of areas.

13. A method of transmitting a broadcast signal, the method comprising:
generating video data;
generating a broadcast signal comprising the generated video data and image quality enhancement metadata; and
transmitting the generated broadcast signal,
wherein the image quality enhancement metadata comprises information on a color boundary; and
wherein the information on the color boundary indicates at least one color boundary defined for at least one luminance section.

14. A method of receiving a broadcast signal, the method comprising:
receiving a broadcast signal comprising video data and image quality enhancement metadata;
demultiplexing the broadcast signal to the video data and the image quality enhancement metadata;
decoding each of the video data and the image quality enhancement metadata and
applying the image quality enhancement metadata to the video data,
wherein the image quality enhancement metadata comprises information on a color boundary; and
wherein the information on the color boundary indicates at least one color boundary defined for at least one luminance section.
